# EUROPEAN PATENT SPECIFICATION

(11) **EP 2 696 158 B1**
(45) Date of publication and mention of the grant of the patent: **29.09.2021**
(21) Application number: 12767463.8
(22) Date of filing: 03.04.2012
(51) Int. Cl.: F28F 9/02, B60H 1/32, F28F 1/30, F28F 9/26, B60K 1/00, F25B 39/02, F28D 1/04, F28D 1/053, F28D 21/00

(54) **A vehicle air conditioner**
Eine Fahrzeugklimaanlage
Un climatiseur de véhicule

(30) Priority: 04.04.2011 JP 2011082759; 25.01.2012 JP 2012013061; 20.03.2012 JP 2012062935
(43) Date of publication of application: 12.02.2014
(73) Proprietor: Denso Corporation, Kariya-city, Aichi-Pref. 448-8661 (JP)
(72) Inventor: KATOH, Yoshiki, Kariya-city, Aichi 448-8661 (JP); INAGAKI, Mitsuharu, Kariya-city, Aichi 448-8661 (JP); SAITOU, Mitsuyoshi, Kariya-city, Aichi 448-8661 (JP); SUGIMURA, Ryohei, Kariya-city, Aichi 448-8661 (JP)
(74) Representative: Klingseisen, Franz
(86) International application number: PCT/JP2012/002323
(87) International publication number: WO 2012/137487

(56) References cited:
- EP-A1- 1 444 473
- DE-A1- 4 327 213
- DE-U1- 9 111 412
- JP-A- 2005 509 833
- JP-A- 2008 057 950
- JP-A- 2008 151 396
- JP-A- 2008 151 396
- US-A1- 2009 301 411
- None

## Description

The present disclosure relates to a vehicle air conditioner comprising a combined heat exchanger configured such that three kinds of fluids are capable of exchanging heat thereamong.

DE 43 27 213 A1 discloses a heat exchanger for a vehicle, comprising first tubes through which as a first fluid water flows, second tubes through which as a second fluid charged air flows, and a heat exchange portion in which tubes including at least the first tubes and the second tubes are stacked, wherein at least one of the first fluid water and the second fluid air exchanges heat with external air as a third fluid in the heat exchange portion,
spaces between the tubes which are selected from among the first tubes and the second tubes and are adjacent to each other, form third fluid passages through which the external air flows, and
the heat exchange portion includes an upstream heat exchange portion positioned on an upstream side in a flow direction of the external air and a downstream heat exchange portion positioned downstream of the upstream heat exchange portion in the flow direction of the external air.

JP 2008 151396 A discloses a heat exchanger comprising a plurality of heat exchange tubes and intermediate plates in which are formed a plurality of communication holes selectively communicating each of the plurality of heat exchange tubes with either of plurality of coolant passages. The intermediate plates are formed so as to communicate each of the plurality of heat exchange tubes with either of the plurality of coolant passages such that a total passage cross-sectional area ratio of the heat exchange tubes respectively carrying the plural types of coolants corresponds to the coolant flow rate of the plural types of coolants in the plurality of communication holes.

US 2009/301411 A1 discloses a composite heat exchanger system including an air cooled condenser, a sub-radiator and a main radiator wherein a tank of the sub-radiator is communicated with a tank of the main radiator. A water cooled condenser is contained in a tank of the sub-radiator. A part from flowing medium that is cooled down by the main radiator is introduced in the sub-radiator to cool flowing medium of the water cooled condenser. The flowing medium that is cooled down by the water cooled condenser is introduced in the air cooled condenser to be cooled.

DE 91 11 412 U1 describes a heat exchanger comprising a plurality of parallel extending tubes connected with tanks at the end of the tubes wherein one fluid flows through a group of tubes and another fluid flows to another group of tubes and a third fluid flows between the tubes.

EP 1 444 473 A1 discloses a heat exchanger module comprising a main exchanger and a secondary heat exchanger including each an input header, an output header, a bundle of tubes and exchange surfaces associated with the tubes of the bundle. The two exchangers are run through by a common air stream. Preferably, the output header of the main exchanger communicates with the input header of the secondary exchanger through a passage way orifice. A separating partition divides the output header of the main exchanger into a main output chamber and a secondary output chamber.

Conventionally, a combined heat exchanger is known, which is configured such that three kinds of fluids are capable of exchanging heat thereamong. For example, a heat exchanger disclosed in Patent Document 1 is a combined heat exchanger that is configured such that refrigerant of a refrigeration cycle and external air (outside air) are capable of exchanging heat therebetween and coolant which cools an engine and the outside air are capable of exchanging heat therebetween.

Specifically, the heat exchanger of Patent Document 1 includes multiple tubes that have multiple fluid passages therein, and a pair of header tanks arranged on both end portions of the multiple tubes to communicate with the multiple tubes. The header tank has a partition plate which separates an inner space of the header tank into two spaces. Refrigerant flows in one of the two spaces, and coolant flows in the other one of the two spaces. The multiple fluid passages in the tubes are separated into refrigerant passages, through which the refrigerant flows, and coolant passages, through which the coolant flows, due to the partition plate in the header tank

### PRIOR ART DOCUMENT

### PATENT DOCUMENT

Patent Document 1 : Japanese Patent No 4239121

### SUMMARY OF THE INVENTION

In the heat exchanger described in above-described Patent Document 1, multiple fluid passages are formed in a single tube Coolant flows through one (coolant passage) of the multiple fluid passages, which is arranged on an upstream side in an air flow direction Refrigerant flows through one (refrigerant passage) of the multiple fluid passages, which is arranged on a downstream side in the air flow direction Although heat of the coolant flowing through the coolant passage can be transferred to the refrigerant passage adjacent to the coolant passage, the heat of the coolant cannot be transferred to whole area of refrigerant passages

Such insufficient heat transfer may cause the heat of the coolant to be unable to be utilized effectively for melting frost generated due to heat-absorption effect of the refrigerant when the refrigerant passages of the tubes are used as an evaporator of a refrigeration cycle, for example

Hence, the present applicants have suggested a heat exchanger in JP Patent Application No 2010-145011 (hereinafter, referred to as a comparative example) In the heat exchanger, refrigerant tubes, through which refrigerant flows, and coolant tubes, through which coolant for an exterior heat source flows, are stacked and arranged alternately The heat exchanger has outside air passages through which outside air flows, each of which is provided between a refrigerant tube and a coolant tube that are adjacent to each other Outer fins are arranged in the outside air passages to be capable of transferring heat between the refrigerant tube and the coolant tube. Accordingly, not only heat exchange between the refrigerant and blown air and heat exchange between the coolant and the blown air but also heat exchange between the refrigerant and the coolant can be performed.

Thus, for example, in defrosting time when frost attached to the refrigerant tubes is removed, heat of the coolant can be transferred to whole area of the refrigerant tubes. Therefore, the heat of the coolant can be utilized effectively.

In the comparative example, it is disclosed as an example that the refrigerant tubes and the coolant tubes are stacked and arranged alternately. However, the heat of the coolant may exceed a necessary heat amount for the defrosting simply by arranging the refrigerant tubes and the coolant tubes alternately.

Moreover, increase of the number of the coolant tubes causes reduction of the number of the refrigerant tubes in the whole of the heat exchanger. Thus, in the whole of the heat exchanger, the increase of the number of the coolant tubes causes reduction of area where heat exchange is performed between the refrigerant and the blown air, and the increase of the number of the coolant tubes becomes a factor for failing in securement of a heat exchange amount between the refrigerant and the blown air. As a result, enlargement of the heat exchanger in size for securing a necessary heat-absorption capacity may be required.

In consideration of the above-described points, it is an objective of the present disclosure to provide a heat exchanger capable of appropriately adjusting a heat amount exchanged among three kinds of fluids.

This object is achieved by a vehicle air conditioner according to claim 1.

Advantageous embodiments of the invention are defined in claims 2-21.

In accordance with aspects of the invention as defined in the claims the followings effects can be achieved:

Heat exchange amounts among the three kinds of fluids can be adjusted in the heat exchanger as a whole by changing the stacking arrangement order of the first tubes and the second tubes in the upstream heat exchange portion from the stacking arrangement order of the first tubes and the second tubes in the downstream heat exchange portion Therefore, the heat exchanger capable of adjusting appropriately the heat exchange amounts among the three kinds of fluids can be provided.

Heat exchange amounts among the three kinds of fluids can be adjusted in the heat exchanger as a whole by making the first tubes and the second tubes of the upstream heat exchange portion and the first tubes and the second tubes of the downstream heat exchange portion have the portion in which same types of two tubes are overlapped with each other in the flow direction of the third fluid, and the portion in which different types of two tubes are overlapped with each other in the flow direction of the third fluid Therefore, the heat exchanger capable of adjusting appropriately the heat exchange amounts among the three kinds of fluids can be provided

Heat exchange amounts among the three kinds of fluids can be adjusted in the heat exchanger as a whole by changing the ratio of the number of the first tubes to the total number of the first tubes and the second tubes in the upstream heat exchange portion and by changing the ratio of the number of the first tubes to the total number of the first tubes and the second tubes in the downstream heat exchange portion Therefore, the heat exchanger capable of adjusting appropriately the heat exchange amounts among the three kinds of fluids can be provided

Most of the second tubes can be located on an upstream side in the flow direction of the third fluid by setting the ratio of the number of the second tubes in the upstream heat exchange portion higher than the ratio of the number of the second tubes in the downstream heat exchange portion Since the second fluid is capable of exchanging heat with the third fluid before the third fluid exchanges heat with another fluid, the heat exchange between the second fluid and the third fluid can be performed effectively

Heat exchange can be performed appropriately between the first fluid and the third fluid via the first tubes and the outer fin Heat exchange can be performed appropriately between the second fluid and the third fluid via the second tubes and the outer fin Additionally, heat exchange can be performed appropriately between the first fluid and the second fluid via the outer fin Therefore, heat exchanges can be performed appropriately among the three kinds of fluids

A configuration, in which the ratio of the number of the first tubes to the total number of the first tubes and the second tubes in the upstream heat exchange portion is different from the ratio of the number of the first tubes to the total number of the first tubes and the second tubes in the downstream heat exchange portion, can be provided easily and certainly in the heat exchanger having the upstream heat exchange portion, which includes both the first tubes and the second tubes, and the downstream heat exchange portion, which includes the first tubes

An amount of the first fluid supplied to the first tubes of the upstream heat exchange portion can be increased in the heat exchanger having the upstream heat exchange portion, which includes the first tubes and the second tubes, and the downstream heat exchange portion, which includes the first tubes

A configuration, in which the ratio of the number of the first tubes to the total number of the first tubes and the second tubes in the upstream heat exchange portion is different from the ratio of the number of the first tubes to the total number of the first tubes and the second tubes in the downstream heat exchange portion, can be provided easily and certainly in the heat exchanger having the upstream heat exchange portion, which includes both the first tubes and the second tubes, and the downstream heat exchange portion, which includes the first tubes

"The direction to connect the end portions of the first tubes overlapped with each other" in the present disclosure means a direction including a component of the flow direction of the third fluid

A flow rate of the first fluid in the first tube (hereinafter, referred to as a downstream first tube) of the downstream heat exchange portion, which is overlapped with the first tube of the upstream heat exchange portion in the flow direction of the third fluid, and a flow rate of another first tube (hereinafter, referred to as a downstream adjacent first tube), which is adjacent to the downstream first tube in the stacking direction of the first tubes, can be well-balanced

In other words, since the communication passage communicates with the downstream adjacent first tube, the first fluid can be made to flow into the downstream adjacent first tube through the communication passage. Accordingly, pressure loss of the first fluid can be reduced as compared to a case where the first fluid is made to flow into the adjacent first tube through an inner space of the tank portion Thus, as a result, a flow rate of the first fluid in the downstream first tube and a flow rate of the first fluid in the downstream adjacent first tube can be made to approach each other.

Heat amounts exchanged among the three kinds of fluids can be adjusted easily in the heat exchanger as a whole by providing the pair of the first tube and the second tube in which the flow direction of the first fluid is the same as the flow direction of the second fluid and the pair of the first tube and the second tube in which the flow direction of the first fluid is opposite from the flow direction of the second fluid

Since all of the first fluid inflowing from the exterior passes through the upstream heat exchange portion without branching to the downstream heat exchange portion, the first fluid can be certainly made to flow into the upstream heat exchange Therefore, in the upstream heat exchange portion, heat exchange between the first fluid and the third fluid can be performed certainly

All of the first fluid branched to the upstream heat exchange portion passes through the upstream heat exchange portion without further branching to the downstream heat exchange portion, and all of the first fluid branched to the downstream heat exchange portion passes through the downstream heat exchange portion without further branching to the upstream heat exchange portion Hence, two flows of the first fluid, which are branched to the upstream heat exchange portion and the downstream heat exchange portion at a most upstream portion in a refrigerant flow direction, can be prevented from gathering together in the heat exchange portions Therefore, decrease of a performance of the heat exchanger, which is caused by the fact that the two flows of the first fluid branched to the upstream heat exchange portion and the downstream heat exchange portion at the most upstream portion in the refrigerant flow direction gather together in the heat exchange portions, can be prevented.

Heat amounts exchanged among the three kinds of fluids can be adjusted easily in the heat exchanger as a whole by changing the shape of the louver formed in a position between two adjacent tubes of the upstream heat exchange portion from the shape of the louver formed in a position between two adjacent tubes of the downstream heat exchange portion

A flow of the first fluid is branched or two flows of the first fluid are gathered together inside the connector portion Thus, as compared to a case in which a communication passage is provided inside the upstream tank portion and the downstream tank portion such that the first fluid flows between the upstream heat exchange portion and the downstream heat exchange portion, the communication passage can be omitted Therefore, inner structures of the upstream tank portion and the downstream tank portion can be simplified

The above-described heat exchanger may be used as an evaporator of a vapor-compression refrigeration cycle to evaporate refrigerant, or may be used as a radiator of a vapor-compression refrigeration cycle to radiate heat of refrigerant discharged from a compressor In these cases, the first fluid is refrigerant of the refrigeration cycle, the second fluid is a heat medium that has absorbed heat of an external heat source, and the third fluid is air

### BRIEF DESCRIPTION OF THE DRAWINGS

FIG 1 is a general configuration diagram showing, for example, refrigerant passages in an air heating operation of a heat pump cycle according to a first embodiment
FIG. 2 is a general configuration diagram showing, for example, refrigerant passages in a defrosting operation of the heat pump cycle according to the first embodiment
FIG 3 is a general configuration diagram showing, for example, refrigerant passages in an air cooling operation of the heat pump cycle according to the first embodiment
FIG 4 is an external perspective view showing a heat exchanger according to the first embodiment
FIG 5 is an exploded perspective view showing the heat exchanger according to the first embodiment
FIG 6 is a schematic perspective diagram illustrating flows of refrigerant and coolant in the heat exchanger according to the first embodiment
FIGS 7 (a) - (d) are schematic sectional diagrams illustrating, for example, flows of refrigerant in the heat exchanger according to the first embodiment
FIGS 8 (a) - (d) are schematic sectional diagrams illustrating, for example, flows of coolant in the heat exchanger according to the first embodiment FIG. 9 is a sectional diagram taken along a line E - E of FIG 7 (b)
FIG 10 is a sectional diagram taken along a line F - F of FIG. 7 (c)
FIG 11 is a perspective sectional diagram showing a heat exchanger according to a second embodiment
FIG 12 is a perspective sectional diagram showing a heat exchanger according to a third embodiment
FIG. 13 is a general configuration diagram showing, for example, refrigerant passages in an air heating operation of a heat pump cycle according to a fourth embodiment
FIG. 14 is a general configuration diagram showing, for example, refrigerant passages in a warm-up operation of the heat pump cycle according to the fourth embodiment
FIG 15 is a general configuration diagram showing, for example, refrigerant passages in an air cooling operation of the heat pump cycle according to the fourth embodiment.
FIG 16 is a schematic top view showing a first plate-like member of a heat exchanger according to a fifth embodiment
FIG. 17 is a schematic top view showing a second plate like member of a heat exchanger according to the fifth embodiment
FIG 18 is a schematic top view showing a first plate-like member of a heat exchanger according to a sixth embodiment
FIG 19 is a schematic top view showing a second plate-like member of a heat exchanger according to the sixth embodiment.
FIG 20 is a schematic perspective diagram illustrating flows of refrigerant and coolant in a heat exchanger according to a seventh embodiment
FIG 21 is a schematic perspective diagram illustrating flows of refrigerant and coolant in a heat exchanger according to an eighth embodiment
FIG 22 is a schematic sectional diagram showing a heat exchange portion of a heat exchanger in a longitudinal direction of the heat exchange portion, according to a ninth embodiment
FIG 23 is a sectional diagram showing a part in which a refrigerant tube of an upstream heat exchange portion and a refrigerant tube of a downstream heat exchange portion are overlapped in a flow direction of outside air, according to a tenth embodiment
FIG 24 is a sectional diagram showing a part in which a coolant tube of the upstream heat exchange portion and a refrigerant tube of the downstream heat exchange portion are overlapped in the flow direction of outside air, according to the tenth embodiment
FIG 25 is a perspective view showing a first communication-space forming plate according to the tenth embodiment
FIG 26 is an external perspective view showing a heat exchanger according to an eleventh embodiment
FIG. 27 is a schematic perspective diagram illustrating flows of refrigerant and coolant in the heat exchanger according to the eleventh embodiment
FIG 28 is an external perspective view showing a connector attached to the heat exchanger according to the eleventh embodiment
FIG. 29 is a perspective sectional diagram showing the heat exchanger according to the eleventh embodiment
FIG. 30 is an external perspective diagram showing a connector attached to a heat exchanger according to a twelfth embodiment
FIG. 31 is a top view showing the connector of FIG 30
FIG. 32 is a front view showing a connector attached to a heat exchanger according to a thirteenth embodiment
FIG. 33 is a schematic perspective diagram illustrating flows of refrigerant and coolant in a heat exchanger according to another embodiment
FIG 34 is a schematic perspective diagram illustrating flows of refrigerant and coolant in a heat exchanger according to another embodiment
FIG 35 is a schematic perspective diagram illustrating flows of refrigerant and coolant in a heat exchanger according to another embodiment
FIG 36 is a schematic perspective diagram illustrating flows of refrigerant and coolant in a heat exchanger according to another embodiment

### EMBODIMENTS FOR EXPLOITATION OF THE INVENTION

Hereinafter, embodiments of the present disclosure will be described referring to drawings In the respective following embodiments, parts that are equivalent or similar to each other are assigned the same numeral in the drawings

### (First Embodiment)

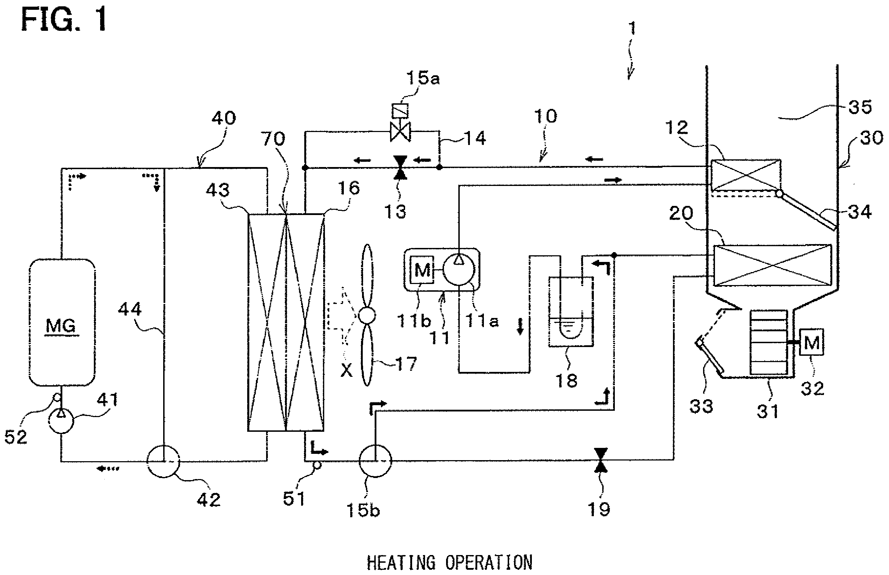

A first embodiment of the present disclosure will be described with reference to FIGS 1 to 10 In the present embodiment, a heat exchanger 70 of the present disclosure is used for a heat pump cycle 10 of a vehicle air conditioner 1 that conditions a temperature of air blown in to a vehicle compartment FIGS 1 to 3 are general configuration diagrams showing the vehicle air conditioner 1 of the present first embodiment.

The vehicle air conditioner 1 is used for a hybrid vehicle that obtains a driving force for vehicle-running from an internal combustion engine (engine) and from a running electric motor MG.

The hybrid vehicle operates or stops the engine depending on a running load of the vehicle The hybrid vehicle is capable of switching its running state, for example, between a running state, in which the driving force is obtained from both the engine and the running electric motor MG, and a running state, in which the engine is stopped and the driving force is obtained only from the running electric motor MG Accordingly, fuel efficiency can be increased in the hybrid vehicle as compared to a general vehicle that obtains a driving force for vehicle running only from an engine

The heat pump cycle 10 of the vehicle air conditioner 1 is a vapor-compression refrigeration cycle which functions to heat or cool air blown into the vehicle compartment that is an air-conditioning target space Hence, the heat pump cycle 10 is capable of performing an air heating operation (heating operation), in which the vehicle compartment is heated by heating of air that is to be blown into the vehicle compartment, and an air cooling operation (cooling operation), in which the vehicle compartment is cooled by cooling of the air that is to be blown into the vehicle compartment, by switching a refrigerant passage The air that is to be blown into the vehicle compartment is a heat-exchange target fluid.

Additionally, the heat pump cycle 10 is capable of performing a defrosting operation to melt and remove frost attached to a later-described exterior heat exchange portion 16 of the combined heat exchanger 70 The exterior heat exchange portion 16 functions as an evaporator in which refrigerant evaporates in the air heating operation Flows of refrigerant in the heat pump cycle 10 in the respective operations are shown by solid arrows in the general configuration diagrams of FIGS 1 to 3

In the heat pump cycle 10 of the present embodiment, a general fluorocarbon refrigerant is used as refrigerant, and the heat pump cycle 10 is a subcritical refrigeration cycle in which a higher-pressure-side refrigerant pressure does not exceed a critical pressure of the refrigerant Refrigerant oil is contained in the refrigerant to lubricant a compressor 11, and a part of the refrigerant oil circulates in the cycle with the refrigerant

The compressor 11 is arranged in an engine compartment, and draws refrigerant in the heat pump cycle 10 to compress and discharge the refrigerant The compressor 11 is an electric compressor in which a fixed-displacement compressor 11a having a fixed discharge capacity is driven by an electric motor 11b. For example, a variety of compressor mechanisms such as a scroll compressor or a vane compressor can be used as the fixed-displacement compressor 11a.

An operation (rotation rate) of the electric motor 11b is controlled by a control signal outputted from an air conditioning controller described later Either one of an alternating-current motor or a direct-current motor may be applied to the electric motor 11b A refrigerant discharge capacity of the compressor 11 is changed by the control of the rotation rate Thus, in the present embodiment, the electric motor 11b is used as a discharge capacity changing device of the compressor 11.

A refrigerant discharge port of the compressor 11 is connected to a refrigerant inlet side of an interior condenser 12 that is used as a using side heat exchanger The interior condenser 12 is disposed in a casing 31 of an interior air conditioning unit 30 of the vehicle air conditioner 1 The interior condenser 12 is a heating heat exchanger in which high-pressure and high-temperature refrigerant flowing therein exchanges heat with blown air that has passed through an interior evaporator 20 A detailed configuration of the interior air conditioning unit 31 will be described later

A refrigerant outlet side of the interior condenser 12 is connected to a heating fixed throttle 13 that is used as a depressurizing device for the air heating operation The heating fixed throttle 13 depressurizes and expands refrigerant flowing out of the interior condenser 12 in the air heating operation For example, an orifice or a capillary tube can be used as the heating fixed throttle 13 An outlet side of the heating fixed throttle 13 is connected to a refrigerant inlet side of the exterior heat exchange portion 16 of the combined heat exchanger 70

The refrigerant outlet side of the interior condenser 12 is further connected to a fixed-throttle bypass passage 14 through which refrigerant flowing out of the interior condenser 12 bypasses the heating fixed throttle 13 and is guided toward the exterior heat exchange portion 16 An open-close valve 15a is arranged in the fixed-throttle bypass passage 14, and opens or closes the fixed-throttle bypass passage 14 The open-close valve 15a is an electromagnetic valve in which its open-close operation is controlled by a control voltage outputted from the air conditioning controller

A pressure loss generated when refrigerant passes through the open-close valve 15a is extremely small as compared to a pressure loss generated when refrigerant passes through the fixed throttle 13 Hence, refrigerant flowing out of the interior condenser 12 flows into the exterior heat exchange portion 16 through the fixed-throttle bypass passage 14 when the open-close valve 15a is open The refrigerant flowing out of the interior condenser 12 flows into the exterior heat exchange portion 16 through the heating fixed throttle 13 when the open-close valve 15a is closed

Accordingly, the open-close valve 15a is capable of switching the refrigerant passage of the heat pump cycle 10 Thus, the open-close valve 15a of the present embodiment functions as a refrigerant passage switching device For example, an electric three-way valve may be used as such refrigerant passage switching device In this case, the electric three-way valve switches between a refrigerant passage connecting from the outlet side of the interior condenser 12 to the inlet side of the heating fixed throttle 13 and a refrigerant passage connecting from the outlet side of the interior condenser 12 to the inlet side of fixed-throttle bypass passage 14

The exterior heat exchange portion 16 is a heat exchange portion in which refrigerant flowing in the heat exchanger 70 exchanges heat with outside air blown by a blast fan 17 The exterior heat exchange portion 16 is disposed in the engine compartment The exterior heat exchange portion 16 functions as an evaporation heat exchange portion (evaporator), in which low pressure refrigerant evaporates and exerts its heat absorption effect, in the air heating operation The exterior heat exchange portion 16 functions as a radiation heat exchange portion (radiator), in which high pressure refrigerant radiates heat, in the air cooling operation

The blast fan 17 is an electric blower in which an operating rate, i e, a rotation rate (air blowing amount) is controlled by a control voltage outputted from the air conditioning controller

In the heat exchanger 70 of the present embodiment, the above-described exterior heat exchange portion 16 and a radiator portion 43 are integrated with each other In the radiator portion 43, coolant for cooling the running electric motor MG exchanges heat with outside air blown by the blast fan 17

Thus, the blast fan 17 of the present embodiment is used as an exterior air blowing device that blows outside air toward both the exterior heat exchange portion 16 and the radiator portion 43 A detailed configuration of the combined heat exchanger 70 in which the exterior heat exchange portion 16 and the radiator portion 43 are integrated with each other will be described later

An outlet side of the exterior heat exchange portion 16 is connected to an electric three-way valve 15b. An operation of the three way valve 15b is controlled by a control voltage outputted from the air conditioning controller The three-way valve 15b is used as the refrigerant passage switching device together with the above-described open-close valve 15a.

More specifically, in the air heating operation, the three-way valve 15b selects a refrigerant passage connecting the outlet side of the exterior heat exchange portion 16 and an inlet side of an accumulator 18 described later. In the air cooling operation, the three-way valve 15b selects a refrigerant passage connecting the outlet side of the exterior heat exchange portion 16 and an inlet side of a cooling fixed throttle 19

The cooling fixed throttle 19 is a depressurizing device for the air cooling operation, and depressurizes and expands refrigerant flowing out of the exterior heat exchange portion 16 in the air cooling operation A basic structure of the cooling fixed throttle 19 is similar to that of the heating fixed throttle 13 An outlet side of the cooling fixed throttle 19 is connected to a refrigerant inlet side of the interior evaporator 20

The interior evaporator 20 is located upstream of the interior condenser 12 in an air flow direction inside the casing 31 of the interior air conditioning unit 30 The interior evaporator 20 is a cooling heat exchanger in which air that is to be blown into the vehicle compartment is cooled by heat exchange between refrigerant flowing in the interior evaporator 20 and air blown into the vehicle compartment A refrigerant outlet side of the interior evaporator 20 is connected to the inlet side of the accumulator 18

The accumulator 18 separates refrigerant flowing therein into gas and liquid The accumulator 18 is a gas-liquid separator for lower-pressure-side refrigerant and accumulates surplus refrigerant of the cycle A gas-refrigerant outlet of the accumulator 18 is connected to a suction side of the compressor 11 Hence, the accumulator 18 restricts drawing of liquid refrigerant into the compressor 11 and functions to prevent liquid-compression of the compressor 11.

In the air cooling operation of the heat pump cycle 10 of the present embodiment, a temperature of coolant flowing out of the radiator portion 43 of the heat exchanger 70 is lower than a temperature of refrigerant flowing out of the exterior heat exchange portion 16 of the heat exchanger 70 The exterior heat exchange portion 16 functions in the air cooling operation as the radiation heat exchange portion in which high pressure refrigerant radiates heat Since a supercooling degree of the refrigerant flowing out of the exterior heat exchange portion 16 can be increased in the air cooing operation, cycle efficiency can be improved

On the other hand, in the air heating operation of the heat pump cycle 10 of the present embodiment, a temperature of coolant flowing out of the radiator portion 43 of the heat exchanger 70 is higher than a temperature of refrigerant flowing out of the exterior heat exchange portion 16 of the heat exchanger 70 The exterior heat exchange portion 16 functions in the air heating operation as the evaporation heat exchange portion in which low pressure refrigerant evaporates and exerts a heat absorption effect Since the refrigerant is heated by absorbing heat from the coolant in the air heating operation, evaporation of the refrigerant is promoted

Next, the interior air conditioning unit 30 will be described The interior air conditioning unit 30 is disposed inside a dashboard (instrumental panel) in a most front part of the vehicle compartment For example, a blower 32, the above-described interior condenser 12 and the interior evaporator 20 are accommodated in the casing 31 that forms an outer shell of the interior air conditioning unit 30

The casing 31 forms an air passage for air that is to be blown into the vehicle compartment The casing 31 is formed of resin (e.g., polypropylene) that has a certain level of elasticity and is superior in strength An inside-outside air switching device 33 is located in a most upstream part of the casing 31 in the flow direction of air blown into the vehicle compartment The inside-outside air switching device 33 selectively introduce air (inside air) inside the vehicle compartment and the outside air

The inside outside air switching device 33 has an inside air port, through which the inside air is introduced into the casing 31, and an outside air port, through which the outside air is introduced into the casing 31 An inside-outside air switching door is disposed inside the inside-outside air switching device 33 The inside-outside air switching door continuously adjusts open areas of the inside air port and the outside air port to change a ratio between a flow rate of the inside air and a flow rate of the outside air

The blower 32 is located downstream of the inside-outside air switching device 33 in the air flow direction, and blows air drawn from the inside-outside air switching device 33 toward the vehicle compartment The blower 32 is an electric fan in which a centrifugal multi-blade fan (sirocco fan) is driven by an electric motor A rotation rate (air blowing amount) of the blower 32 is controlled by a control voltage outputted from the air conditioning controller

The interior evaporator 20 and the interior condenser 12 are arranged in this order downstream of the blower 32 in the air flow direction In other words, the interior evaporator 20 is located upstream of the interior condenser 12 in the air flow direction

Additionally, an air mix door 34 is arranged downstream of the interior evaporator 20 and upstream of the interior condenser 12 in the air flow direction The air mix door 34 adjusts a ratio of a flow rate of air passing through the interior condenser 12 to a flow rate of air that has passed through the interior evaporator 20 Furthermore, a mixing space 35 is provided downstream of the interior condenser 12 in the air flow direction In the mixing space 35, air that has heated in the interior condenser 12 by heat exchange with refrigerant is mixed with air that has not been heated by bypassing the interior condenser 12

A most downstream part of the casing 31 in the air flow direction has air outlets through which conditioned air mixed in the mixing space 35 is blown to the vehicle compartment that is a cooling target space For example, the air outlets include a face air outlet through which the conditioned air is blown toward an upper part of a passenger in the vehicle compartment, a foot air outlet through which the conditioned air is blown toward a foot area of the passenger, and a defroster air outlet through which the conditioned air is blown toward an inner surface of a windshield of the vehicle (neither one of the air outlets is shown)

The air mix door 34 adjusts the ratio of the flow rate of air passing through the interior condenser 12, thereby adjusting a temperature of the conditioned air mixed in the mixing space 35. Consequently, a temperature of the conditioned air blown out of the respective air outlets is adjusted The air mix door 34 is used as a temperature adjustment device which adjusts a temperature of conditioned air blown into the vehicle compartment

In other words, the air mix door 34 functions as a heat exchange amount adjustment device which adjusts a heat exchange amount between refrigerant discharged by the compressor 11 and air blown into the vehicle compartment in the interior condenser 12 that is used as the using side heat exchanger The air mix door 34 is driven by a non-shown servomotor, and an operation of the servomotor is controlled by a control signal outputted from the air conditioning controller

A face door, a foot door and a defroster door are arranged upstream of the face air outlet, the foot air outlet and the defroster air outlet, respectively, in the air flow direction (the doors are not shown) The face door adjusts an open area of the face air outlet The foot door adjusts an open area of the foot air outlet The defroster door adjusts an open area of the defroster air outlet

These face door, foot door and defroster door are used as an air outlet mode switching device which switches an air outlet mode These doors are driven by a non-shown servomotor via a link mechanism or the like, and an operation of the servomotor is controlled by a control signal outputted from the air conditioning controller.

Next, a coolant circulation circuit 40 will be described. The coolant circulation circuit 40 cools the above described running electric motor MG by circulating coolant (eg., ethylene glycol aqueous solution) as a cooling medium (heat medium) in a coolant passage provided inside the running electric motor MG The running electric motor MG is one of an in-vehicle device which generates heat during operation

For example, a coolant pump 41, an electric three-way valve 42, the radiator portion 43 of the combined heat exchanger 70, and a bypass passage 44 through which coolant bypasses the radiator portion 43 are arranged in the coolant circulation circuit 40

The coolant pump 41 is an electric pump which pumps coolant to the coolant passage provided inside the running electric motor MG in the coolant circulation circuit 40 A rotation rate (discharge rate) of the coolant pump 41 is controlled by a control signal outputted from the air conditioning controller Thus, the coolant pump 41 functions as a cooling capacity adjustment device which adjusts a cooling capacity by changing a flow rate of the coolant cooling the running electric motor MG.

The three-way valve 42 switches between a coolant circuit, in which an inlet side of the coolant pump 41 is connected to an outlet side of the radiator portion 43 such that coolant flows into the radiator portion 43, and a coolant circuit, in which the inlet side of the coolant pump 41 is connected to an outlet side of the bypass passage 44 such that coolant bypasses the radiator portion 43 An operation of the three-way valve 42 is controlled by a control voltage outputted from the air conditioning controller The three-way valve 42 is used as a circuit switching device which switches the coolant circuit The three-way valve 42 functions also as a coolant inflow amount control device which controls an inflow amount of coolant into the radiator portion 43 by switching the coolant circuit

The coolant circulation circuit 40 of the present embodiment, as shown by dashed arrows in FIG. 1 for example, is capable of switching between the coolant circuit in which coolant circulates in this order: the coolant pump 41→ the running electric motor MG → the radiator portion 43 → the coolant pump 41, and the coolant circuit in which coolant circulates in this order: the coolant pump 41→ the running electric motor MG → the bypass passage 44 → the coolant pump 41

When the three-way valve 42 switches the coolant circuit during operation of the running electric motor MG such that the coolant bypasses the radiator portion 43, a temperature of the coolant increases without radiating heat in the radiator portion 43. In other words, when the three-way valve 42 switches the coolant circuit such that the coolant bypasses the radiator portion 43, heat (radiated heat) of the running electric motor MG is accumulated in the coolant

In the coolant circulation circuit 40 of the present embodiment, a temperature of coolant flowing out of the radiator portion 43 of the heat exchanger 70 is lower than or equal to a predetermined standard temperature (65 °C in the present embodiment) Accordingly, an inverter of the running electric motor MG can be protected from high heat

The exterior heat exchange portion 16 is disposed in the engine compartment and functions as a radiation heat exchange portion in which coolant exchanges heat with outside air blown by the blast fan 17 As described above, the radiator portion 43 constitutes the combined heat exchanger 70 together with the exterior heat exchange portion 16

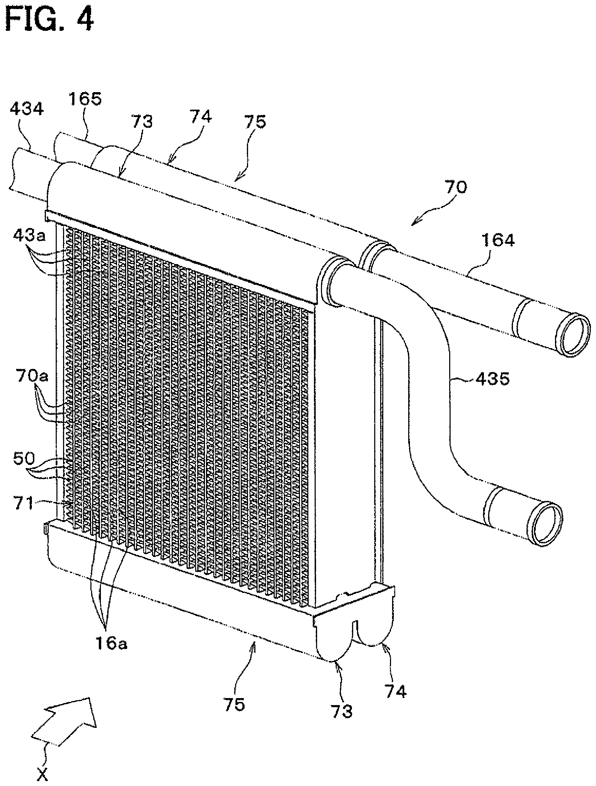

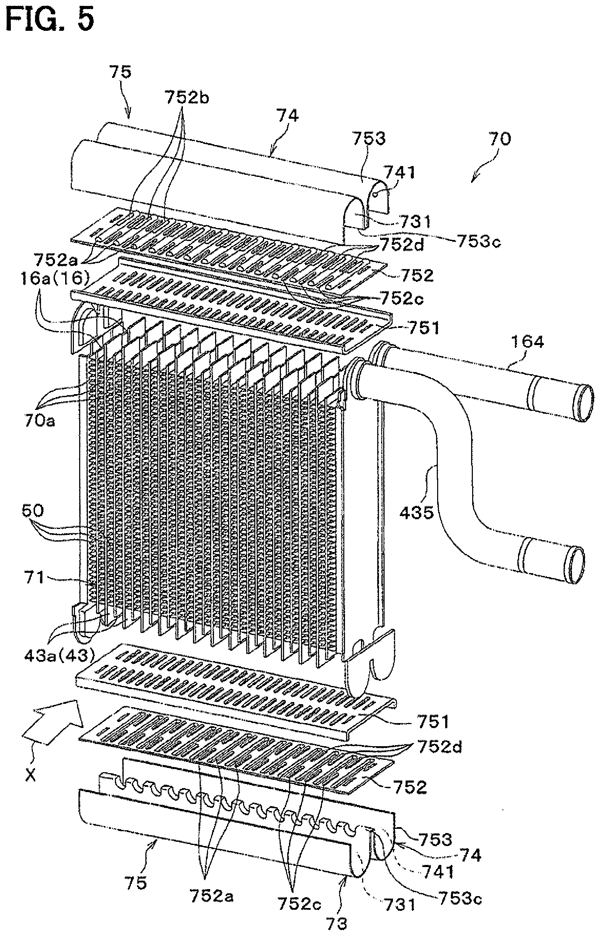

A detailed configuration of the combined heat exchanger 70 of the present embodiment will be described referring to FIGS 4 to 10 FIG 4 is an external perspective view of the heat exchanger 70 of the first embodiment, and FIG 5 is an exploded perspective view of the heat exchanger 70.

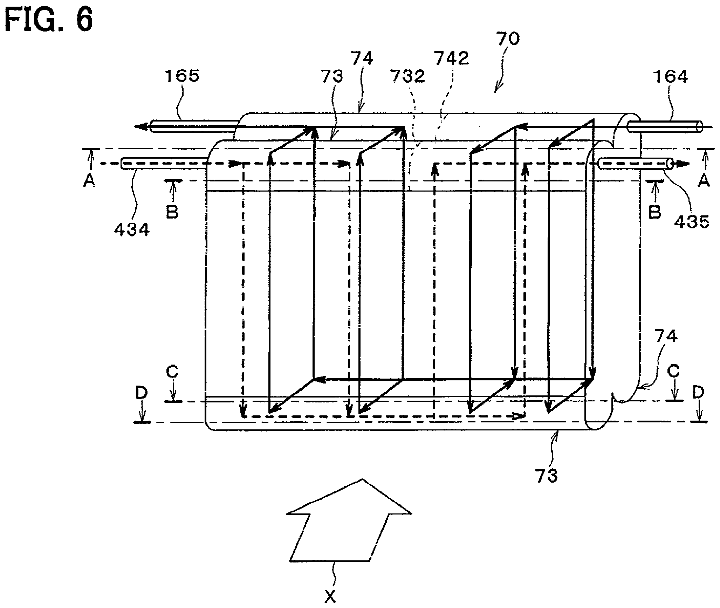

FIG. 6 is a schematic perspective diagram for explanation of a refrigerant flow and a coolant flow in the heat exchanger 70 In FIG. 6, the refrigerant flow in the heat pump cycle 10 is shown by solid arrows, and the coolant flow in the coolant circulation circuit 40 is shown by dashed arrows.

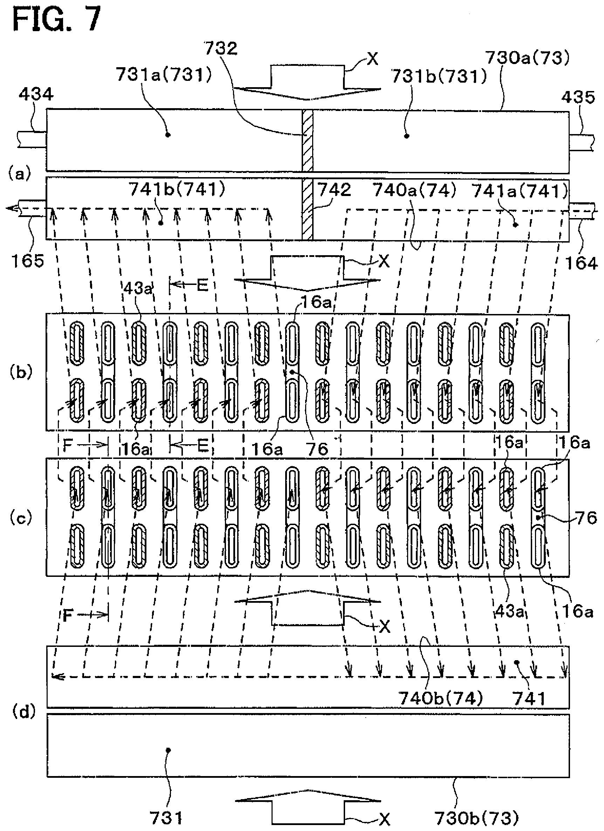

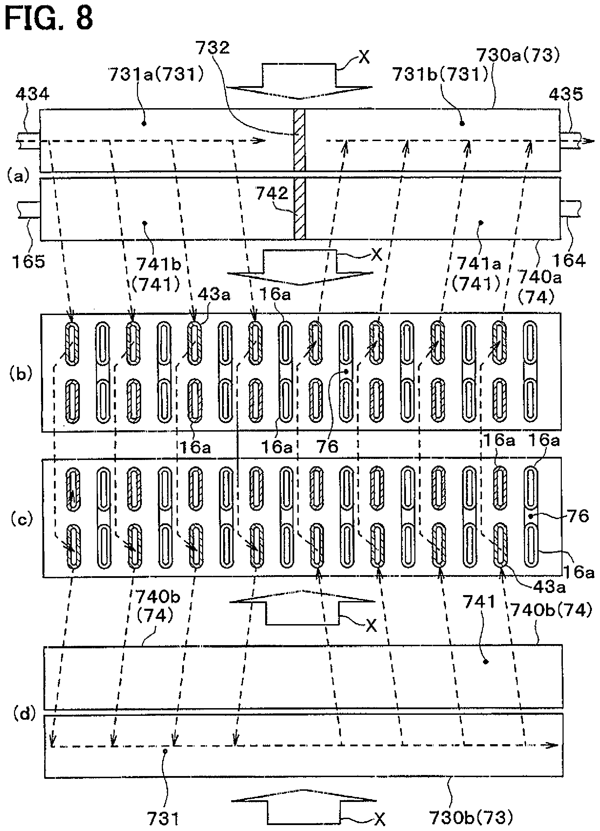

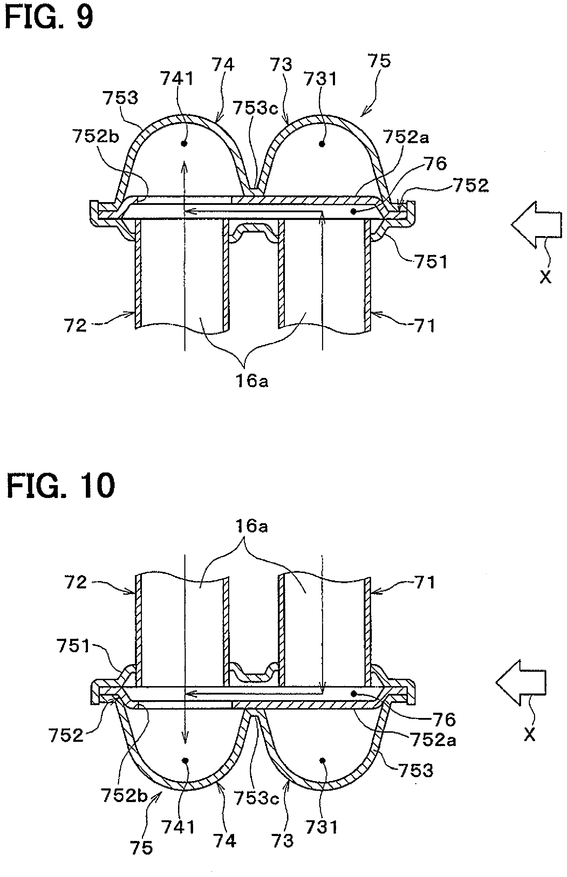

FIG 7 (a) and FIG. 8 (a) are sectional diagrams taken along A-A of FIG 6 FIG 7 (b) and FIG 8 (b) are sectional diagrams taken along B-B of FIG. 6 FIG 7 (c) and FIG 8 (c) are sectional diagrams taken along C-C of FIG 6 FIG 7 (d) and FIG 8 (d) are sectional diagrams taken along D-D of FIG 6 Dashed arrows in FIGS 7 (a) - (d) show refrigerant flows, and dashed arrows in FIGS 8 (a) - (d) show coolant flows FIG 9 is a sectional diagram taken along E-E of FIG 7 (b), and FIG 10 is a sectional diagram taken along F-F of FIG 7 (c)

As shown in FIGS, 5 and 6, the combined heat exchanger 70 includes multiple tubes through which refrigerant or coolant flows, and a pair of collection-distribution tanks arranged on both end sides of the multiple tubes The pair of collection-distribution tanks collects or distributes refrigerant or coolant that flows through the respective tubes The combined heat exchanger 70 has a tank-and-tube heat exchanger structure

More specifically, the combined heat exchanger 70 includes refrigerant tubes 16a through which refrigerant flows as a first fluid, and coolant tubes 43a through which coolant flows as a second fluid

The combined heat exchanger 70 includes an upstream heat exchange portion 71 in which the refrigerant tubes 16a and the coolant tubes 43a are stacked and arranged alternately In the upstream heat exchange portion 71, refrigerant flowing through the refrigerant tubes 16a exchanges heat with air (outside air blown by the blast fan 17) flowing near the refrigerant tubes 16a as a third fluid, and coolant flowing through the coolant tubes 43a exchanges heat with air (outside air blown by the blast fan 17) flowing near the coolant tubes 43a.

A downstream heat exchange portion 72 is provided downstream of the upstream heat exchange portion 71 in a flow direction of outside air, and the refrigerant tubes 16a are stacked and arranged in the downstream heat exchange portion 72 In the downstream heat exchange portion 72, refrigerant flowing through the refrigerant tubes 16a exchanges heat with air (outside air blown by the blast fan 17) flowing near the refrigerant tubes 16a

A flattened tube having a flattened shape in a sectional surface perpendicular to its longitudinal direction is used for the refrigerant tube 16a and the coolant tube 43a More specifically, a tube formed to have a flattened shape and multiple holes in cross-section by extruding is used for the refrigerant tube 16a A tube formed to have a flattened shape and two holes in cross-section by bending a single plate member is used as the coolant tube 43a

The refrigerant tubes 16a and the coolant tubes 43a of the upstream heat exchange portion 71 are stacked and arranged alternately at predetermined intervals such that flat sides of outer surfaces of the refrigerant tube 16a and the coolant tube 43a are opposed and parallel to each other Similarly, the refrigerant tubes 16a of the downstream heat exchange portion 72 are stacked and arranged at predetermined intervals.

The refrigerant tubes 16a of the upstream heat exchange portion 71 is interposed between two of the coolant tubes 43a, and the coolant tubes 43a is interposed between two of the refrigerant tubes 16a The refrigerant tube 16a of the downstream heat exchange portion 72 is arranged to be overlapped with the refrigerant tube 16a or the coolant tube 43a of the upstream heat exchange portion 71 in a flow direction of outside air blown by the blast fan 17

In the upstream heat exchange portion 71, the refrigerant tubes 16a and the coolant tubes 43a are arranged alternately Thus, the number of the refrigerant tubes 16a is equal to the number of the coolant tubes 43a Therefore, a ratio (hereinafter, referred to as an upstream number ratio) of the number of the refrigerant tubes 16a to the total number of the refrigerant tubes 16a and the coolant tubes 43a in the upstream heat exchange portion 71 is 0.5.

On the other hand, the tubes of the downstream heat exchange portion 72 consist only of the refrigerant tubes 16a Therefore, a ratio (hereinafter, referred to as a downstream number ratio) of the number of the refrigerant tubes 16a to the total number of the refrigerant tubes 16a and the coolant tubes 43a in the downstream heat exchange portion 72 is 1

In the combined heat exchanger 70 of the present embodiment, the upstream number ratio is smaller than the downstream number ratio

In the heat exchanger 70, spaces between the refrigerant tubes 16a and the coolant tubes 43a of the upstream heat exchange portion 71 and spaces between adjacent two of the refrigerant tubes 16a of the downstream heat exchange portion 72 form outside air passages 70a (third fluid passages) through which outside air blown by the blast fan 17 flows

Outer fins 50 are arranged in the outside air passages 70a The outer fins 50 promote heat exchanges between refrigerant and outside air and between coolant and outside air Heat can be transferred through the outer fins 50 between refrigerant flowing through the refrigerant tubes 16a of the upstream heat exchange portion 71 and coolant flowing through the coolant tubes 43a of the upstream heat exchange portion 71 Heat can be transferred through the outer fins 50 between refrigerants flowing through adjacent two of the refrigerant tubes 16a of the downstream heat exchange portion 72

A corrugated fin formed by bending a metallic thin plate superior in heat-conductivity into a corrugated shape is used for the outer fin 50. In the present embodiment, the outer fin 50 is bonded to both the refrigerant tube 16a and the coolant tube 43a of the upstream heat exchange portion 71, and the outer fin 50 is thus capable of transferring heat therethrough between the refrigerant tube 16a and the coolant tube 43a Additionally, the outer fin 50 is bonded to adjacent two of the refrigerant tubes 16a of the downstream heat exchange portion 72, and the outer fin 50 is hence capable of transferring heat therethrough between the adjacent two of the refrigerant tubes 16a

Next, an upstream tank portion 73 and a downstream tank portion 74 will be described The stacked heat exchanger 70 includes the upstream tank portion 73 extending in a stacking direction of the refrigerant tubes 16a and the coolant tubes 43a of the upstream heat exchange portion 71, and the downstream tank portion 74 extending in a stacking direction of the refrigerant tubes 16a of the downstream heat exchange portion 72

The upstream tank portion 73 has an upstream coolant space 731 which collects or distributes coolant that flows through the coolant tubes 43a of the upstream heat exchange portion 71 The downstream tank portion 74 has a downstream refrigerant space 741 which collects or distributes refrigerant that flows through the refrigerant tubes 16a of the downstream heat exchange portion 72

The upstream tank portion 73 and the downstream tank portion 74 are formed integrally with each other Hereinafter, the one in which the upstream tank portion 73 and the downstream tank portion 74 are integrated with each other will be referred to as a header tank 75.

The header tank 75 includes a header plate 751 to which the refrigerant tubes 16a and the coolant tubes 43a arranged into two rows in the flow direction of outside air are fixed, a middle plate member 752 fixed to the header plate 751, and a tank forming member 753

The tank forming member 753 is fixed to the header plate 751 and the middle plate member 752 such that the upstream coolant space 731 and the downstream refrigerant space 741 are provided inside the tank forming member 753 Specifically, the tank forming member 753 is formed by pressing a flat metal plate and has a two peaks shape (W-shape) when the tank forming member 753 is viewed in its longitudinal direction

A center portion 753c of the two peaks shape of the tank forming member 753 is bonded to the middle plate member 752 Accordingly, the upstream coolant space 731 and the downstream refrigerant space 741 are partitioned

The middle plate member 752 has multiple recessed portions 752a As shown in FIGS. 9 and 10, the multiple recessed portions 752a and the header plate 751 form therebetween multiple communication spaces 76 communicating with the coolant tubes 43a by fixing the middle plate member 752 to the header plate 751

The recessed portion 752a has a first through hole 752b extending through the recessed portion 752a from its one side to the other side on a downstream part in the flow direction of outside air, in other words, in a region corresponding to the downstream refrigerant space 741 of the downstream tank portion 74 Accordingly, the communication spaces 76 communicate with the downstream refrigerant space 741 of the downstream tank portion 74.

Thus, refrigerant flows into the communication spaces 76 from the refrigerant tubes 16a of the upstream heat exchange portion 71 and flows out from the communication spaces 76 through the first through hole 752b to the downstream refrigerant space 741. Therefore, the communication spaces 76 function as communication passages through which the refrigerant tubes 16a of the upstream heat exchange portion 71 communicates with the downstream refrigerant space 741 of the downstream tank portion 74

The communication space 76 extends in a direction to connect an end portion of the refrigerant tube 16a of the upstream heat exchange portion 71 and an end portion of the refrigerant tube 16a of the downstream heat exchange portion 72 which are arranged to be overlapped with each other in the flow direction of outside air More specifically, the communication space 76 extends in the flow direction of the outside air on the end portion of the refrigerant tube 16a of the upstream heat exchange portion 71 and on the end portion of the refrigerant tube 16a of the downstream heat exchange portion 72

The middle plate member 752 has second through holes 752c extending through the middle plate member 752 from its one side to the other side at positions corresponding to the coolant tubes 43a of the upstream heat exchange portion 71. The coolant tubes 43a of the upstream heat exchange portion 71 extend through the second through holes 752c Accordingly, the coolant tubes 43a of the upstream heat exchange portion 71 communicates with the upstream coolant space 731 provided in the tank forming member 753.

As shown in FIG 5, the coolant tubes 43a protrude toward the header tank 75 more than the refrigerant tubes 16a on an end portion of the upstream heat exchange portion 71 In other words, end portions of the refrigerant tubes 16a and end portions of the coolant tubes 43a are positioned unevenly near the header tank 75.

The middle plate member 752 further has third through holes 752d extending through the middle plate member 752 from its one side to the other side The third through holes 752d are located at positions corresponding to the refrigerant tubes 16a of the downstream heat exchange portion 72, which do not communicate with the communication spaces 76 The refrigerant tubes 16a of the downstream heat exchange portion 72, which do not communicate with the communication spaces 76, extend through the third through hole 752d Accordingly, the refrigerant tubes 16a of the downstream heat exchange portion 75, which do not communicate with the communication spaces 76, communicate with the downstream refrigerant space 741 provided in the tank forming member 753

As shown in FIG. 5, the refrigerant tubes 16a, which do not communicate with the communication spaces 76, protrude toward the header tank 75 more than the refrigerant tubes 16a, which communicate with the communication spaces 76, on an end portion of the downstream heat exchange portion 72 In other words, end portions of adjacent two of the refrigerant tubes 16a are positioned unevenly

The center portion 753c of the tank forming member 753 is formed into a shape fitting the recessed portions 752a of the middle plate member 752 The upstream coolant space 731 and the downstream refrigerant space 741 are separated from each other such that coolant or refrigerant therein is prevented from leaking through the joint part between the header plate 751 and the middle plate member 752

As shown in FIG 4, a coolant inflow pipe 434 through which coolant flows into the upstream coolant space 731 is connected to one end side (left side on the paper of the drawing) of the upstream tank portion 73 in a longitudinal direction of the upstream tank portion 73 The upstream tank portion 73 connected to the coolant inflow pipe 434 is located on one end side (upper side on the paper of the drawing) of the coolant tubes 43a in a longitudinal direction of the coolant tubes 43a A coolant outflow pipe 435 through which coolant flows out of the upstream coolant space 731 is connected to the other side (right side on the paper of the drawing) of the upstream tank portion 73 in the longitudinal direction of the upstream tank portion 73 The upstream tank portion 73 connected to the coolant outflow pipe 435 is located on the one end side of the coolant tubes 43a in the longitudinal direction of the coolant tubes 43a Both end sides of the upstream tank portion 73 in its longitudinal direction, which is located on the other end side (lower side on the paper of the drawing) of the coolant tubes 43a in the longitudinal direction of the coolant tubes 43a, are closed by closing members

A refrigerant outflow pipe 165 through which refrigerant flows out of the downstream refrigerant space 741 is connected to one end side (left side on the paper of the drawing) of the downstream tank portion 74 in a longitudinal direction of the downstream tank portion 74 The downstream tank portion 74 connected to the refrigerant outflow pipe is located on one end side (upper side on the paper of the drawing) of the refrigerant tubes 16a in a longitudinal direction of the refrigerant tubes 16a A refrigerant inflow pipe 164 through which refrigerant flows into the downstream refrigerant space 741 is connected to the other side (right side on the paper of the drawing) of the downstream tank portion 74 in the longitudinal direction of the downstream tank portion 74 The downstream tank portion 74 connected to the refrigerant inflow pipe 164 is located on the one end side of the refrigerant tubes 16a Both end sides of the downstream tank portion 74 in its longitudinal direction, which is located on the other end side (lower side on the paper of the drawing) of the refrigerant tubes 16a in the longitudinal direction of the refrigerant tubes 16a, are closed by closing members

As shown in the schematic sectional diagrams of FIGS 7 (a) - (d) and FIGS 8 (a) - (d), an upstream partition member 732 is disposed in the upstream tank portion 73 (hereinafter, referred to as a first upstream tank portion 730a) located on the one end side (upper side of the paper of FIG 4) of the coolant tubes 43a in the longitudinal direction of the coolant tubes 43a. The upstream partition member 732 partitions the upstream coolant space 731 into two spaces that align in the longitudinal direction of the first upstream tank portion 730a

One of the two spaces of the upstream coolant space 731 partitioned by the upstream partition member 732, which communicates with the coolant inflow pipe 434, is referred to as a first upstream coolant space 731a. The other one of the two spaces of the upstream coolant space 731 partitioned by the upstream partition member 732, which communicates with the coolant outflow pipe 435, is referred to as a second upstream coolant space 731b The upstream tank portion 73 located on the other end side (lower side of the paper of FIG 4) of the coolant tubes 43a in their longitudinal direction is referred to as a second upstream tank portion 730b

A downstream partition member 742 is disposed in the downstream tank portion 74 (hereinafter, referred to as a first downstream tank portion 740a) located on the one end side (upper side of the paper of FIG. 4) of the refrigerant tubes 16a in their longitudinal direction. The downstream partition member 742 partitions the downstream refrigerant space 741 into two spaces that align in the longitudinal direction of the first downstream tank portion 740a.

One of the two spaces of the downstream refrigerant space 741 partitioned by the downstream partition member 742, which communicates with the refrigerant inflow pipe 164, is referred to as a first downstream refrigerant space 741a. The other one of the two spaces of the downstream refrigerant space 741 partitioned by the downstream partition member 742, which communicates with the refrigerant outflow pipe 165, is referred to as a second downstream refrigerant space 741b. The downstream tank portion 74 located on the other end side (lower side of the paper of FIG 4) of the refrigerant tubes 16a in their longitudinal direction is referred to as a second downstream tank portion 740b.

In the heat exchanger 70 of the present embodiment, as shown in the schematic perspective diagram of FIG. 6 and in the schematic sectional diagrams of FIGS 7 (a) - (d), refrigerant flows into the first downstream refrigerant space 741a of the first downstream tank portion 740a through the refrigerant inflow pipe 164 A part of the refrigerant in the first downstream refrigerant space 741a flows into the refrigerant tubes 16a of the downstream heat exchange portion 72 and passes through the refrigerant tubes 16a from the upper side to the lower side of the drawing Another part of the refrigerant in the first downstream refrigerant space 741a of the first downstream tank portion 740a flows into the refrigerant tubes 16a of the upstream heat exchange portion 71 through the communication spaces 76 provided between the header plate 751 and the middle plate member 752 The refrigerant flowing into the refrigerant tubes 16a of the upstream heat exchange portion 71 passes through the refrigerant tubes 16a from the upper side to the lower side of the drawing.

The refrigerants flowing out of the refrigerant tubes 16a of the downstream heat exchange portion 72 gather together in the downstream refrigerant space 741 of the second downstream tank portion 740b Also the refrigerants flowing out of the refrigerant tubes 16a of the upstream heat exchange portion 71 gather together in the downstream refrigerant space 741 of the second downstream tank portion 740b through the communication spaces 76 provided between the header plate 751 and the middle plate member 752

The refrigerant collected in the downstream refrigerant space 741 of the second downstream tank portion 740b flows from the right side to the left side of the drawing Subsequently, a part of the refrigerant collected in the downstream refrigerant space 741 of the second downstream tank portion 740b flows into the refrigerant tubes 16a of the downstream heat exchange portion 72 and passes through the refrigerant tubes 16a from the lower side to the upper side of the drawing Another part of the refrigerant collected in the downstream refrigerant space 741 of the second downstream tank portion 740b flows into the refrigerant tubes 16a of the downstream heat exchange portion 72 through the communication spaces 76 provided between the header plate 751 and the middle plate member 752 The refrigerant flows through the refrigerant tubes 16a from the lower side to the upper side of the drawing

The refrigerants flowing out of the refrigerant tubes 16a of the downstream heat exchange portion 72 gather together in the second downstream refrigerant space 741b of the first downstream tank portion 740a Also the refrigerants flowing out of the refrigerant tubes 16a of the upstream heat exchange portion 71 gather together in the second downstream refrigerant space 741b of the first downstream tank portion 740a through the communication spaces 76 provided between the header plate 751 and the middle plate member 752

The refrigerant collected in the second downstream refrigerant space 741b of the first downstream tank portion 740a flows from the right side to the left side of the drawing and flows out through the refrigerant outflow pipe 165

In the heat exchanger 70 of the present embodiment, as shown in the schematic perspective diagram of FIG 6 and in the schematic sectional diagrams of FIGS 8 (a) - (d), coolant flows into the first upstream coolant space 731a of the first upstream tank portion 730a through the coolant inflow pipe 434 The coolant in the first upstream coolant space 731a flows into the coolant tubes 43a of the upstream heat exchange portion 71 and passes through the coolant tubes 43a from the upper side to the lower side of the drawing.

The coolants flowing out of the coolant tubes 43a of the upstream heat exchange portion 71 gather together in the upstream coolant space 731 of the second upstream tank portion 730b The coolant flows from the left side to the right side of the drawing in the upstream coolant space 731 of the second upstream tank portion 730b

Subsequently, the coolant collected in the upstream coolant space 731 of the second upstream tank portion 730b flows into the coolant tubes 43a of the upstream heat exchange portion 71 and passes through the coolant tubes 43a from the lower side to the upper side of the drawing. The coolants flowing out of the coolant tubes 43a of the upstream heat exchange portion 71 gather together in the second upstream coolant space 731b of the first upstream tank portion 730a

The coolant collected in the second upstream coolant space 731 b of the first upstream tank portion 730a flows from the left side to the right side of the drawing and flows out through the coolant outflow pipe 435

In the above-described heat exchanger 70, both the refrigerant tubes 16a of the upstream heat exchange portion 71 and the refrigerant tubes 16a of the downstream heat exchange portion 72 are used for the exterior heat exchange portion 16 The coolant tubes 43a of the upstream heat exchange portion 71 are used for the radiator portion 43

The refrigerant tubes 16a, the coolant tubes 43a, the respective components of the header tank 75 and the outer fins 50 in the above-described heat exchanger 70 are made of the same metal material (aluminum alloy in the present embodiment) The header plate 751 and the tank forming member 753 are fixed to each other by crimping in a state where the middle plate member 752 is interposed between the header plate 751 and the tank forming member 753.

Additionally, the heat exchanger 70 fixed by the crimping is thrown into a heating furnace The heat exchanger 70 is heated, and brazing filler metal coating surfaces of the respective components is melted. By cooling and solidifying the brazing filler metal, the respective components are brazed integrally. Accordingly, the exterior heat exchange portion 16 and the radiator portion 43 are integrated with each other

As is clear from the above-described explanation, refrigerant of the present embodiment corresponds to the first fluid described in claims, and coolant corresponds to the second fluid Air (outside air) corresponds to the third fluid, and the refrigerant tubes 16a correspond to first tubes The coolant tubes 43a correspond to second tubes, and the communication spaces 76 correspond to a communication passage described in claims.

Next, an electric control portion of the present embodiment will be described The air conditioning controller includes a known microcomputer and its peripheral circuit, and the microcomputer includes a CPU, a ROM and a RAM The air conditioning controller performs a variety of calculations and executes processing based on an air conditioning control program stored in the ROM The air conditioning controller controls operations of various air conditioning control devices 11, 15a, 15b, 17, 41 and 42 which are connected to an output side of the air conditioning controller

An input side of the air conditioning controller is connected to various sensors for air conditioning control The various sensors include an inside air sensor which detects a temperature inside the vehicle compartment, an outside air sensor which detects an outside temperature, a solar sensor which detects an amount of solar radiation in the vehicle compartment, an evaporator temperature sensor which detects a temperature (evaporator temperature) of air blown out of the interior evaporator 20, a discharged refrigerant temperature sensor which detects a temperature of refrigerant discharged from the compressor 11, an outlet refrigerant temperature sensor 51 which detects a temperature Te of refrigerant on the outlet side of the exterior heat exchange portion 16, and a coolant temperature sensor 52 as a coolant temperature detection device which detects a temperature Tw of coolant flowing into the running electric motor MG

In the present embodiment, the coolant temperature sensor 52 detects the temperature Tw of coolant pumped by the coolant pump 41, but may detect a temperature Tw of coolant drawn into the coolant pump 41

The inlet side of the air conditioning controller is connected to a non-shown operation panel located near the dashboard in the front part of the vehicle compartment Operation signals are input into the air conditioning controller from various control switches provided in the operation panel The various control switches include an activation switch of the vehicle air conditioner, a vehicle-compartment temperature setting switch by which a temperature of the vehicle compartment is set, and a selecting switch of operation modes

The air conditioning controller integrally includes control devices that control operations of the electric motor 11b of the compressor 11 and the open-dose valve 15a, for example In the present embodiment, a unit (hardware and software) of the air conditioning controller, which controls an operation of the compressor 11, is used as a refrigerant discharge capacity control portion A unit of the air conditioning controller, which controls operations of various devices 15a and 15b used as the refrigerant passage switching device, is used as a refrigerant passage control portion A unit of the air conditioning controller, which controls an operation of the three-way valve 42 used as the coolant circuit switching device, is used as a coolant circuit control portion

The air conditioning controller of the present embodiment further includes a unit (frosting determination portion) which determine whether the exterior heat exchange portion 16 is frosted based on detection signals from the above-described air conditioning sensors. Specifically, the frosting determination portion of the present embodiment determines that the exterior heat exchange portion 16 is frosted, when a speed of the vehicle is lower than or equal to a predetermined speed (20 km/h in the present embodiment), and when the refrigerant temperature Te on the outlet side of the exterior heat exchange portion 16 is lower than or equal to 0 °C

Next, operations of the vehicle air conditioner 1 of the present embodiment, which has the above-described configuration, will be described The vehicle air conditioner 1 of the present embodiment is capable of performing the air heating operation, in which the vehicle compartment is heated, and the air cooling operation, in which the vehicle compartment is cooled Additionally, the vehicle air conditioner 1 is capable of performing the defrosting operation during the air heating operation Behaviors of the vehicle air conditioner 1 in the respective operations will be described below

### (a) Air Heating Operation

The air heating operation is started when an air heating mode is selected by using the selecting switch in a state where the activation switch of the operation panel is turned on (ON) When the frosting determination portion determines that the exterior heat exchange portion 16 is frosted during the air heating operation, the defrosting operation is performed

In the general air heating operation, the air conditioning controller closes the open-close valve 15a and switches the three-way valve 15b to select the refrigerant passage connecting the outlet side of the exterior heat exchange portion 16 and the inlet side of the accumulator 18 Additionally, the air conditioning controller operates the coolant pump 41 such that the coolant pump 41 pumps coolant at a predetermined flow rate The air conditioning controller switches the three-way valve 42 of the coolant circulation circuit 40 to select the coolant circuit in which the coolant flows with bypassing the radiator portion 43

Accordingly, the heat pump cycle 10 is switched to the refrigerant passage in which refrigerant flows as shown by the solid arrows of FIG 1, and the coolant circulation circuit 40 is switched to the coolant circuit in which coolant flows as shown by the dashed arrows of FIG 1

In these configurations of the refrigerant passage and the coolant circuit, the air conditioning controller reads detection signals of the above-described air conditioning sensors and operation signals of the operation panel The air conditioning controller calculates a target outlet air temperature TAO based on values of the detection signals and the operation signals The target outlet air temperature TAO is a target temperature of air blown into the vehicle compartment

The air conditioning controller determines operation states of the various air conditioning control devices connected to the output side of the air conditioning controller based on the calculated target outlet air temperature TAO and the detection signals of the sensors.

For example, a refrigerant discharge capacity of the compressor 11 and a control signal outputted to the electric motor of the compressor 11 are determined as below Firstly, a target evaporator outlet air temperature TEO of the interior evaporator 20 is determined based on the target outlet air temperature TAO with reference to a control map stored beforehand in the air conditioning controller

Then, the control signal outputted to the electric motor of the compressor 11 is determined based on a difference between the target evaporator outlet air temperature TEO and a temperature of air blown out of the interior evaporator 20 so that the temperature of air blown out of the interior evaporator 20 approaches the target evaporator outlet air temperature TEO by a feedback control method The temperature of air blown out of the interior evaporator 20 is detected by the evaporator temperature sensor

A control signal outputted to the servomotor of the air mix door 34 is determined by using the target air outlet temperature TAO, the temperature of air blown out of the interior evaporator 20, and a temperature of refrigerant discharged from the compressor 11 so that a temperature of air blown into the vehicle compartment becomes a temperature desired by a passenger The temperature of refrigerant discharged from the compressor 11 is detected by the discharged refrigerant temperature sensor, and the temperature desired by the passenger is set by the passenger with the vehicle-compartment temperature setting switch

In the general air heating operation and the defrosting operation, an open degree of the air mix door 34 may be controlled such that all air volume blown by the blower 32 passes through the interior condenser 12

The control signals determined as described above are outputted to the various air conditioning control devices. Subsequently, a control routine: reading of detection signals and operation signals → calculation of the target outlet air temperature TAO → determination of operational states of the various air conditioning control devices → outputting of control voltages and control signals, is repeatedly performed with a predetermined control period until an operational stop of the vehicle air conditioner is requested via the operation panel

### Such repetition of the control routine is performed basically and similarly in the other operations

In the general air heating operation, high pressure refrigerant discharged from the compressor 11 flows into the interior condenser 12 in the heat pump cycle 10 The refrigerant flowing into the interior condenser 12 radiates heat by heat exchange with air that has been blown by the blower 32 and has passed through the interior evaporator 20 Accordingly, air that is to be blown into the vehicle compartment is heated

The high pressure refrigerant from the interior condenser 12 flows into the heating fixed throttle 13 because the open-close valve 15a is closed The high pressure refrigerant flowing into the heating fixed throttle 13 is depressurized and expanded to be changed into low pressure refrigerant The low pressure refrigerant flows into the exterior heat exchange portion 16 The low pressure refrigerant in the exterior heat exchange portion 16 evaporates by absorbing heat from outside air blown by the blast fan 17

Coolant circulates in the coolant circulation circuit 40 without radiating heat to refrigerant flowing through the exterior heat exchange portion 16 or without absorbing heat from the refrigerant flowing through the exterior heat exchange portion 16 because the coolant circuit is switched such that the coolant bypasses the radiator portion 43 In other words, the coolant exerts no thermal influence on the refrigerant flowing through the exterior heat exchange portion 16

The refrigerant from the exterior heat exchange portion 16 flows into the accumulator 18 to be separated into gas and liquid because the three-way valve 15b is switched to select the refrigerant passage connecting the outlet side of the exterior heat exchange portion 16 and the inlet side of the accumulator 18 Gas refrigerant separated by the accumulator 18 is drawn into the compressor 11 and is compressed.

As described above, in the general air heating operation, air that is to be blown into the vehicle compartment is heated in the interior condenser 12 by heat of refrigerant discharged from the compressor 11, and air heating of the vehicle compartment can be thus performed

### (b) Defrosting Operation

Next, the defrosting operation will be described In a refrigeration cycle device in which refrigerant evaporates by heat exchange with outside air in the exterior heat exchange portion 16 as in the heat pump cycle 10 of the present embodiment, the exterior heat exchange portion 16 may be frosted when an evaporation temperature of refrigerant in the exterior heat exchange portion 16 is lower than or equal to a frost formation temperature (specifically, 0 °C)

When such frost formation occurs, the outside air passages 70a of the heat exchanger 70 is clogged with frost, and a heat exchange capacity of the exterior heat exchange portion 16 decreases dramatically. In the heat pump cycle 10 of the present embodiment, the defrosting operation is performed when the frosting determination portion determines that the exterior heat exchange portion 16 is frosted during the air heating operation

In the defrosting operation, the air conditioning controller stops operation of the compressor 11 and stops operation of the blast fan 17 Hence, a flow rate of refrigerant flowing into the exterior heat exchange portion 16 in the defrosting operation is lower than that in the general air heating operation A flow rate of outside air flowing into the outside air passages 70a in the defrosting operation is lower than that in the general air heating operation

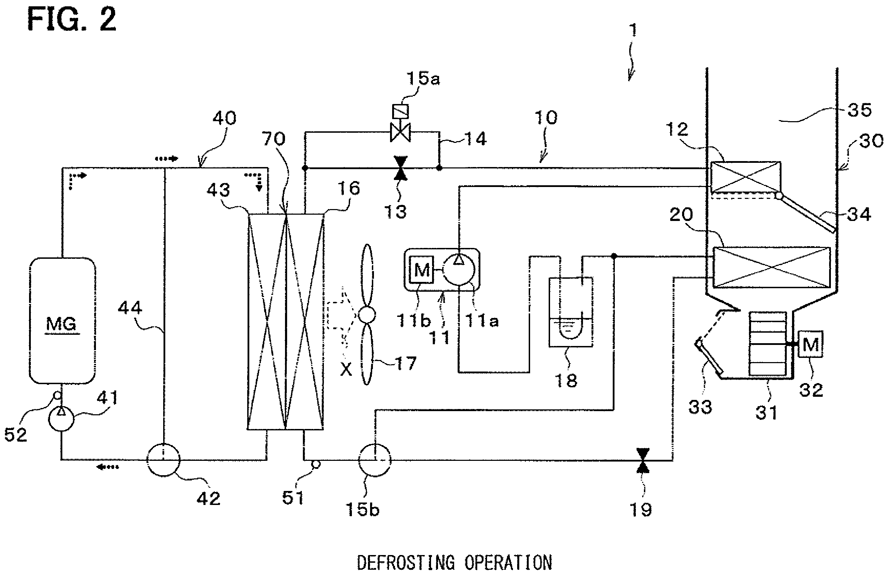

Moreover, the air conditioning controller switches the three-way valve 42 of the coolant circulation circuit 40 to select the coolant circuit in which coolant flows into the radiator portion 43, as shown by the dashed arrows in FIG 2. Accordingly, refrigerant does not circulate in the heat pump cycle 10, and the coolant circulation circuit 40 is switched to the coolant circuit in which refrigerant flows as shown by the dashed arrows of FIG. 2

Therefore, heat of coolant flowing through the coolant tubes 43a of the radiator portion 43 is transferred to the exterior heat exchange portion 16 through the outer fins 50, and the exterior heat exchange portion 16 is defrosted In other words, defrosting is achieved with utilizing waste heat of running electric motor MG effectively.

### (c) Air Cooling Operation

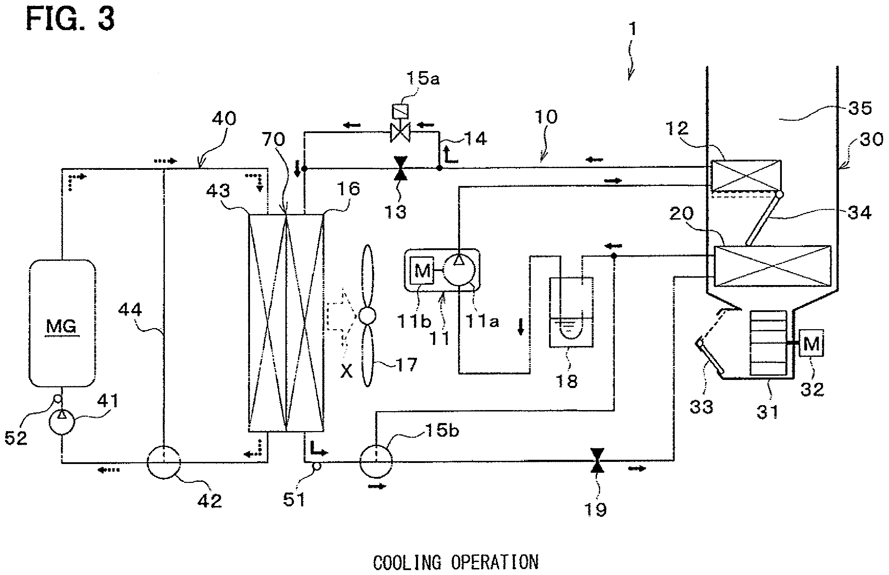

The air cooling operation is started when an air cooling mode is selected by using the selecting switch in a state where the operation panel is turned on (ON) In the air cooling operation, the air conditioning controller opens the open-close valve 15a, and switches the three-way valve 15b to select the refrigerant passage connecting the outlet side of the exterior heat exchange portion 16 and the inlet side of the cooling fixed throttle 19 Accordingly, the heat pump cycle 10 is switched to the refrigerant passage in which refrigerant flows as shown by the solid arrows of FIG 3

In this case, when the coolant temperature Tw is higher than or equal to a predetermined reference temperature, the three-way valve 42 of the coolant circulation circuit 40 is switched to a coolant circuit in which coolant flows into the radiator portion 43 When the coolant temperature Tw is lower than the predetermined reference temperature, the three-way valve 42 of the coolant circulation circuit 40 is switched to a coolant circuit in which coolant bypasses the radiator portion 43 In FIG 3, a flow of coolant when the coolant temperature Tw is higher than or equal to the reference temperature is shown by the dashed arrows

In the heat pump cycle 10 of the air cooling operation, high pressure refrigerant discharged from the compressor 11 flows into the interior condenser 12 and radiates heat by heat exchange with air that has been blown by the blower 32 and has passed through the interior evaporator 20 The high pressure refrigerant from the interior condenser 12 flows into the exterior heat exchange portion 16 through the fixed-throttle bypass passage 14 because the open-dose valve 15a is open The refrigerant flowing in the exterior heat exchange portion 16 further radiates heat to outside air blown by the blast fan 17

The refrigerant flowing out of the heat exchange portion 16 is depressurized and expanded by the cooling fixed throttle 19 because the three-way valve 15b is switched to select the refrigerant passage connecting the outlet side of the exterior heat exchange portion 16 and the inlet side of the cooling fixed throttle 19 The refrigerant flows from the cooling fixed throttle 19 into the interior evaporator 20 and evaporates in the interior evaporator 20 by absorbing heat from air blown by the blower 32 Accordingly, the air that is to be blown into the vehicle compartment is cooled

The refrigerant flows out of the interior evaporator 20 into the accumulator 18 to be separated into gas and liquid Gas refrigerant separated in the accumulator 18 is drawn into the compressor 11 to be compressed newly As above, since low pressure refrigerant evaporates in the interior evaporator 20 by absorbing heat from air that is to be blown into the vehicle compartment, the air is cooled in the air cooling operation Therefore, air cooling in the vehicle compartment can be performed

In the vehicle air conditioner 1 of the present embodiment, various operations of the vehicle air conditioner 1 can be performed by switching the refrigerant passage of the heat pump cycle 10 and the coolant circuit of the coolant circulation circuit 40 as described above. Further, in the present embodiment, since the heat exchanger 70 having the above-described features is used, heat exchange amounts among three kinds of fluids: refrigerant, coolant and air, can be adjusted suitably

In the heat exchanger 70 of the present embodiment, the upstream number ratio, which is a ratio of the number of the refrigerant tubes 16a to the total number of the refrigerant tubes 16a and the coolant tubes 43a in the upstream heat exchange portion 71, is lower than the downstream number ratio that is a ratio of the number of the refrigerant tubes 16a to the total number of the refrigerant tubes 16a and the coolant tubes 43a in the downstream heat exchange portion 72.

Specifically, the refrigerant tubes 16a and the coolant tubes 43a are arranged alternately in the upstream heat exchange portion 71 Accordingly, heat of coolant can be transferred to the refrigerant tubes 16a through the outer fins 50 in the defrosting operation Therefore, waste heat of the running electric motor MG can be effectively utilized for defrosting of the refrigerant tubes 16a

On the other hand, the tubes of the downstream heat exchange portion 72 consist only of the refrigerant tubes 16a Hence, a heat exchange amount between refrigerant and outside air can be ensured sufficiently. Therefore, a heat exchange amount between refrigerant and outside air can be ensured appropriately in the heat exchanger 70 as a whole

The refrigerant tubes 16a and the coolant tubes 43a are arranged alternately in the upstream heat exchange portion 71 that is easier to be frosted than the downstream heat exchange portion 72. Therefore, defrosting of the refrigerant tubes 16a can be performed efficiently, and the heat exchange amount between refrigerant and outside air can be ensured suitably in the heat exchanger 70 as a whole

Moreover, in the heat exchanger 70 of the present embodiment, the outer fins 50 are located in the outside air passages 70a provided between the refrigerant tubes 16a of the exterior heat exchange portion 16 and the coolant tubes 43a of the radiator portion 43 Transfer of heat between the refrigerant tubes 16a and the coolant tubes 43a is made to be possible by the outer fins 50

Accordingly, in the defrosting operation, heat of coolant can be transferred to the refrigerant tubes 16a through the outer fins 50 more certainly. Thus, waste heat of the running electric motor MG can be utilized for defrosting of the refrigerant tubes 16a more effectively

Furthermore, in the heat exchanger 70 of the present embodiment, the communication spaces 76 extend in a direction to connect an end portion of a refrigerant tube 16a of the upstream heat exchange portion 71 and an end portion of a refrigerant tube 16a of the downstream heat exchange portion 72, which are arranged to be overlapped with each other in the flow direction of outside air In other words, the communication spaces 76 extend in the flow direction of outside air Therefore, enlargement of the heat exchange 70 in size can be limited

### (Second Embodiment)

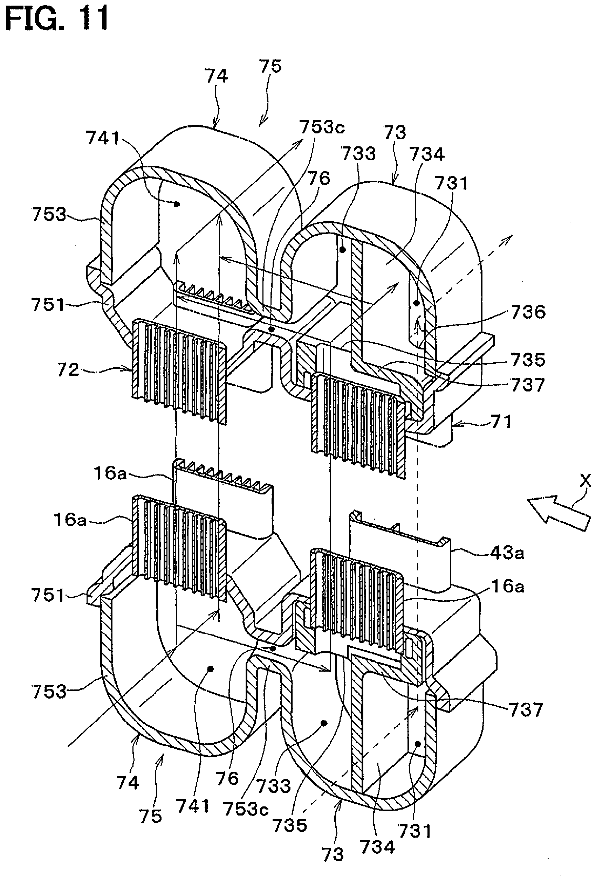

Next, a second embodiment of the present disclosure will be described in reference to FIG 11 The second embodiment is different from the first embodiment in shape of header tank 75 FIG 11 is a perspective sectional diagram showing a heat exchanger 70 of the second embodiment

As shown in FIG 11, a header tank 75 of the heat exchanger 70 includes a header plate 751 to which both refrigerant tubes 16a and coolant tubes 43a are fixed, and a tank forming member 753 An upstream refrigerant space 733, an upstream coolant space 731 and a downstream refrigerant space 741 are formed inside the tank forming member 753 by fixing the tank forming member 753 to the header plate 751

The upstream refrigerant space 733 and the upstream coolant space 731 are formed in an upstream tank portion 73. The upstream refrigerant space 733 collects or distributes refrigerant that flows through refrigerant tubes 16a of an upstream heat exchange portion 71. The upstream coolant space 731 collects or distributes coolant that flows through the coolant tubes 43a of the upstream heat exchange portion 71 The downstream refrigerant space 741 is formed in a downstream tank portion 74, and collects or distributes refrigerant that flows through refrigerant tubes 16a of a downstream heat exchange portion 72

A partition member 734 is provided inside the upstream tank portion 73, and the partition member 734 separates an inside space of the upstream tank portion 73 into two spaces that align in a flow direction of outside air Accordingly, the upstream coolant space 731 is provided on an upstream side of the partition member 734 in the flow direction of outside air, and the upstream refrigerant space 733 is provided on a downstream side of the partition member 734 in the flow direction of outside air

A middle member 737 is provided inside the upstream tank portion 73 The middle member 737 includes a first communication hole 735 through which the refrigerant tubes 16a of the upstream heat exchange portion 71 communicate with the upstream refrigerant space 733, and a second communication hole 736 through which the coolant tubes 43a communicate with the upstream coolant space 731

Hence, the refrigerant tubes 16a of the upstream heat exchange portion 71 communicates with the upstream refrigerant space 733 through the first communication hole 735. The coolant tubes 43a of the upstream heat exchange portion 71 communicates with the upstream coolant space 731 through the second communication hole 736

In the present embodiment, the middle plate member 737 is integrated with the partition member 734 The middle plate member 737 is fixed to the header plate 751

A communication space 76 is provided in the header tank 75 and functions as a communication passage through which the upstream refrigerant space 733 communicates with the downstream refrigerant space 741 In the present embodiment, the communication space 76 is formed between a center portion 753c and the header plate 751.

Accordingly, refrigerant and coolant can be made to flow in the heat exchanger 70 of the present embodiment, similarly to FIG. 6 of the first embodiment The other configurations and operations of a heat pump cycle 10 (vehicle air conditioner 1) are the same as those of the first embodiment Therefore, even when the vehicle air conditioner 1 of the present embodiment is operated, similar effects to the first embodiment can be obtained

### (Third Embodiment)

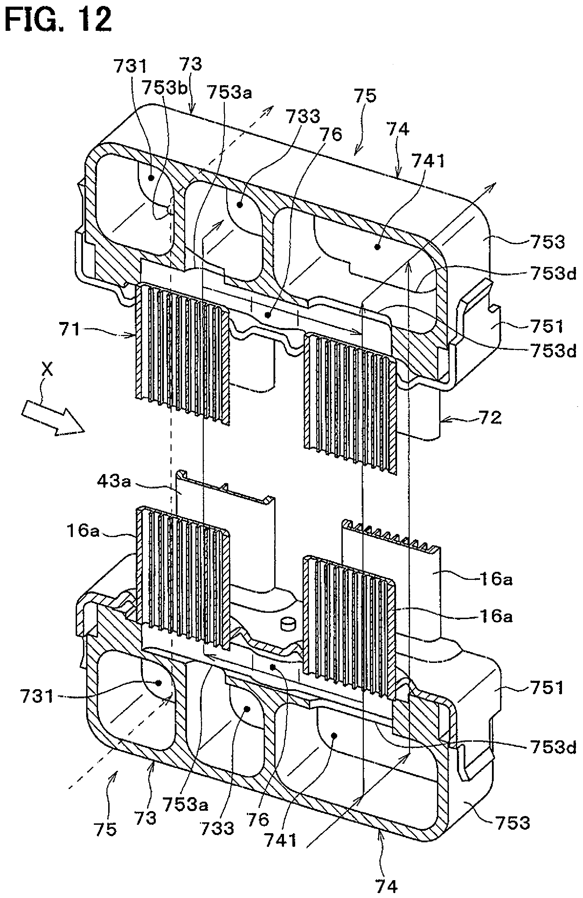

Next, a third embodiment of the present disclosure will be described with reference to FIG 12 The third embodiment is different from the second embodiment in shape of header tank 75 FIG 12 is a perspective sectional diagram showing a heat exchanger 70 of the third embodiment

As shown in FIG 12, a tank forming member 753 of a header tank 75 of the present embodiment is formed by extrusion molding An upstream coolant space 731, an upstream refrigerant space 733 and a downstream refrigerant space 741 are provided inside the tank forming member 753 A communication space 76 is provided between the tank forming member 753 and a header plate 751, and refrigerant tubes 16a of an upstream heat exchange portion 71 communicates with refrigerant tubes 16a of a downstream heat exchange portion 72 through the communication space 76

The tank forming member 753 includes a first communication hole 753a through which the upstream refrigerant space 733 communicates with the communication space 76 Hence, the refrigerant tubes 16a of the upstream heat exchange portion 71 communicates with the upstream refrigerant space 733 through the communication space 76 and the first communication hole 753a

The tank forming member 753 includes a second communication hole 753b through which the upstream coolant space 731 communicates with coolant tubes 43a of the upstream heat exchange portion 71 Hence, the coolant tubes 43a of the upstream heat exchange portion 71 communicates with the upstream coolant space 731 through the second communication hole 753b.

The tank forming member 753 includes a third communication hole 753d through which the downstream refrigerant space 741 communicates with the communication space 76 Hence, the refrigerant tubes 16a of the downstream heat exchange portion 72 communicates with the downstream refrigerant space 741 through the communication space 76 and the third communication hole 753d.

As described above, the tank forming member 753 includes the first communication hole 753a through which the upstream refrigerant space 733 communicates with the communication space 76, and the third communication hole 753d through which the downstream refrigerant space 741 communicates with the communication space 76. Thus, the upstream refrigerant space 733 and the downstream refrigerant space 741 communicate with each other through the communication hole 76. In other words, the communication hole 76 functions as a communication passage through which the upstream refrigerant space 733 and the downstream refrigerant space 741 communicate with each other

Accordingly, refrigerant and coolant can be made to be flow in the heat exchanger 70 of the present embodiment similarly to FIG. 6 of the first embodiment The other configurations and operations of a heat pump cycle 10 (vehicle air conditioner 1) are the same as those of the first embodiment Therefore, even when the vehicle air conditioner 1 of the present embodiment is operated, similar effects to the first embodiment can be obtained

Additionally, in the present embodiment, the upstream coolant space 731, the upstream refrigerant space 733 and the downstream refrigerant space 741 are provided inside the tank forming member 753. The communication space 76, through which the refrigerant tubes 16a of the upstream heat exchange portion 71 communicates with the refrigerant tubes 16a of the downstream heat exchange portion 72, is provided between the tank forming member 753 and the header plate 751

Accordingly, a middle plate member for forming the upstream coolant space 731, the upstream refrigerant space 733, the downstream refrigerant space 741 and the communication space 76 can be omitted. Therefore, an upstream tank portion 73 and a downstream tank portion 74 can be formed easily at low cost

### (Fourth Embodiment)

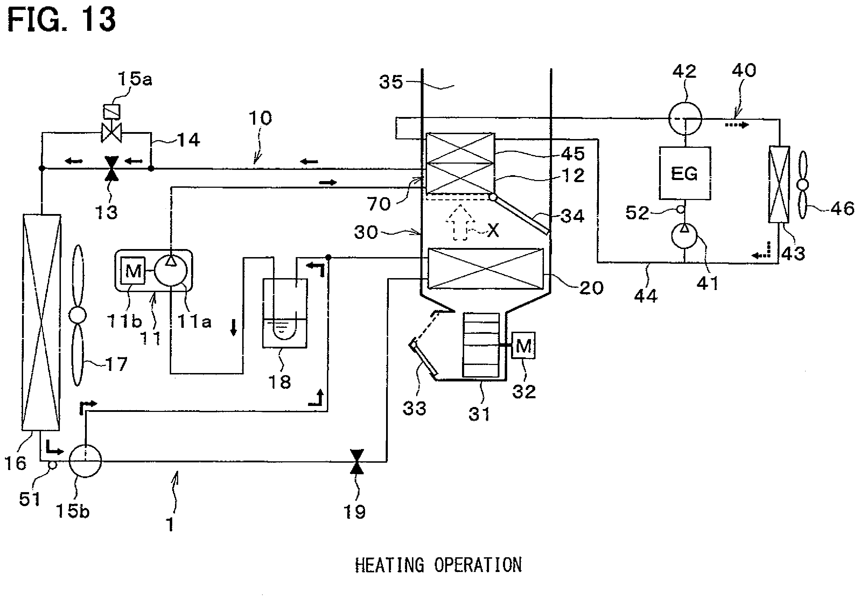

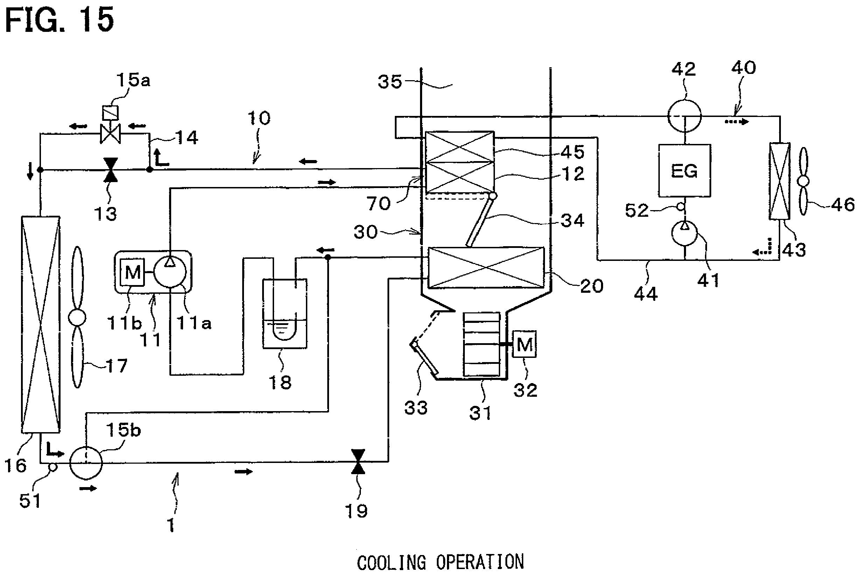

Next, a fourth embodiment of the present disclosure will be described with reference to FIGS. 13 to 15. In the present embodiment, an example shown in general configuration diagrams of FIGS 13 to 15 will be described, in which configurations of a coolant circulation circuit 40 and a heat pump cycle 10 are changed from the first embodiment In FIGS 13 to 15, a refrigerant flow in the heat pump cycle 10 is shown by solid lines, and a coolant flow in the coolant circulation circuit 40 is shown by dashed arrows

Specifically, the coolant circulation circuit 40 of the present embodiment cools an engine EG by circulating coolant as a cooling medium (heat medium) in a coolant passage formed inside the engine EG The engine EG is one of an in-vehicle device that generates heat during its operation time in the present embodiment, the running electric motor MG of the first embodiment is omitted, and the engine EG is provided alternatively

Additionally, in the present embodiment, the interior condenser 12 of the first embodiment is omitted, and the combined heat exchanger 70 of the first embodiment is disposed inside the casing 31 of the interior air conditioning unit 30 The exterior heat exchange portion 16 of the heat exchanger 70 of the first embodiment is used as the interior condenser 12 Hereinafter, the portion of the heat exchanger 70, which is used as the interior condenser 12, is referred to as an interior condenser portion

The radiator portion 43 of the heat exchanger 70 of the first embodiment is used as a heat recovery heat exchange portion 45 which heats coolant by using heat of refrigerant. Accordingly, in the heat pump cycle 10 of the present embodiment, a warm-up operation can be performed In the warm-up operation, coolant is heated by heat of refrigerant to warm the engine EG up. The heat ,recovery heat exchange portion 45 is located in a bypass passage 44 of the coolant circulation circuit 40

An exterior heat exchange portion 16 is a single heat exchanger in which refrigerant flowing therein exchanges heat with outside air blown by a blast fan 17 Similarly, a radiator portion 43 is a single heat exchanger in which coolant flowing therein exchanges heat with outside air blown by a blast fan 46.

The other configurations are similar to the first embodiment In the present embodiment, though the warm-up operation is performed instead of the defrosting operation, the other operations are similar to the first embodiment

The warm-up operation will be described below. A temperature of coolant is preferably kept lower than or equal to a predetermined upper limit temperature in order to restrict overheat of the engine EG The temperature of coolant is preferably kept higher than or equal to a predetermined lower limit temperature in order to reduce friction loss caused by viscosity increase of lubricant oil enclosed in the engine EG

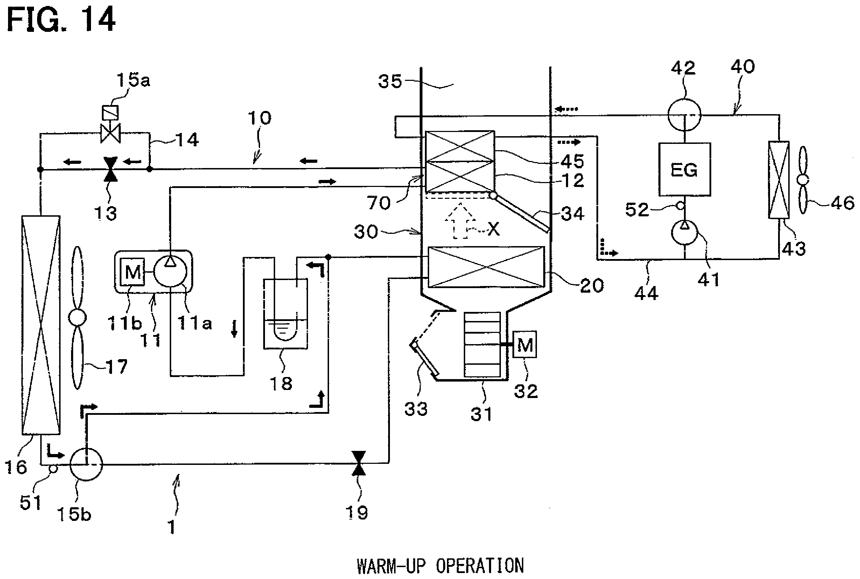

In the heat pump cycle 10 of the present embodiment, the warm-up operation is performed when a coolant temperature Tw becomes lower than or equal to a predetermined reference temperature during an air heating operation In the warm-up operation, a three-way valve 15b of the heat pump cycle 10 is operated similarly to the general air heating operation A three-way valve 42 of the coolant circulation circuit 40 is operated such that coolant bypasses the radiator 43 as shown by the dashed arrows of FIG 14 In other words, a coolant circuit, in which coolant flows into the heat recovery heat exchange portion 45, is selected

Therefore, as shown by the solid arrows of FIG 14, high pressure refrigerant discharged from a compressor 11 flows into the interior condenser portion 12, similarly to the general air heating operation Heat of the high-pressure and high-temperature refrigerant flowing in the interior condenser portion 12 is transferred to air blown by a blower 32 and to coolant through outer fins 50 because the three-way valve 42 selects the coolant circuit in which coolant flows into the heat-recovery heat exchange portion 45 The other operations are similar to the general air heating operation

As above, in the warm-up operation, air that is to be blown into the vehicle compartment is heated in the interior condenser 12 by heat of refrigerant discharged from the compressor 11, and air heating of the vehicle compartment can be thereby performed The heat of refrigerant discharged from the compressor 11 is transferred to coolant through the outer fins 50 in the interior condenser 12, and the temperature of the coolant thus increases Therefore, warm-up of the engine EG can be achieved by using heat of refrigerant

The heat exchanger 70 of the second embodiment or the third embodiment may be used for the heat pump cycle 10 of the present embodiment

### (Fifth Embodiment)

Next, a fifth embodiment of the present disclosure will be described with reference to FIGS, 16 and 17 The fifth embodiment is different from the above-described first embodiment in that a communication passage (communication space), through which refrigerant tubes 16a of an upstream heat exchange portion 71 communicates with a downstream refrigerant space 741 of a downstream tank portion 74, is provided separately from an upstream tank portion 73 and the downstream tank portion 74

A heat exchanger 70 of the present embodiment has a so-called drawn cup heat exchanger structure in which multiple plate members are stacked and arranged with outer fins 50 interposed therebetween The plate member is formed by joining a pair of plate-like members with each other to have a space therebetween, and, as a result, a tube and a tank portion communicating with the tube are formed in the plate member. In such kind of the drawn cup heat exchanger structure, the tank portions of the plate members are made to communicate with one another, and structures corresponding to the upstream tank portion 73 and the downstream tank portion 74 of the above-described embodiments can be thereby formed

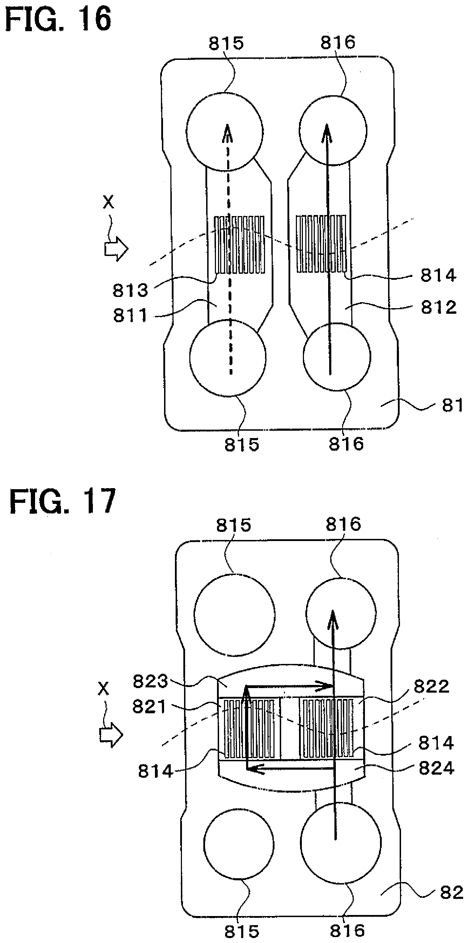

Specifically, a pair of first plate-like members 81 shown in FIG 16 is joined with each other to having spaces therebetween By the joining of the pair of first plate-like members 81, different kinds of tubes (a refrigerant tube 16a and a coolant tube 43a) are overlapped with each other in a flow direction of outside air A pair of second plate-like members 82 shown in FIG. 17 is joined with each other to having spaces therebetween By the joining of the pair of second plate-like members 82, the same kind of tubes (refrigerant tubes 16a) are overlapped with each other in a flow direction of outside air

As shown in FIG 16, the first plate-like member 81 includes a coolant passage groove 811 for forming the coolant tube 43a of the upstream heat exchange portion 71, and a refrigerant passage groove 812 for forming the refrigerant tube 16a of a downstream heat exchange portion 72 A coolant inner fin 813 is provided inside the coolant passage groove 811 and promotes heat exchange between coolant flowing in the coolant passage groove 811 and outside air A refrigerant inner fin 814 is provided inside the refrigerant passage groove 812 and promotes heat exchange between refrigerant flowing in the refrigerant passage groove 812 and outside air

The first plate-like member 81 includes a coolant through hole 815 on both sides of the coolant passage groove 811 in its extending direction, and the coolant through hole 815 is used for forming the upstream coolant space 731 of the upstream tank portion 71 The first plate-like member 81 includes a refrigerant through hole 816 on both sides of the refrigerant passage groove 812 in its extending direction, and the refrigerant through hole 816 is used for forming the downstream refrigerant space 741 of the downstream tank portion 74

As shown in FIG 17, the second plate-like member 82 includes an upstream refrigerant passage groove 821 for forming the refrigerant tube 16a of the upstream heat exchange portion 71, and a downstream refrigerant passage groove 822 for forming the refrigerant tube 16a of the downstream heat exchange portion 72 A coolant inner fin 814 is provided inside the upstream refrigerant passage groove 821 and promotes heat exchange between refrigerant flowing in the upstream refrigerant passage groove 821 and outside air A coolant inner fin 814 is provided inside the downstream refrigerant passage groove 822 and promotes heat exchange between refrigerant flowing in the downstream refrigerant passage groove 822 and outside air Similarly to the first plate-like member 81, the second plate-like member 82 includes a coolant through hole 815 and a refrigerant through hole 816

The second plate-like member 82 includes a first communication passage groove 823 connecting one end portion (end portion on the upper side of the drawing) of the upstream refrigerant passage groove 821 in its longitudinal direction and one end portion (end portion on the upper side of the drawing) of the downstream refrigerant passage groove 822 in its longitudinal direction The second plate-like member 82 further includes a second communication passage groove 824 connecting the other end portion (end portion on the lower side of the drawing) of the upstream refrigerant passage groove 821 in its longitudinal direction and the other end portion (end portion on the lower side of the drawing) of the downstream refrigerant passage groove 822 in its longitudinal direction The first communication passage groove 823 and the second communication passage groove 824 are connected to the coolant through holes 816, respectively

When a pair of the second plate-like members 82 is joined with each other to have spaces therebetween, a space formed between the first communication passage grooves 823 and a space formed between the second communication passage grooves 824 function as communication passages through which the refrigerant tube 16a of the upstream heat exchange portion 71 communicates with the downstream refrigerant space 741

In the present embodiment, the refrigerant tubes 16a, the coolant tubes 43a, the upstream tank portion 73, the downstream tank portion 74 and the communication spaces 76 are formed by joining a pair of the first plate-like members 81 and by joining a pair of the second plate-like members 82 Therefore, the so-called drawn cup heat exchanger structure is used in the present embodiment

Accordingly, the refrigerant tubes 16a, the coolant tubes 43a, the upstream tank portion 73, the downstream tank portion 74 and the communication spaces 76 can be formed by the plate-like members 81 and 82 without using other members Therefore, the heat exchanger 70 can be formed easily at low cost

### (Sixth Embodiment)

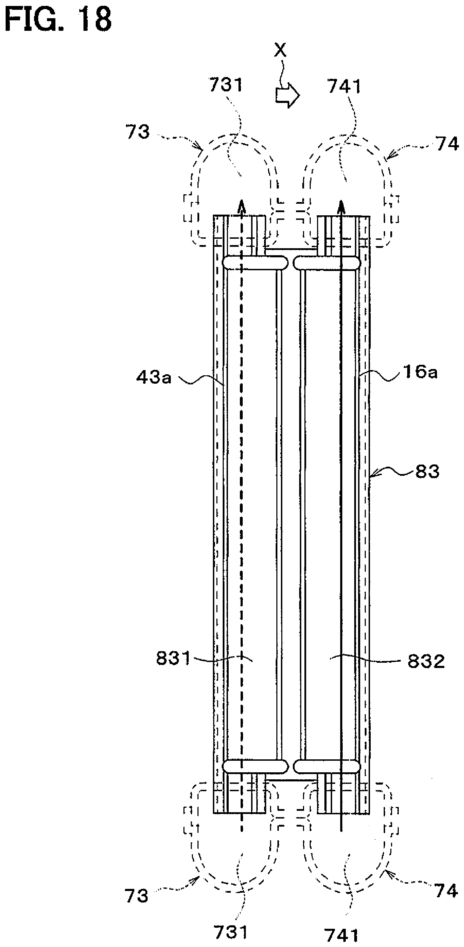

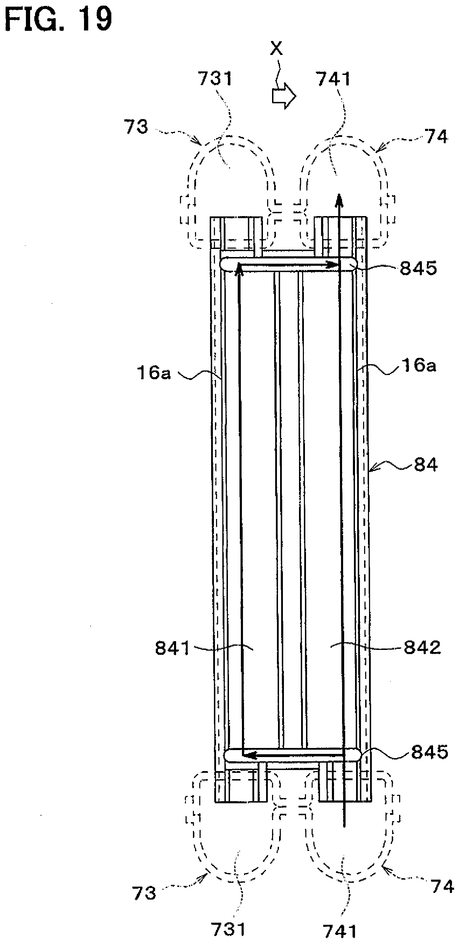

Next, a sixth embodiment of the present disclosure will be described with reference to FIGS 18 and 19 The sixth embodiment is different from the first embodiment in that a communication passage (communication space), through which refrigerant tubes 16a of an upstream heat exchange portion 71 communicates with a downstream refrigerant space 741 of a downstream tank portion 74, is provided separately from an upstream tank portion 73 and the downstream tank portion 74 The sixth embodiment is different from the first embodiment also in that the communication passage is located nearer to tubes 16a and 24a more than the tank portions 73 and 74

In the present embodiment, a so-called plate tube is used for refrigerant tube 16a and coolant tubes 43a The plate tube is formed by joining a pair of plate-like members having a convex-concave portion on its surface so as to have a space between the plate-like members The plate-like member 83 is formed of metal (aluminum alloy in the present embodiment) superior in heat conductivity

Specifically, a pair of the first plate-like members 83 shown in FIG 18 is joined with each other to have spaces therebetween By joining of the first plate-like members 83, a portion, in which different kinds of tubes (refrigerant tube 16a and coolant tube 43a) are overlapped with each other in a flow direction of outside air, is provided A pair of second plate-like members 84 shown in FIG 19 is joined with each other to have spaces therebetween By joining of the second plate-like members 84, a portion, in which the same kind of tubes (refrigerant tubes 16a) are overlapped with each other in the flow direction of outside air, is provided

As shown in FIG. 18, the first plate member 83 includes a coolant passage groove 831 for forming the coolant tube 43a of the upstream heat exchange portion 71, and a refrigerant passage groove 832 for forming the refrigerant tube 16a of a downstream heat exchange portion 72

Both ends of the coolant passage groove 831 in its longitudinal direction are open and communicate with upstream coolant spaces 731 of the upstream tank portions 73 Both ends of the refrigerant passage groove 832 in its longitudinal direction are open and communicate with the downstream refrigerant spaces 741 of the downstream tank portions 74

As shown in FIG 19, the second plate-like member 84 includes an upstream refrigerant passage groove 841 for forming the refrigerant tube 16a of the upstream heat exchange portion 71, and a downstream refrigerant passage groove 842 for forming the refrigerant tube 16a of the downstream heat exchange portion 72

Both ends of the upstream refrigerant passage groove 841 in its longitudinal direction are not open so as not to communicate with the upstream coolant space 731 of the upstream tank portion 73 In contrast, both ends of the downstream refrigerant passage groove 842 in its longitudinal direction are open so as to communicate with the downstream refrigerant space 741 of the downstream tank portion 74

Communication passage grooves 845 are provided near both ends of the upstream refrigerant passage groove 841 and both ends of the downstream refrigerant passage groove 842 The upstream refrigerant passage groove 841 and the downstream refrigerant passage groove 842 are connected with each other through the communication passage groove 845 Hence, when a pair of the second plate-like members 82 are joined to have spaces therebetween, a space formed by the communication passage grooves 845 functions as a communication passage through which the refrigerant tube 16a of the upstream heat exchange portion 71 communicates with the downstream refrigerant space 741 of the downstream tank portion 74

In the present embodiment, the refrigerant tubes 16a and the coolant tubes 43a are formed by joining a pair of the first plate-like members 83 and by joining a pair of the second plate-like members 84 Accordingly, the refrigerant tubes 16a, the coolant tubes 43a and the communication spaces 76 can be formed by using the plate-like members 83 and 84 without using other members Therefore, the heat exchanger 70 can be formed easily at low cost

In the present embodiment, the communication space 76 is provided separately from the tank portions 73 and 74, and the communication space 76 is provided in portions of the tubes 16a and 43a Accordingly, a length of passage through which refrigerant flows can be shortened in the heat exchanger 70 as a whole, as compared with a case in which the communication space 76 is provided inside the tank portions 73 and 74 Consequently, pressure loss of refrigerant can be reduced, and a performance of the heat exchanger 70 can be thereby improved

### (Seventh Embodiment)

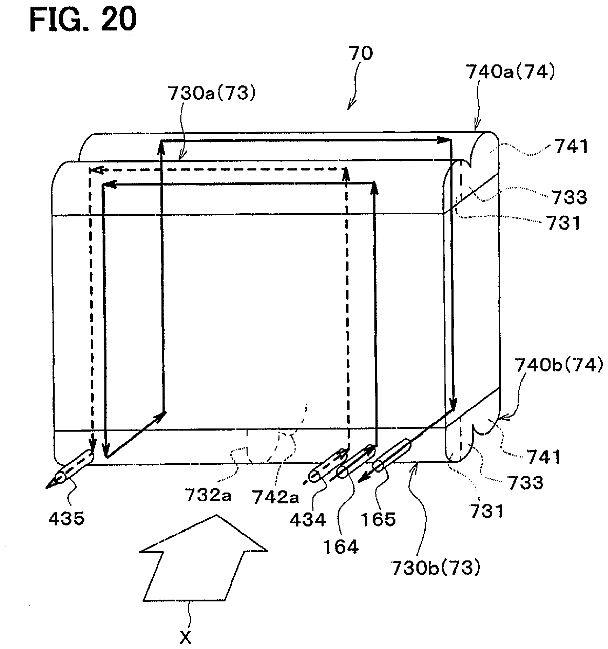

Next, a seventh embodiment of the present disclosure will be described with reference to FIG. 20 The seventh embodiment is different from the above-described second embodiment in coolant flow and refrigerant flow in the heat exchanger 70

As shown in FIG 20, an upstream partition member 732a is located in a second upstream tank portion 730b The upstream partition member 732a separates an upstream coolant space 731 into two spaces that align in a longitudinal direction of the second upstream tank portion 730b The upstream partition member 732a separates an upstream refrigerant space 733 into two spaces that align in the longitudinal direction of the second upstream tank portion 730b

Hereinafter, one of the two spaces of the upstream coolant space 731, which are partitioned by the upstream partition member 732a, is referred to as a first upstream coolant space The other of the two spaces of the upstream coolant space 731 is referred to as a second upstream coolant space The first upstream coolant space is located on one side (right side of the drawing) in the longitudinal direction of the second upstream tank portion 730b The second upstream coolant space is located on the other side (left side of the drawing) in the longitudinal direction of the second upstream tank portion 730b

One of the two spaces of the upstream refrigerant space 733, which are partitioned by the upstream partition member 732a, is referred to as a first upstream refrigerant space. The other of the two spaces of the upstream refrigerant space 733 is referred to as a second upstream refrigerant space The first upstream refrigerant space is located on one side (right side of the drawing) in the longitudinal direction of the second upstream tank portion 730b The second upstream refrigerant space is located on the other side (left side of the drawing) in the longitudinal direction of the second upstream tank portion 730b

One of two spaces of a downstream refrigerant space 741, which are partitioned by a downstream partition member 742a, is referred to as a first downstream refrigerant space The other of the two spaces of the downstream refrigerant space 741 is referred to as a second downstream refrigerant space The first downstream refrigerant space is located on one side (right side of the drawing) in a longitudinal direction of the second downstream tank portion 740b The second downstream refrigerant space is located on the other side (left side of the drawing) in the longitudinal direction of the second downstream tank portion 740b

The first upstream coolant space communicates with a coolant inflow pipe 434, and the second upstream coolant space communicates with a coolant outflow pipe 435 The first upstream refrigerant space communicates with a refrigerant inflow pipe 164, and the second upstream refrigerant space communicates with a refrigerant outflow pipe 165

The coolant inflow pipe 434, the coolant outflow pipe 435, the refrigerant inflow pipe 164 and the refrigerant outflow pipe 165 are connected to a surface of the second upstream tank portion 730b on an upstream side of the second upstream tank portion 730b in the flow direction of outside air

Thus, in the heat exchanger 70 of the present embodiment, as shown in the schematic perspective diagram of FIG 20, all refrigerant flowing into the first upstream refrigerant space of the second upstream tank portion 730b through the refrigerant inflow pipe 164 flows in refrigerant tubes 16a of an upstream heat exchange portion 71 from the lower side to the upper side of the drawing without flowing into refrigerant tubes 16a of a downstream heat exchange portion 72

Refrigerant flowing out of the refrigerant tubes 16a of the upstream heat exchange portion 71 collects in an upstream refrigerant space 733 of a first upstream tank portion 730a and flows in the upstream refrigerant space 733 from the right side to the left side of the drawing Subsequently, the refrigerant collecting in the upstream refrigerant space 733 of the first upstream tank portion 730a flows into refrigerant tubes 16a of the first upstream heat exchange portion 71, and flows through the refrigerant tubes 16a from the upper side to the lower side of the drawing

Then, refrigerant flowing out of the refrigerant tubes 16a of the upstream heat exchange portion 71 collects in the second upstream refrigerant space of the second upstream tank portion 730b, and subsequently flows into the first downstream refrigerant space of the second downstream tank portion 740b through a communication space 76

The refrigerant in the first downstream refrigerant space of the second downstream tank portion 740b flows through refrigerant tubes 16a of the downstream heat exchange portion 72 from the lower side to the upper side of the drawing The refrigerant flowing out of the refrigerant tubes 16a of the downstream heat exchange portion 72 collects in a downstream refrigerant space 741 of a first downstream tank portion 740a and flows from the left side to the right side of the drawing

The refrigerant in the downstream refrigerant space 741 of the first downstream tank portion 740a flows into refrigerant tubes 16a of the downstream heat exchange portion 72 and flows through the refrigerant tubes 16a from the upper side to the lower side of the drawing Refrigerant flowing out of the refrigerant tubes 16a of the downstream heat exchange portion 72 collects in the second downstream refrigerant space of the second downstream tank portion 740b, and then flows out of the second downstream refrigerant space through the refrigerant outflow pipe 165

In the heat exchanger 70 of the present embodiment, as shown in the schematic perspective diagram of FIG 20, coolant flows into the first upstream coolant space of the second upstream tank portion 730b through the coolant inflow pipe 434 The coolant in the first coolant space of the second upstream tank portion 730b flows into coolant tubes 43a of the upstream heat exchange portion 71 and flows through the coolant tubes 43a from the lower side to the upper side of the drawing

Coolant flowing out of the coolant tubes 43a of the upstream heat exchange portion 71 collects in an upstream coolant space 731 of the first upstream tank portion 730a The coolant flows from the right side to the left side of the drawing in the upstream coolant space 731 of the first upstream tank portion 730a.

The coolant in the upstream coolant space 731 of the first upstream tank portion 730a flows into coolant tubes 43a of the upstream heat exchange portion 71 and flows through the coolant tubes 43a from the upper side to the lower side of the drawing Coolant flowing out of the coolant tubes 43a of the upstream heat exchange portion 71 collects in the second upstream coolant space of the second upstream tank portion 730b, and then flows out of the second upstream coolant space through the coolant outflow pipe 435

In the present embodiment, all refrigerant flowing into the second upstream tank portion 730b through the refrigerant inflow pipe 164 passes through the refrigerant tubes 16a of the upstream heat exchange portion 71 without flowing into the refrigerant tubes of the downstream heat exchange portion 72 Accordingly, refrigerant can be made to flow surely into the refrigerant tubes 16a of the upstream heat exchange portion 71 Therefore, heat exchange between refrigerant and outside air can be performed certainly in the upstream heat exchange portion 71

In case of a heat exchanger 70 in which refrigerant from the refrigerant inflow pipe164 branches into the refrigerant tubes 16a of the upstream heat exchange portion 71 and the refrigerant tubes 16a of the downstream heat exchange portion 72, flow rates of refrigerant distributed to the refrigerant tubes 16a of the upstream heat exchange portion 71 and the refrigerant tubes 16a of the downstream heat exchange portion 72 are fixed because of influence of heat of coolant flowing in the coolant tubes 43a

Thus, when a heat exchange amount between refrigerant flowing in the refrigerant tubes 16a of the upstream heat exchange portion 71 and outside air becomes small, devolatilization of refrigerant becomes difficult in the refrigerant tubes 16a of the upstream heat exchange portion 71, and pressure loss of refrigerant in the refrigerant tubes 16a of the upstream heat exchange portion 71 becomes large Accordingly, most refrigerant may flows into the refrigerant tubes 16a of the downstream heat exchange portion 72

In contrast, in a case where all refrigerant from the refrigerant inflow pipe 164 flows into the refrigerant tubes 16a of the upstream heat exchange portion 71 without flowing into the refrigerant tubes 16a of the downstream heat exchange portion 72 as in the heat exchanger 70 of the present embodiment, it can be restricted that most refrigerant flows into the refrigerant tubes 16a of the downstream heat exchange portion 72

Furthermore, in the present embodiment, a flow direction of refrigerant flowing in the refrigerant tubes 16a immediately after inflow of the refrigerant from an exterior of the heat exchanger 70 through the refrigerant inflow pipe 164 is the same as a flow direction of coolant flowing in the coolant tubes 43a immediately after inflow of the coolant from an exterior of the heat exchanger 70 through the coolant inflow pipe 434 Therefore, a performance of the heat exchanger 70 can be improved

### (Eighth Embodiment)

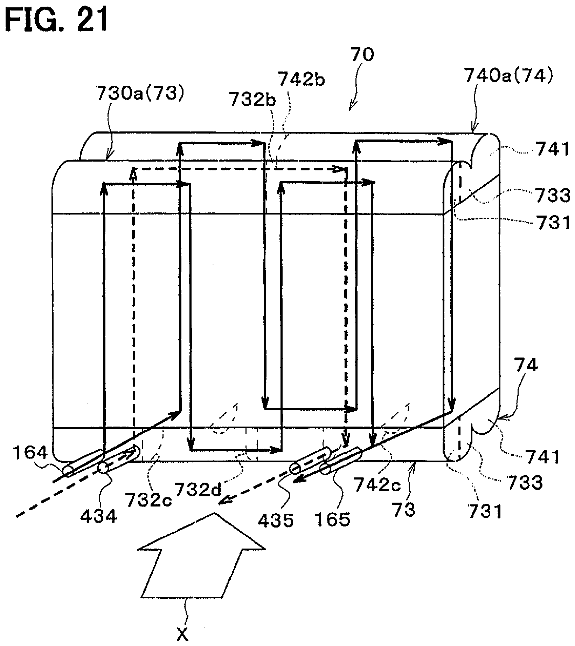

Next, an eighth embodiment of the present disclosure will be described with reference to FIG 21 The eighth embodiment is different from the above-described seventh embodiment in refrigerant flow in the heat exchanger 70

As shown in FIG 21, a first upstream partition member 732b is located in a first upstream tank portion 730a, and separates an upstream refrigerant space 733 into two spaces that align in a longitudinal direction of the first upstream tank portion 730a.

Two second upstream partition members 732c are located in a second upstream tank portion 730b, and separate an upstream refrigerant space 733 into three spaces that align in a longitudinal direction of the second upstream tank portion 730b The two second upstream partition members 732c are arranged to be distant from each other A third upstream partition member 732d is located in the second upstream tank portion 730b, and separates an upstream coolant space 731 into two spaces that align in the longitudinal direction of the second upstream tank portion 730b

A first downstream partition member 742b is located in a first downstream tank portion 740a, and separates a downstream refrigerant space 741 into two spaces that align in a longitudinal direction of the first downstream tank portion 740a

Two second downstream partition members 742c are located in a second downstream tank portion 740b, and separates a downstream refrigerant space 741 into three spaces that align in a longitudinal direction of the second downstream tank portion 740b The two second downstream partition members 742c are arranged to be distant from each other

One of the three spaces of the upstream coolant space 731 partitioned by the third upstream partition members 732d, which is located on one end side (left side of the drawing) of the second upstream tank portion 730b in the longitudinal direction of the second upstream tank portion 730b, is referred to as a first upstream coolant space Another of the three spaces of the upstream coolant space 731, which is located on the other end side (right side of the drawing) of the second upstream tank portion 730b in the longitudinal direction of the second upstream tank portion 730b, is referred to as a second upstream coolant space

The three spaces of the upstream refrigerant space 733, which are partitioned by the second upstream partition members 732c, are referred to as a first upstream refrigerant space, a second upstream refrigerant space and a third upstream refrigerant space in order from one end side (left side of the drawing) in the longitudinal direction of the second upstream tank portion 730b

The three spaces of the downstream refrigerant space 741, which are partitioned by the second downstream partition members 742c, are referred to as a first downstream refrigerant space, a second downstream refrigerant space and a third downstream refrigerant space in order from one end side (left side of the drawing) in the longitudinal direction of the second downstream tank portion 740b

The first upstream coolant space communicates with a coolant inflow pipe 434, and the second upstream coolant space communicates with a coolant outflow pipe 435 The first upstream refrigerant space communicates with a refrigerant inflow pipe 164, and the third upstream refrigerant space communicates with a refrigerant outflow pipe 165

Thus, in the heat exchanger 70 of the present embodiment, as shown in the schematic perspective diagram of FIG 21, refrigerant flows into the first upstream refrigerant space of the second upstream tank portion 730b through the refrigerant inflow pipe 164 A part of the refrigerant in the first upstream refrigerant space of the second upstream tank portion 730b flows into refrigerant tubes 16a of an upstream heat exchange portion 71. The refrigerant flows in the upstream heat exchange portion 71 along an approximately M-shape, and collects in the third upstream refrigerant space of the second upstream tank portion 730b

The other part of the refrigerant flowing into the first upstream refrigerant space of the second upstream tank portion 730b through the refrigerant inflow pipe 164 flows into the first downstream refrigerant space of the second downstream tank portion 740b through a communication space 76 The refrigerant in the first downstream refrigerant space of the second downstream tank portion 740b flows into refrigerant tubes 16a of the downstream heat exchange portion 72 The refrigerant flows in the downstream heat exchange portion 72 along an approximately M-shape, and collects in the third downstream refrigerant space of the second downstream tank portion 740b The refrigerant in the third downstream refrigerant space of the second downstream tank portion 740b flows into the third upstream refrigerant space of the second upstream tank portion 730b through a communication space 76

The refrigerant in the third upstream refrigerant space of the second upstream tank portion 730b flows out through the refrigerant outflow pipe 165

If the upstream heat exchange portion 71 is different from the downstream heat exchange portion 72 in heat exchange amount, refrigerant flowing in the upstream heat exchange portion 71 may include liquid refrigerant more than gas refrigerant, and refrigerant flowing in the downstream heat exchange portion 72 may include gas refrigerant more than liquid refrigerant In this case, if the liquid-rich refrigerant in the upstream heat exchange portion 71 and the gas-rich refrigerant in the downstream heat exchange portion 72 are mixed with each other in the middle of the heat exchange portions 71 and 72, the liquid-rich refrigerant and the gas-rich refrigerant may not mixed with each other homogeneously The inhomogeneous mixture may thereby flow into the heat exchange portions 71 and 72 As a result, a performance of the heat exchanger 70 may possibly decrease

In contrast, in the present embodiment, refrigerant flowing into the first upstream refrigerant space of the second upstream tank portion 730b through the refrigerant inflow pipe 164 branches into two flows that are a refrigerant flow in the upstream heat exchange portion 71 and a refrigerant flow in the downstream heat exchange portion 72 The branched two refrigerant flows meet in the third downstream refrigerant space of the second downstream tank portion 740b without joining together in the heat exchange portions 71 and 72 The refrigerant joined in the third downstream refrigerant space flows out through the refrigerant outflow pipe 165

Hence, the refrigerant flow in the upstream heat exchange portion 71 and the refrigerant flow in the downstream heat exchange portion 72, which are branched in a most upstream portion in a refrigerant flow direction, can be prevented from joining together in the middle of the heat exchange portions 71 and 72 Accordingly, decrease in performance of the heat exchanger 70, due to the joining of the refrigerant flows of the heat exchange portions 71 and 72 in the middle of the heat exchange portions 71 and 72, can be prevented

In the present embodiment, a flow direction of refrigerant immediately before flowing out of the refrigerant tubes 16a through the refrigerant outflow pipe 165 to an exterior of the heat exchanger 70 is the same as a flow direction of coolant immediately before flowing out of the coolant tubes 43a through the coolant outflow pipe 435 to an exterior of the heat exchanger 70 Therefore, a performance of the heat exchanger 70 can be improved

### (Ninth Embodiment)

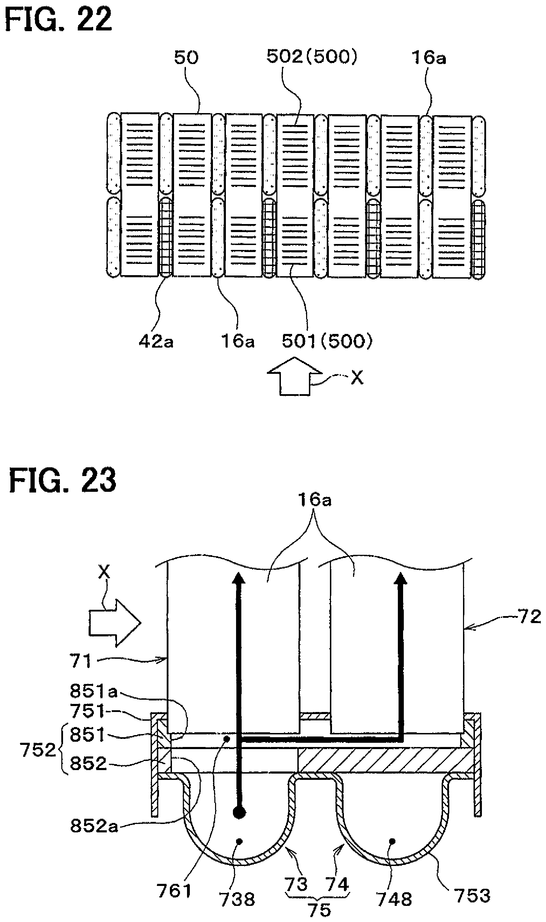

Next, a ninth embodiment of the present disclosure will be described with reference to FIG 22 The present embodiment is different from the above-described first embodiment in that louvers are formed in the outer fins In FIG. 22, refrigerant tubes 16a are shown by dot hatching, and coolant tubes 43a are shown by cross hatching, for clarification of the drawing

As shown in FIG 22, multiple louvers 500 having louver-window shapes are formed on a surface of an outer fin 50 and arranged in a flow direction of outside air The louvers 500 are formed by cutting and raising a part of the surface of the outer fin 50. The outer fin 50 includes louvers 500 (hereinafter, referred to as upstream louvers 501) formed in a portion located between a refrigerant tube 16a of an upstream heat exchange portion 71 and a coolant tube 43a of the upstream heat exchange portion 71 that are adjacent to each other, and louvers 500 (hereinafter, referred to as downstream louvers 502) formed in a position located between adjacent two refrigerant tubes 16a of a downstream heat exchange portion 72 The upstream louvers 501 are different from the downstream louvers 502 in shape

"The shapes of the louvers 500 are different" means that the upstream louvers 501 are different from the downstream louvers 502 in various points, such as an angle and a length of the louver 500 cut and raised, or louver pitch Specifically, in the present embodiment, lengths of the upstream louvers 501 are shorter than lengths of the downstream louvers 502, and the number of the upstream louvers 501 is smaller than the number of the downstream louvers

In the present embodiment, the outer fin 50, in which the upstream louvers 501 are different in shape from the downstream louvers 502, is used Thus, heat exchange amounts among three kinds of fluids: refrigerant, coolant and outside air can be adjusted easily in the heat exchanger 70 as a whole

Two kinds of tubes that are the refrigerant tubes 16a and the coolant tubes 43a are connected to the upstream heat exchange portion 71 Hence, heat strain may be generated in the outer fins 50 due to a temperature difference between refrigerant flowing in the refrigerant tubes 16a and coolant flowing in the coolant tubes 43a Accordingly, the outer fins 50 may be broken

In the heat exchanger 70 of the present embodiment, the lengths of the upstream louvers 501 are shorter than the lengths of the downstream louvers 502 and the number of the upstream louvers 501 is smaller than the number of the downstream louvers Therefore, the portion of the outer fine 50 located between the refrigerant tube 16a and the coolant tube 43a that are adjacent to each other can be enhanced in stiffness Accordingly, the breakage of the outer fins 50 can be limited

### (Tenth Embodiment)

Next, a tenth embodiment of the present disclosure will be described with reference to FIGS 23 to 25 In the tenth embodiment, the middle plate member 752 of the above-described first embodiment is changed to have a stacked structure of multiple plate members

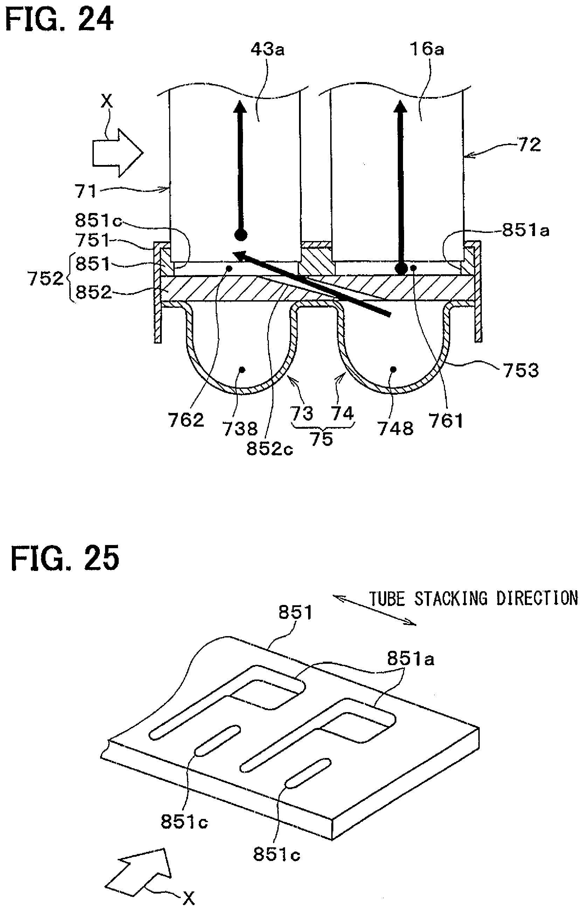

As shown in FIGS 23 and 24, an upstream tank portion 73 includes an upstream refrigerant space 738 which collects or distributes refrigerant that flows through refrigerant tubes 16a A downstream tank portion 74 includes a downstream coolant space 748 which collects or distributes coolant that flows through coolant tubes 43a of a upstream heat exchange portion 71

A middle plate member 752 is formed by stacking two plate members that are a first communication-space forming plate member 851 and a second communication-space forming plate member 852

In the cross sectional surface in FIG 23, the first communication-space forming plate member 851 includes a through hole 851a communicating with both the refrigerant tubes 16a of the upstream heat exchange portion 71 and refrigerant tubes 16a of a downstream heat exchange portion 72

As shown in FIG. 25, a part of the through hole 851a of the first communication-space forming plate member 851, which corresponds to positions of the refrigerant tubes 16a of the downstream heat exchange portion 72, extends in a tube stacking direction The through hole 851a connects adjacent two of the refrigerant tubes 16a of the downstream heat exchange portion 72 In other words, the through hole 851a of the first communication-space forming plate member 851 communicates in total with three refrigerant tubes 16a that includes one of the refrigerant tubes 16a of the upstream heat exchange portion 71 and adjacent two of the refrigerant tubes 16a of the downstream heat exchange portion 72

In the cross-sectional surface in FIG 23, the second communication-space forming plate member 852 includes a through hole 852a at a position corresponding to the upstream refrigerant space 738 The through hole 852a extends through the second communication-space forming plate member 852 from its one side to the other side

Accordingly, the refrigerant tubes 16a of the upstream heat exchange portion 71 and the refrigerant tubes 16a of the downstream heat exchange portion 72 communicate with the upstream refrigerant space 738 through the through hole 851a of the first communication-space forming plate member 851 and the through hole 852a of the second communication-space forming plate member 852 In other words, the through hole 851a of the first communication-space forming plate member 851 and the through hole 852a of the second communication-space forming plate member 852 provide a refrigerant communication space 761 (corresponding to a first communication passage) through which the refrigerant tubes 16a communicate with the upstream refrigerant space 738

In the cross-sectional surface in FIG 24, the first communication-space forming plate member 851 includes a through hole 851c communicating with the coolant tube 43a of the upstream heat exchange portion 71 The second communication-space forming plate member 852 includes a through hole 852c extending through the second communication space forming plate member 852 from its one side to the other side The through hole 852c communicates with both the through hole 851c of the first communication-space forming plate member 851 and the downstream coolant space 748

Accordingly, the coolant tube 43a of the upstream heat exchange portion 71 communicates with the downstream coolant space 748 through the through hole 851c of the first communication-space forming plate member 851 and the through hole 852c of the second communication-space forming plate member 852 In other words, the through hole 851c of the first communication-space forming plate member 851 and the through hole 852c of the second communication-space forming plate member 852 provide a coolant communication space 762 (corresponding to a second communication passage) through which the coolant tube 43a communicates with the downstream coolant space 748.

According to the present embodiment, the through holes 851a and 851c of the first communication-space forming plate member 851 and the through holes 852a and 852c of the second communication-space forming plate member 852 can be formed by simple hole drilling. Therefore, manufacturing is easy as compared to a case in which the recessed portion 752a is formed in the middle plate member 752 as in the above-described first embodiment

Additionally, in the present embodiment, the through hole 851a of the first communication-space forming plate member 851 is formed such that a refrigerant tube 16a of the downstream heat exchange portion 72, which is overlapped with a refrigerant tube 16a in the flow direction of outside air, communicates with a refrigerant tube 16a (hereinafter, referred to as an adjacent refrigerant tube 16a) that is adjacent to the refrigerant tube 16a of the downstream heat exchanged portion 72 in the tube stacking direction According to this, a pressure loss of refrigerant decreases as compared to a case in which refrigerant flows to the adjacent refrigerant tube 16a through an inside space of the tank portion 73 or 74. As a result, a flow rate of refrigerant flowing in the refrigerant tube 16a of the downstream heat exchange portion 72, which is overlapped with a refrigerant tube 16a in the flow direction of outside air, can be made to approach a flow rate of refrigerant flowing in the adjacent refrigerant tube 16a

### (Eleventh Embodiment)

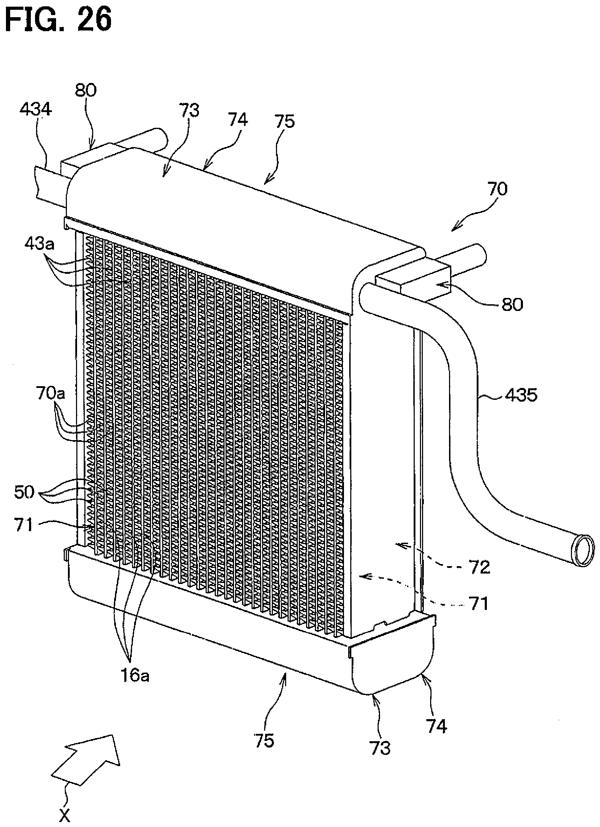

Next, an eleventh embodiment of the present disclosure will be described with reference to FIGS. 26 to 29 The eleventh embodiment is different from the above-described first embodiment in that a connector 80 connecting a heat exchanger 70 and a refrigerant pipe is provided. The connector 80 corresponds to a connector portion described in the scope of claims.

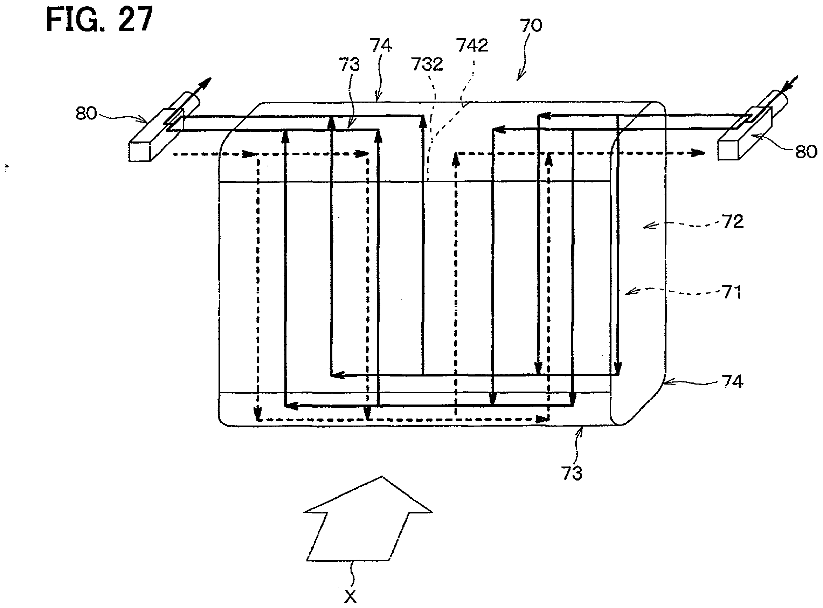

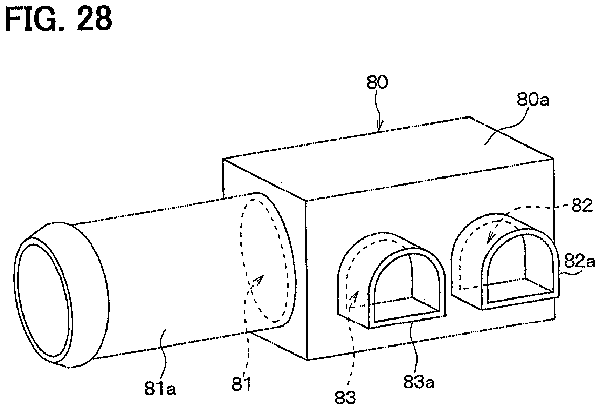

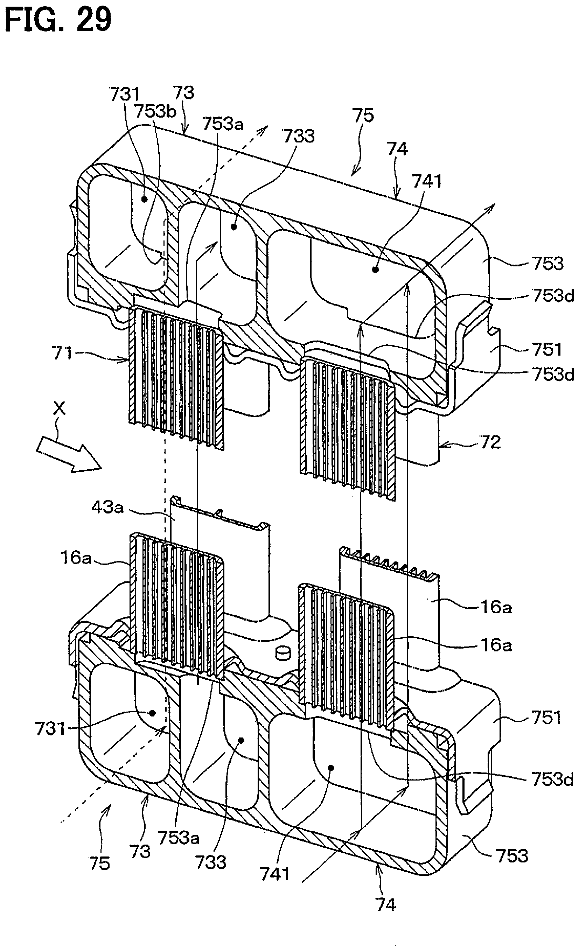

FIG 26 is an external perspective view showing a heat exchanger 70 according to the eleventh embodiment, and FIG 27 is a schematic perspective diagram illustrating flows of refrigerant and coolant in the heat exchanger 70 FIG 28 is an external perspective view of the connector 80, and FIG. 29 is a perspective sectional diagram of the heat exchanger 70 In FIG. 27, the flow of refrigerant is shown by solid arrows, and the flow of coolant is shown by dashed arrows

As shown in FIG 26, the connector 80 is provided on a refrigerant inlet side and a refrigerant outlet side of a header tank 75.. The connector 80 is a connection part connecting from an upstream heat exchange portion 71 and a downstream heat exchange portion 72 of the heat exchanger 70 to the refrigerant pipe. The connector 80 is made of the same metallic material as that of the header tank 75, and is integrated with the heat exchanger 70 by brazing

The connector 80 on the refrigerant inlet side of the header tank 75, located on the right side of FIG 26, branches a refrigerant flow from a single refrigerant pipe inside the connector 80, and distributes the refrigerant to an upstream tank portion 73 and a downstream tank portion 74

The connector 80 on the refrigerant outlet side of the header tank 75, located on the left side of FIG 26, collects refrigerants flowing out of the upstream tank portion 73 and the downstream tank portion 74 inside the connector 80, and conveys the refrigerant to a single refrigerant pipe

In the present embodiment, refrigerant in the upstream tank portion 73 and refrigerant in the downstream tank portion 74 flow in the upstream heat exchange portion 71 and the downstream heat exchange portion 72, respectively, as shown by the solid arrows of FIG 27

As shown in FIG. 28, the connector 80 has an upstream heat exchange portion connection port 82 and a downstream heat exchange portion connection port 83 with respect to a single pipe connection port 81

The pipe connection port 81 is a connection port connected to the refrigerant pipe, and is an opening portion provided in a connector main body portion 80a The pipe connection port 81 is an inside space of a pipe side cylindrical portion 81a connected to the connector main body portion 80a

The upstream heat exchange portion connection port 82 is a connection port connected to the upstream tank portion 73 The upstream heat exchange portion connection port 82 is an opening portion provided in the connector main body portion 80a, and is an inside space of a heat exchanger side cylindrical portion 82a connected to the connector main body portion 80a

The downstream heat exchange portion connection port 83 is a connection port connected to the downstream tank portion 74 The downstream heat exchange portion connection port 83 is an opening portion provided in the connector main body portion 80a, and is an inside space of a heat exchanger side cylindrical portion 83a connected to the connector main body portion 80a

A flow passage, not shown in the drawing, extending from the pipe connection port 81 to the upstream heat exchange portion connection port 82 and the downstream heat exchange portion connection port 83 is formed inside the connector main body portion 80a.

The structure of the heat exchanger 70 other than the connector 80 is, as shown in FIG 29, different from the header tank 75 of the third embodiment shown in FIG. 12 in that the communication space 76 is omitted and the other parts are the same In the example shown in FIG 29, since the communication space 76 is omitted, an upstream coolant space 731, an upstream refrigerant space 733 and a downstream refrigerant space 741 that are formed inside the header tank 75 are larger than those of the heat exchanger 70 of FIG 12.

Since the connector 80 is connected to the upstream tank portion 73, the upstream refrigerant space 733 formed in the upstream tank portion 73 communicates with the upstream heat exchange portion connection port 82 of the connector 80, and the downstream refrigerant space 774 formed in the downstream tank portion 74 communicates with the downstream heat exchange portion connection port 83 of the connector 80

In the second and third embodiments, as shown in FIGS 11 and 12, the communication space 76 is formed inside the header tank 75 such that refrigerant flows between the upstream heat exchange portion 71 and the downstream heat exchange potion 72.

In contrast, in the present embodiment, refrigerant is branched inside the connector 80 on the refrigerant inlet side, and the branched refrigerants flow in the upstream tank portion 73 and the downstream tank portion 74, respectively Additionally, refrigerants flows out of the upstream tank portion 73 and the downstream tank portion 74, respectively, and the refrigerants gather together inside the connector 80 on the refrigerant outlet side Therefore, refrigerant need not flow between the upstream heat exchange portion 71 and the downstream heat exchange portion 72, and the above-described communication space 76 can be omitted

As a result, according to the present embodiment, internal structures of the upstream tank portion 73 and the downstream tank portion 74 can be simplified as compared to the second and third embodiments.

Unlike the present embodiment, two refrigerant pipes may be connected to the upstream tank portion 73 or the downstream tank portion 74, and the two refrigerant pipes may be connected to a single refrigerant pipe via a connection portion Also in this case, the above-described refrigerant flow can be provided. However, according to the present embodiment, two refrigerant pipes need not be connected to the header tank 75 because the connector 80 is directly connected to the header tank 75

### (Twelfth Embodiment)

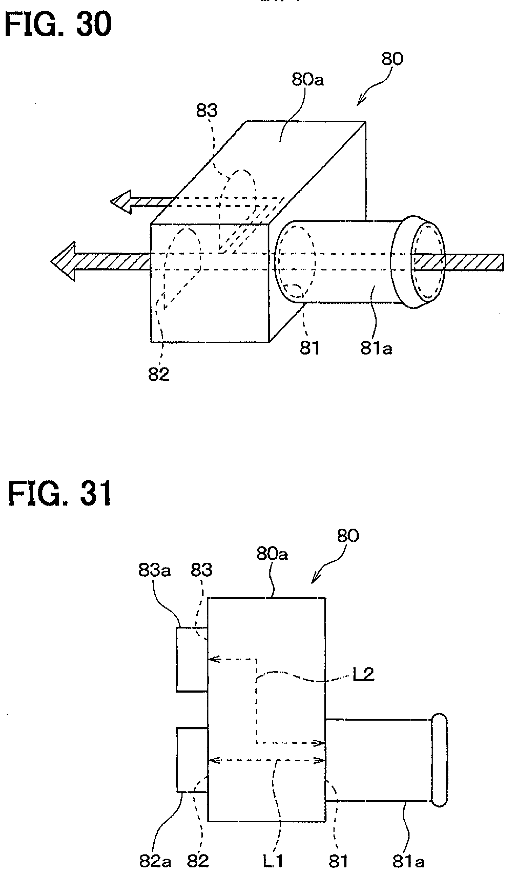

Next, a twelfth embodiment of the present disclosure will be described with reference to FIGS 30 and 31 The twelfth embodiment is different from the above-described eleventh embodiment in shape of connector 80 FIG 30 is an external perspective diagram showing a connector 80 according to the twelfth embodiment, and FIG 31 is a top view of the connector 80.

As shown in FIGS 30 and 31, the connector 80 of the present embodiment has a piping connection port 81 on a face of a connector main body portion 80a which is opposite from its another face on that an upstream heat exchange portion connection port 82 and a downstream heat exchange portion connection port 83 are provided.

The piping connection pipe 81 is located at a position where a distance L1 from the piping connection pipe 81 to the upstream heat exchange portion connection port 82 is shorter than a distance L2 from the piping connection pipe 81 to the downstream heat exchange portion connection port 83. The lengths L1 and L2 are lengths of refrigerant passages inside the connector main body portion 80a

Accordingly, in the connector 80, when refrigerant flows into the connector 80 through the piping connection port 81, a flow rate of refrigerant flowing out through the upstream heat exchange portion connection port 82 can be made to be higher than a flow rate of refrigerant flowing out through the downstream heat exchange portion connection port 83.

According to experimental results of the inventors, it is known that a performance of the heat exchanger 70 is improved by setting a flow rate of refrigerant flowing into the upstream heat exchange portion 71 higher than a flow rate of refrigerant flowing into the downstream heat exchange portion 72

By using the connector 80 of the present embodiment, it can be easily achieved that a flow rate of refrigerant flowing into the upstream heat exchange portion 71 is higher than a flow rate of refrigerant flowing into the downstream heat exchange portion 72.

Contrary to the present embodiment, the piping connection pipe 81 may be located at a position where the distance L1 from the piping connection pipe 81 to the upstream heat exchange portion connection port 82 is longer than the distance L2 from the piping connection pipe 81 to the downstream heat exchange portion connection port 83 Accordingly, when refrigerant flows into the connector 80 through the piping connection port 81, a flow rate of refrigerant flowing out of the connector 80 through the upstream heat exchange portion connection port 82 can be made to be higher than a flow rate of refrigerant flowing out of the connector 80 through the downstream heat exchange portion connection port 83

Since the distances L1 and L2 from the piping connection port 81 to the upstream and downstream heat exchange portion connection ports 82 and 83 are different from each other in the connector 80, flow rates of refrigerant distributed to the upstream and downstream heat exchange portion 71 and 72 can be adjusted easily

### (Thirteenth Embodiment)

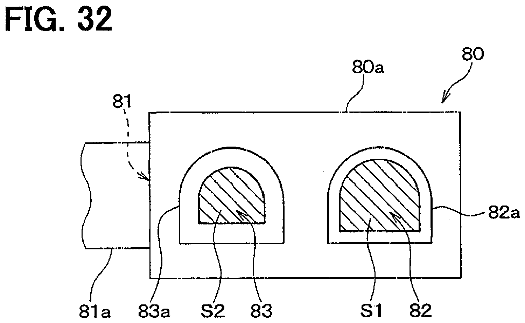

Next, thirteenth embodiment of the present disclosure will be described referring to FIG. 32. The thirteenth embodiment is different from the above-described eleventh embodiment in shape of connector 80 FIG. 32 is a front view of a connector 80 of the present embodiment on its side attached to a heat exchanger 70 The wavy lines regions S1 and S2 indicate opening regions of upstream and downstream heat exchange portion connection ports 82 and 83, respectively.

As shown in FIG 32, in the connector 80 of the present embodiment, the opening area S1 of the upstream heat exchange portion connection port 82 is larger than the opening area S2 of the downstream heat exchange portion connection port 83

Accordingly, in the connector 80, when refrigerant flows into the connector 80 through a piping connection port 81, a flow rate of refrigerant flowing out through the upstream heat exchange portion connection port 82 can be made to be higher than a flow rate of refrigerant flowing out through the downstream heat exchange portion connection port 83

In the connector 80 of the twelfth embodiment, the piping connection port 81 needs to be located near the upstream heat exchange portion 71 in order to set the flow rate of refrigerant flowing into the upstream heat exchange portion 71 higher than the flow rate of refrigerant flowing into the downstream heat exchange portion 72. Necessarily, the position of the refrigerant pipe becomes near to the coolant pipe

When the refrigerant pipe is desired to be kept away from the coolant pipe, it can be achieved by using the connector 80 of the present embodiment that a flow rate of refrigerant flowing into the upstream heat exchange portion 71 is higher than a flow rate of refrigerant flowing into the downstream heat exchange portion 71 while the refrigerant pipe is kept away from the coolant pipe

Contrary to the present embodiment, the opening area S1 of the upstream heat exchange portion connection port 82 may be smaller than the opening area S2 of the downstream heat exchange portion connection port 83. Accordingly, when refrigerant flows into the connector 80 through the piping connection port 81, a flow rate of refrigerant flowing out of the connector 80 through the upstream heat exchange portion connection port 82 can be made to be higher than a flow rate of refrigerant flowing out of the connector 80 through the downstream heat exchange portion connection port 83.

Since the opening areas S1 and S2 of the upstream and downstream heat exchange portion connection ports 82 and 83 are different from each other in the connector 80, flow rates of refrigerant distributed to the upstream and downstream heat exchange portion 71 and 72 can be adjusted easily.

The present embodiment and the twelfth embodiment can be combined. That is, in the connector 80, a flow rate of refrigerant flowing out of the connector 80 through the upstream heat exchange portion connection port 82 can be differentiated from a flow rate of refrigerant flowing out of the connector 80 through the downstream heat exchange portion connection port 83 by differentiating the length L1 and L2 from the piping connection port 81 to the upstream and downstream heat exchange portion connection ports 82 and 83 and by differentiating the opening areas S1 and S2 of the upstream and downstream heat exchange portion connection ports 82 and 83.

The heat exchangers 70 of the present embodiment and the eleventh and twelfth embodiments may be applied to the heat pump cycle 10 of the fourteenth embodiment.

### (Other Embodiments)

The present disclosure is not limited to the above-described embodiments and can be modified variedly without departing from the scope of the present disclosure as described below.
(1) In the above-described embodiments, an example is described, in which the upstream number ratio that is a ratio of the number of the refrigerant tubes 16a to the total number of the refrigerant tubes 16a and the coolant tubes 43a in the upstream heat exchange portion 71 is made to be smaller than the downstream number ratio that is a ratio of the number of the refrigerant tubes 16a to the total number of the refrigerant tubes 16a in the downstream heat exchange portion 72. The present disclosure is not limited to this, and the upstream number ratio may be made to be higher than the downstream number ratio.
(2) In the above-described embodiments, an example is described, in which the refrigerant tubes 16a and the coolant tubes 43a are arranged alternately in the upstream heat exchange portion 71, but arrangement of the refrigerant tubes 16a and the coolant tubes 43a is not limited
   For example, in the upstream heat exchange portion 71, the coolant tube 43a may be arranged between every second and third coolant tubes 16a In other words, in the upstream heat exchange portion 71, two refrigerant tubes 16a may be arranged between adjacent two coolant tubes 43a
   According to this, the upstream number ratio that is a ratio of the number of the refrigerant tubes 16a to the total number of the refrigerant tubes 16a and the coolant tubes 43a in the upstream heat exchange portion 71 can be increased Therefore, in the upstream heat exchange portion 71, a heat exchange amount between refrigerant and outside air can be ensured more certainly.
(3) In the above-described first embodiment, an example is described, in which refrigerant of the heat pump cycle 10 is used as the first fluid, coolant of the coolant circulation circuit 40 is used as the second fluid, and outside air blown by the blast fan 17 is used as the third fluid. The first to third fluids are not limited to these For example, as in the third embodiment, air that is to be blown into the vehicle compartment may be used as the third fluid Alternatively, the third fluid may be coolant.

For example, the first fluid may be high pressure refrigerant or low pressure refrigerant in the heat pump cycle 10

For example, the second fluid may be coolant which cools electric devices such as an inverter that supplies electric power to the engine or the running electric motor MG. Alternatively, an oil for cooling may be used as the second fluid, and the second heat exchange portion may function as an oil cooler. A heat storage material or a cooling storage material may be used as the second fluid

Moreover, for example, when the heat pump cycle 10, for which the heat exchanger 70 of the present disclosure is used, is used for a stationary air conditioner, a cool storage or a cooling-heating device for an automatic vending machine, the second fluid may be coolant which cools an electric motor, other electric devices or the engine used as a drive source of the compressor of the heat pump cycle 10.

In the above-described embodiments, an example is described, in which the heat exchanger 70 of the present disclosure is used for a heat pump cycle (refrigeration cycle).

For example, the heat exchanger 70 can be applied to a heat exchanger used for a vehicle cooling system. The first fluid may be a heat medium that has absorbed heat from a first in-vehicle device which generates heat during its operation. The second fluid may be a heat medium that has absorbed heat from a second in-vehicle device which generates heat during its operation. The third fluid may be outside air.

More specifically, when the heat exchanger 70 is used for a hybrid vehicle, the first in-vehicle device may be an engine EG, and the first fluid may be coolant of the engine EG. Additionally, the second in-vehicle device may be a running electric motor, and the second fluid may be coolant of the running electric motor.

Since heat generation amounts of these in-vehicle devices changes depending on a running state (running load) of the vehicle, also a temperature of coolant of the engine EG and a temperature of coolant of the vehicle-running electric vehicle change depending on the running state of the vehicle. Therefore, in this example, a heat amount generated by an in-vehicle device having a high capacity in heat generation can be radiated not only to air but also to an in-vehicle device having a low capacity in heat generation.

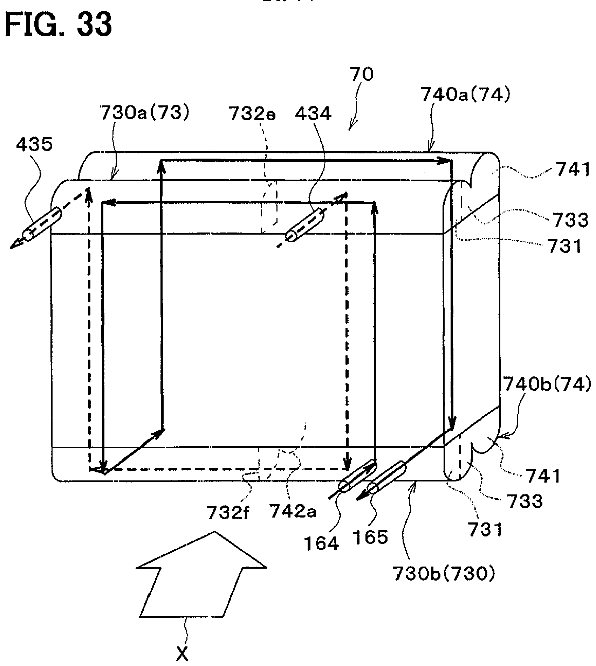

For example, an exhaust-gas recirculation device, a turbocharger, a power steering device or a battery may be used as the first in-vehicle device or the second in-vehicle device. The heat exchange portion may function as an EGR cooler, an intercooler or an oil cooler that is for cooling power steering oil
(4) In the above-described embodiments, an example is described, in which the electric three-way valve 42 is used as the circuit switching device that switches the cooling medium circuit of the coolant circulation circuit 40 However, the circuit switching device is not limited to this For example, a thermostat valve may be used as the circuit switching device. The thermostat valve is a cooling-medium temperature reaction valve having a mechanical mechanism which opens or closes a cooling medium passage by displacing a valve element with using a thermowax (temperature sensitive member) that changes its volume depending on its temperature. Hence, by using the thermostat valve, the coolant temperature sensor 52 can be omitted
   In the above-described embodiments, an example is described, in which a general fluorocarbon refrigerant is used as refrigerant, but the type of refrigerant is not limited to this A natural refrigerant such as carbon dioxide or a hydrocarbon refrigerant may be used Additionally, the heat pump cycle 10 may configure a subcritical refrigeration cycle in which a pressure of refrigerant discharged from the compressor 11 is higher than or equal to a critical pressure of the refrigerant
(6) In the above-described seventh embodiment, an example is described, in which a flow direction of refrigerant flowing in the refrigerant tubes 16a immediately after inflow of the refrigerant from an exterior of the heat exchanger 70 through the refrigerant inflow pipe 164 is the same as a flow direction of coolant flowing in the coolant tubes 43a immediately after inflow of the coolant from an exterior of the heat exchanger 70 through the coolant inflow pipe 434. However, flow directions of refrigerant and coolant are not limited to this
   For example, as shown in FIG. 33, the coolant inflow pipe 434 and the coolant outflow pipe 435 may be connected to the first upstream tank portion 740a, and coolant may flow in the upstream heat exchange potion 71 along an approximately U shape
   Specifically, a first upstream partition member 732e is arranged in the first upstream tank portion 730a and separates the upstream coolant space 731 into two spaces that align in the longitudinal direction of the first upstream tank portion 730a. A second upstream partition member 732f is arranged in the second upstream tank portion 730b and separates the upstream refrigerant space 733 into two spaces that align in the longitudinal direction of the second upstream tank portion 730b
   One of the two spaces of the upstream coolant space 731 partitioned by the first upstream partition member 732e communicates with the coolant inflow pipe 434 The other of the two spaces of the upstream coolant space 731 partitioned by the first upstream partition member 732e communicates with the coolant outflow pipe 435
(7) In the above-described seventh embodiment, an example is described, all refrigerant inflowing through the refrigerant inflow pipe 164 flows into the refrigerant tubes 16a of the upstream heat exchange portion 71 Subsequently, the refrigerant flows into the refrigerant tubes 16a of the downstream heat exchange portion 72. However, the flow of refrigerant is not limited to this.

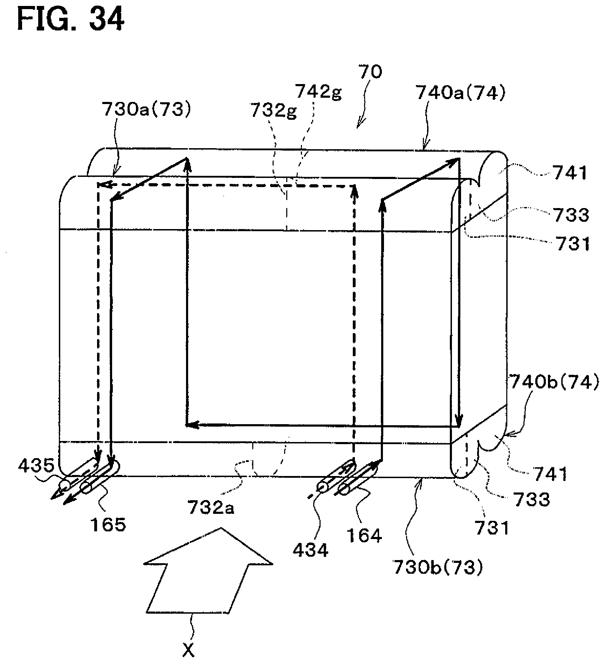

For example, as shown in FIG 34, all refrigerant inflowing through the refrigerant inflow pipe 164 may flow into refrigerant tubes 16a of the upstream heat exchange portion 71 which are located in a region on one side (right side of the paper surface) in the longitudinal direction of the upstream tank portion 73 The refrigerant may flow into the refrigerant tubes 16a of the downstream heat exchange portion 72. Subsequently, the refrigerant may flow into refrigerant tubes 16a of the upstream heat exchange portion 71 which are located in a region on the other side (left side of the paper surface) in the longitudinal direction of the upstream tank portion 73

Specifically, a first upstream partition member 732a is arranged in a second upstream tank portion 730b The first upstream partition member 732a separates the upstream coolant space 731 into two spaces that align in the longitudinal direction of the second upstream tank portion 730b. The first upstream partition member 732a separates the upstream refrigerant space 733 into two spaces that align in the longitudinal direction of the second upstream tank portion 730b A second upstream partition member 732g is arranged in the first upstream tank portion 730a and separates the upstream refrigerant space 733 into two spaces that align in the longitudinal direction of the first upstream tank portion 730a A downstream partition member 742g is arranged in the first downstream tank portion 740a and separates the downstream refrigerant space 741 into two spaces that align in the longitudinal direction of the first downstream tank portion 740a .

One of the two spaces of the upstream refrigerant space 733 partitioned by the first upstream partition member 732a communicates with the refrigerant inflow pipe 164 The other of the two spaces of the upstream refrigerant space 733 partitioned by the first upstream partition member 732a communicates with the refrigerant outflow pipe 165

According to the heat exchanger 70 shown in FIG 27, a flow direction of refrigerant flowing in the refrigerant tubes 16a immediately after inflow of the refrigerant from an exterior of the heat exchanger 70 through the refrigerant inflow pipe 164 can be made to be the same as a flow direction of coolant flowing in the coolant tubes 43a immediately after inflow of the coolant from an exterior of the heat exchanger 70 through the coolant inflow pipe 434 Thus, a performance of the heat exchanger 70 can be improved

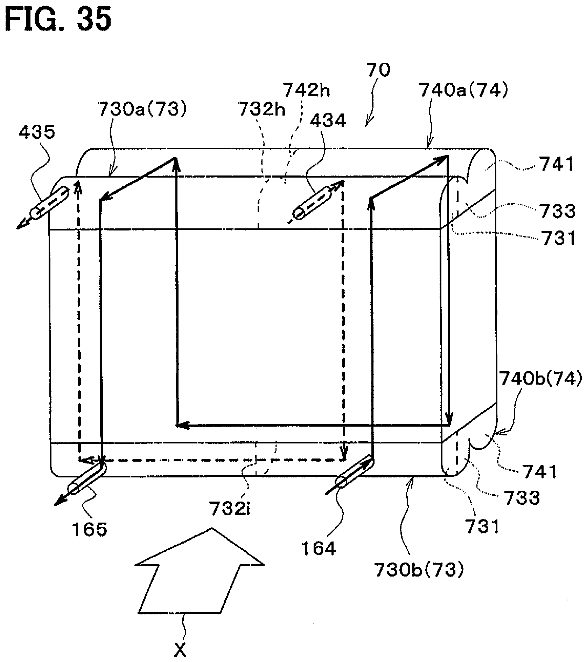

Another example, in which a coolant flow in the heat exchange 70 shown in FIG 34 is modified, is shown in FIG 35

In the heat exchanger 70 shown in FIG 35, the coolant inflow pipe 434 and the coolant outflow pipe 435 are connected to the first upstream tank portion 730a, and coolant flows in the upstream heat exchange portion 71 along an approximately U shape

Specifically, a first upstream partition member 732h is arranged in the first upstream tank portion 730a The first upstream partition member 732h separates the upstream coolant space 731 into two spaces that align in the longitudinal direction of the first upstream tank portion 730a The first upstream partition member 732h separates the upstream refrigerant space 733 into two spaces that align in the longitudinal direction of the first upstream tank portion 730a A second upstream partition member 732i is arranged in the second upstream tank portion 730b and separates the upstream refrigerant space 733 into two spaces that align in the longitudinal direction of the second upstream tank portion 730b

One of the two spaces of the upstream coolant space 731 partitioned by the first upstream partition member 732h communicates with the coolant inflow pipe 434 The other of the two spaces of the upstream coolant space 731 partitioned by the first upstream partition member 732h communicates with the coolant outflow pipe 435

(8) In the above-described eighth embodiment, an example is described, in which a flow direction of refrigerant flowing in the refrigerant tubes 16a immediately before outflow of the refrigerant to an exterior of the heat exchanger 70 through the refrigerant outflow pipe 165 is the same as a flow direction of coolant flowing in the coolant tubes 43a immediately before outflow of the coolant to an exterior of the heat exchanger 70 through the coolant outflow pipe 435 However, flow directions of refrigerant and coolant are not limited to this

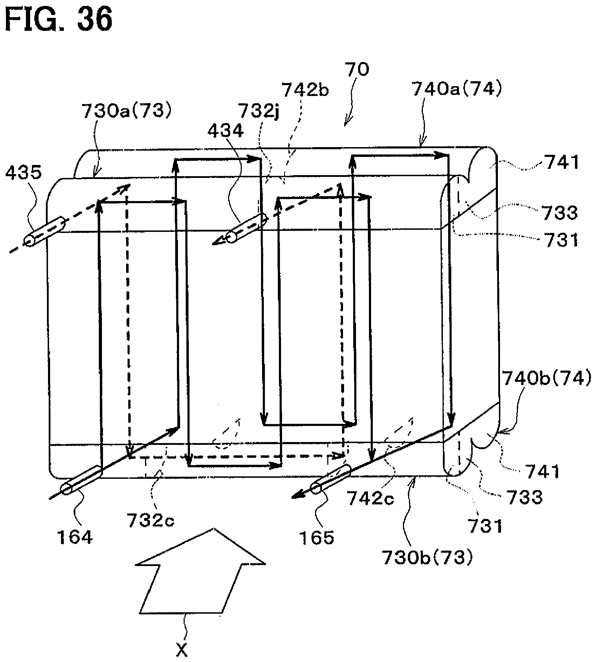

For example, as shown in FIG 36, the coolant inflow pipe 434 and the coolant outflow pipe 435 may be connected to the first upstream tank portion 730a, and coolant may flow in the upstream heat exchange portion 71 along an approximately U shape

Specifically, a first upstream partition member 732j is arranged in the first upstream tank portion 730a. The first upstream partition member 732j separates the upstream coolant space 731 into two spaces that align in the longitudinal direction of the first upstream tank portion 730a The first upstream partition member 732j separates the upstream refrigerant space 733 into two spaces that align in the longitudinal direction of the first upstream tank portion 730a One of the two spaces of the upstream coolant space 731 partitioned by the first upstream partition member 732j communicates with the coolant inflow pipe 434. The other of the two spaces of the upstream coolant space 731 partitioned by the first upstream partition member 732j communicates with the coolant outflow pipe 435

In the above-described tenth embodiment, an example is described, in which the header plate 751, the tank forming member 753, the first communication-space forming plate member 851 and the second communication-space forming plate member 852 are separately provided However, these are not limited to this, and these members 751, 753, 851 and 852 may be integrated

## Claims

1. A vehicle air conditioner comprising:
a heat pump cycle (10) through which a refrigerant circulates as a first fluid;
a coolant circulation circuit (40) through which a coolant circulates as a second fluid, and the coolant circulation circuit including an in-vehicle device (MG, EG) which generates heat during operation; and
a heat exchanger (70) including:
first tubes (16a) connected to the heat pump cycle (10);
second tubes (43a) connected to the coolant circulation circuit (40); and
a heat exchange portion in which tubes including the first tubes (16a) and the second tubes (43a) are stacked, wherein
at least one of the first fluid and the second fluid exchanges heat with air as a third fluid in the heat exchange portion,
spaces between tubes, which are selected from among the first tubes (16a) and the second tubes (43a) and are adjacent to each other, form third fluid passages (70a) through which the third fluid flows,
the heat exchange portion includes an upstream heat exchange portion (71) positioned on an upstream side in a flow direction of the third fluid, and a downstream heat exchange portion (72) positioned downstream of the upstream heat exchange portion (71) in the flow direction of the third fluid,
the tubes of the upstream heat exchange portion (71) consist of both the first tubes (16a) and the second tubes (43a), and
the tubes of the downstream heat exchange portion (72) consist only of the first tubes (16a).

2. The vehicle air conditioner according to claim 1, wherein
the first tubes (16a) and the second tubes (43a) of the upstream heat exchange portion (71) and the first tubes (16a) and the second tubes (43a) of the downstream heat exchange portion (72) include a first portion in which the same type of two tubes are overlapped with each other in the flow direction of the third fluid, and a second portion in which different types of two tubes are overlapped with each other in the flow direction of the third fluid.

3. The vehicle air conditioner according to claim 1 or 2, wherein
a ratio of the number of the first tubes (16a) of the upstream heat exchange portion (71) to the total number of the first tubes (16a) and the second tubes (43a) of the upstream heat exchange portion (71) is different from a ratio of the number of the first tubes (16a) of the downstream heat exchange portion (72) to the total number of the first tubes (16a) and the second tubes (43a) of the downstream heat exchange portion (72).

4. The vehicle air conditioner according to any one of claims 1 to 3, further comprising an outer fin (50) located in the third fluid passage (70a), wherein
the outer fin (50) promotes heat exchange between the first fluid and the third fluid and heat exchange between the second fluid and the third fluid, and
the outer fin (50) is capable of conveying heat between the first fluid flowing through the first tube (16a) and the second fluid flowing through the second tube (43a).

5. The vehicle air conditioner according to any one of claims 1 to 4, wherein
the tubes of the upstream heat exchange portion (71) consist of both the first tubes (16a) and the second tubes (43a), and
the tubes the downstream heat exchange portion (72) consist of the first tubes (16a),
the heat exchanger (70) further comprising:
an upstream tank portion (73) extending in a stacking direction of the first tubes (16a) and the second tubes (43a) of the upstream heat exchange portion (71), the upstream tank portion (73) having an upstream second fluid space (731) which collects or distributes the second fluid that flows through the second tubes (43a);
a downstream tank portion (74) extending in a stacking direction of the first tubes (16a) of the downstream heat exchange portion (72), the downstream tank portion (74) having a downstream first fluid space (741) which collects or distributes the first fluid that flows through the first tubes (16a); and
a communication passage (76, 823, 824, 845) through which the first tubes (16a) of the upstream heat exchange portion (71) communicate with the downstream first fluid space (741).

6. The vehicle air conditioner according to any one of claims 1 to 4, wherein
the tubes of the upstream heat exchange portion (71) consist of both the first tubes (16a) and the second tubes (43a), and
the tubes of the downstream heat exchange portion (72) consist of the first tubes (16a),
the heat exchanger (70) further comprising:
an upstream tank portion (73) extending in a stacking direction of the first tubes (16a) and the second tubes (43a) of the upstream heat exchange portion (71), the upstream tank portion (73) having an upstream first fluid space (738) which collects or distributes the first fluid that flows through the first tubes (16a);
a downstream tank portion (74) extending in a stacking direction of the first tubes (16a) of the downstream heat exchange portion (72), the downstream tank portion (74) having a downstream second fluid space (748) which collects or distributes the second fluid that flows through the second tubes (43a) of the upstream heat exchange portion (71);
a first communication passage (761) through which the first tubes (16a) of the upstream heat exchange portion (71) communicate with the upstream first fluid space (738); and
a second communication passage (762) through which the second tubes (43a) of the downstream heat exchange portion (72) communicate with the downstream second fluid space (748).

7. The vehicle air conditioner according to any one of claims 1 to 4, wherein
the tubes of the upstream heat exchange portion (71) consist of both the first tubes (16a) and the second tubes (43a), and
the tubes of the downstream heat exchange portion (72) consist of the first tubes (16a),
the heat exchanger (70) further comprising:
an upstream tank portion (73) extending in a stacking direction of the first tubes (16a) and the second tubes (43a) of the upstream heat exchange portion (71), the upstream tank portion (73) having an upstream first fluid space (733) which collects or distributes the first fluid that flows through the first tubes (16a), and a downstream second fluid space (731) which collects or distributes the second fluid that flows through the second tubes (43a);
a downstream tank portion (74) extending in a stacking direction of the first tubes (16a) of the downstream heat exchange portion (72), the downstream tank portion (74) having a downstream first fluid space (741) which collects or distributes the first fluid that flows through the first tubes (16a); and
a communication passage (76) through which the upstream first fluid space (733) communicates with the downstream first fluid space (741).

8. The vehicle air conditioner according to any one of claims 5 to 7, wherein the communication passage (76, 761, 762) is integrated with the upstream tank portion (73) and the downstream tank portion (74).

9. The vehicle air conditioner according to any one of claims 5 to 7, wherein the communication passage (76, 761, 762, 823, 824, 845) is separated from the upstream tank portion (73) and the downstream tank portion (74).

10. The vehicle air conditioner according to any one of claims 5 to 7, wherein
the communication passage (76, 761, 762, 823, 824, 845) is separated from the upstream tank portion (73) and the downstream tank portion (74), and
the communication passage (76, 761, 762, 823, 824, 845) is located at a position nearer to the heat exchange portion than positions of the upstream tank portion (73) and the downstream tank portion (74).

11. The vehicle air conditioner according to any one of claims 5 to 10, wherein the communication passage (76, 761) extends in a direction to connect an end portion of a first tube (16a) of the upstream heat exchange portion (71) and an end portion of a first tube (16a) of the downstream heat exchange portion (72) which are overlapped with each other in the flow direction of the third fluid.

12. The vehicle air conditioner according to claim 11, wherein the communication passage (76, 761) communicates with another first tube (16a) that is adjacent in the stacking direction of the first tubes (16a) to the two first tubes (16a) which are overlapped with each other in the flow direction of the third fluid.

13. The vehicle air conditioner according to any one of claims 5 to 12, wherein
a flow direction of the first fluid is the same as a flow direction of the second fluid in a pair of the first tube (16a) and the second tube (43a) overlapped with each other in the flow direction of the third fluid, and
a flow direction of the first fluid is opposite from a flow direction of the second fluid in another pair of the first tube (16a) and the second tube (43a) overlapped with each other in the flow direction of the third fluid.

14. The vehicle air conditioner according to any one of claims 1 to 13, wherein
the tubes of the upstream heat exchange portion (71) consist of both the first tubes (16a) and the second tubes (43a),
the tubes of the downstream heat exchange portion (72) consist of the first tubes (16a), and
all of the first fluid inflowing from an exterior of the heat exchanger passes through the upstream heat exchange portion (71) without branching to the downstream heat exchange portion (72).

15. The vehicle air conditioner according to any one of claims 1 to 14, wherein
the tubes of the upstream heat exchange portion (71) consist of both the first tubes (16a) and the second tubes (43a),
the tubes of the downstream heat exchange portion (72) consist of the first tubes (16a),
the first fluid inflowing from an exterior of the heat exchanger branches to the upstream heat exchange portion (71) and to the downstream heat exchange portion (72) before flowing into the first tubes (16a),
all of the first fluid branched to the upstream heat exchange portion (71) before flowing into the first tubes (16a) passes through the upstream heat exchange portion (71) without further branching to the downstream heat exchange portion (72), and
all of the first fluid branched to the downstream heat exchange portion (72) before flowing into the first tubes (16a) passes through the downstream heat exchange portion (72) without further branching to the upstream heat exchange portion (71).

16. The vehicle air conditioner according to claim 14 or 15, wherein a flow direction of the first fluid flowing through the first tubes (16a) immediately after the inflow of the first fluid from the exterior is the same as a flow direction of the second fluid flowing through the second tubes (43a) immediately after inflow of the second fluid from the exterior.

17. The vehicle air conditioner according to any one of claims 14 to 16, wherein a flow direction of the first fluid flowing through the first tubes (16a) immediately before outflow of the first fluid to the exterior is the same as a flow direction of the second fluid flowing through the second tubes (43a) immediately before outflow of the second fluid to the exterior.

18. The vehicle air conditioner according to any one of claims 1 to 17, further comprising outer fins (50) located in the third fluid passages (70a), wherein
the outer fins (50) promote heat exchange between the first fluid and the third fluid and heat exchange between the second fluid and the third fluid,
the outer fins (50) are capable of conveying heat between the first fluid flowing through the first tubes (16a) and the second fluid flowing through the second tubes (43a),
each of the outer fins (50) has louvers (500) formed by cutting and raising parts of the surface of the outer fin (50), and
the louvers (500) of the outer fin (50) located between two adjacent tubes of the upstream heat exchange portion (71) are different in shape from the louvers (500) of the outer fin (50) located between two adjacent tubes of the downstream heat exchange portion (72).

19. The vehicle air conditioner according to any one of claims 1 to 13 and 15 to 18, wherein
the tubes of the upstream heat exchange portion (71) consist of both the first tubes (16a) and the second tubes (43a), and
the tubes of the downstream heat exchange portion (72) consist of the first tubes (16a),
the heat exchanger (70) further comprising:
an upstream tank portion (73) extending in a stacking direction of the first tubes (16a) and the second tubes (43a) of the upstream heat exchange portion (71), the upstream tank portion (73) having an upstream first fluid space (733) which collects or distributes the first fluid that flows through the first tubes (16a) and an upstream second fluid space (731) which collects or distributes the second fluid that flows through the second tubes (43a);
a downstream tank portion (74) extending in a stacking direction of the first tubes (16a) of the upstream heat exchange portion (71), the downstream tank portion (74) having a downstream first fluid space (741) which collects or distributes the first fluid that flows through the first tubes (16a); and
a connector portion (80) including a single piping connection port (81) connected to a first fluid pipe through which the first fluid flows, an upstream heat exchange portion connection port (82) that is connected to the upstream tank portion (73) and communicates with the upstream first fluid space (733), and a downstream heat exchange portion connection port (83) that is connected to the downstream tank portion (74) and communicates with the downstream first fluid space (741).

20. The vehicle air conditioner according to claim 19, wherein a distance (L1) from the piping connection port (81) to the upstream heat exchange portion connection port (82) is different from a distance (L2) from the piping connection port (81) to the downstream heat exchange portion connection port (83) in the connector portion (80).

21. The vehicle air conditioner according to claim 19 or 20, wherein an opening area (S1) of the upstream heat exchange portion connection port (82) is different from an opening area (S2) of the downstream heat exchange portion connection port (83) in the connector portion (80).

## Patentansprüche

1. Fahrzeugklimaanlage, umfassend:
einen Wärmepumpenkreislauf (10), durch den ein Kältemittel als erstes Fluid zirkuliert;
einen Kühlmittelzirkulationskreislauf (40), durch den ein Kühlmittel als zweites Fluid zirkuliert, und den Kühlmittelzirkulationskreislauf mit einer fahrzeuginternen Vorrichtung (MG, EG), die während des Betriebs Wärme erzeugt; und
einen Wärmetauscher (70), enthaltend:
erste Rohre (16a), die mit dem Wärmepumpenkreislauf (10) verbunden sind;
zweite Rohre (43a), die mit dem Kühlmittelkreislauf (40) verbunden sind; und
einen Wärmeaustauschabschnitt, in dem Rohre mit den ersten Rohren (16a) und den zweiten Rohren (43a) gestapelt sind, wobei
mindestens eines des ersten Fluids und des zweiten Fluids Wärme mit Luft als drittes Fluid im Wärmeaustauschabschnitt austauschen,
Zwischenräume zwischen Rohren, die aus den ersten Rohren (16a) und den zweiten Rohren (43a) ausgewählt sind und nebeneinander liegen, dritte Fluiddurchgänge (70a) bilden, durch die das dritte Fluid strömt.
der Wärmeaustauschabschnitt einen stromaufwärtigen Wärmeaustauschabschnitt (71), der auf einer stromaufwärtigen Seite in einer Strömungsrichtung des dritten Fluids angeordnet ist, und einen stromabwärtigen Wärmeaustauschabschnitt (72) enthält, der stromabwärts des stromaufwärtigen Wärmeaustauschabschnitts (71) in der Strömungsrichtung des dritten Fluids angeordnet ist,
die Rohre des stromaufwärtigen Wärmeaustauschabschnitts (71) sowohl aus den ersten Rohren (16a) als auch den zweiten Rohren (43a) bestehen, und wobei
die Rohre des stromabwärtigen Wärmeaustauschabschnitts (72) nur aus den ersten Rohren (16a) bestehen.

2. Fahrzeugklimaanlage nach Anspruch 1, wobei
die ersten Rohre (16a) und die zweiten Rohre (43a) des stromaufwärtigen Wärmeaustauschabschnitts (71) und die ersten Rohre (16a) und die zweiten Rohre (43a) des stromabwärtigen Wärmeaustauschabschnitts (72) einen ersten Abschnitt, in welchem die gleiche Art von zwei Rohren in der Strömungsrichtung des dritten Fluids miteinander überlappt ist, und einen zweiten Abschnitt, in dem verschiedene Arten von zwei Rohren in der Strömungsrichtung des dritten Fluids miteinander überlappt sind enthalten.

3. Fahrzeugklimaanlage nach Anspruch 1 oder 2, wobei
ein Verhältnis der Anzahl der ersten Rohre (16a) des stromaufwärtigen Wärmeaustauschabschnitts (71) zur Gesamtzahl der ersten Rohre (16a) und der zweiten Rohre (43a) des stromaufwärtigen Wärmeaustauschabschnitts (71) unterschiedlich zu einem Verhältnis der Anzahl der ersten Rohre (16a) des stromabwärtigen Wärmeaustauschabschnitts (72) zur Gesamtzahl der ersten Rohre (16a) und der zweiten Rohre (43a) des stromabwärtigen Wärmeaustauschabschnitts (72) ist.

4. Fahrzeugklimaanlage nach einem der Ansprüche 1 bis 3, ferner umfassend eine äußere Rippe (50), die in dem dritten Fluiddurchgang (70a) angeordnet ist, wobei
die äußere Rippe (50) den Wärmeaustausch zwischen dem ersten Fluid und dem dritten Fluid und den Wärmeaustausch zwischen dem zweiten Fluid und dem dritten Fluid fördert, und wobei
die äußere Rippe (50) Wärme zwischen dem ersten Fluid, das durch das erste Rohr (16a) strömt, und dem zweiten Fluid, das durch das zweite Rohr (43a) strömt, übertragen kann.

5. Fahrzeugklimaanlage nach einem der Ansprüche 1 bis 4, wobei
die Rohre des stromaufwärtigen Wärmeaustauschabschnitts (71) sowohl aus den ersten Rohren (16a) als auch den zweiten Rohren (43a) bestehen und
die Rohre des stromabwärtigen Wärmeaustauschabschnitts (72) aus den ersten Rohren (16a) bestehen, und wobei
der Wärmetauscher (70) ferner umfasst:
einen stromaufwärtigen Tankabschnitt (73), der sich in einer Stapelrichtung der ersten Rohre (16a) und der zweiten Rohre (43a) des stromaufwärtigen Wärmeaustauschabschnitts (71) erstreckt, wobei der stromaufwärtige Tankabschnitt (73) einen stromaufwärtigen zweiten Fluidraum (731) aufweist, der das zweite Fluid sammelt oder verteilt, das durch die zweiten Rohre (43a) strömt;
einen stromabwärtigen Tankabschnitt (74), der sich in einer Stapelrichtung der ersten Rohre (16a) des stromabwärtigen Wärmeaustauschabschnitts (72) erstreckt, wobei der stromabwärtige Tankabschnitt (74) einen stromabwärtigen ersten Fluidraum (741) aufweist, der das erste Fluid sammelt oder verteilt, das durch die ersten Rohre (16a) strömt; und
einen Kommunikationsdurchgang (76, 823, 824, 845), durch den die ersten Rohre (16a) des stromaufwärtigen Wärmeaustauschabschnitts (71) mit dem stromabwärtigen ersten Fluidraum (741) kommunizieren.

6. Fahrzeugklimaanlage nach einem der Ansprüche 1 bis 4, wobei
die Rohre des stromaufwärtigen Wärmeaustauschabschnitts (71) sowohl aus den ersten Rohren (16a) als auch den zweiten Rohren (43a) bestehen und
die Rohre des stromabwärtigen Wärmeaustauschabschnitts (72) aus den ersten Rohren (16a) bestehen, und wobei
der Wärmetauscher (70) ferner umfasst:
einen stromaufwärtigen Tankabschnitt (73), der sich in einer Stapelrichtung der ersten Rohre (16a) und der zweiten Rohre (43a) des stromaufwärtigen Wärmeaustauschabschnitts (71) erstreckt, wobei der stromaufwärtige Tankabschnitt (73) einen stromaufwärtigen ersten Fluidraum (738) aufweist, der das erste Fluid sammelt oder verteilt, das durch die ersten Rohre (16a) strömt;
einen stromabwärtigen Tankabschnitt (74), der sich in einer Stapelrichtung der ersten Rohre (16a) des stromabwärtigen Wärmeaustauschabschnitts (72) erstreckt, wobei der stromabwärtige Tankabschnitt (74) einen stromabwärtigen zweiten Fluidraum (748) aufweist, der das zweite Fluid sammelt oder verteilt, das durch die zweiten Rohre (43a) des stromaufwärtigen Wärmeaustauschabschnitts (71) strömt;
einen ersten Kommunikationsdurchgang (761), durch den die ersten Rohre (16a) des stromaufwärtigen Wärmeaustauschabschnitts (71) mit dem stromaufwärtigen ersten Fluidraum (738) kommunizieren; und
einen zweiten Kommunikationsdurchgang (762), durch den die zweiten Rohre (43a) des stromabwärtigen Wärmeaustauschabschnitts (72) mit dem stromabwärtigen zweiten Fluidraum (748) kommunizieren.

7. Fahrzeugklimaanlage nach einem der Ansprüche 1 bis 4, wobei
die Rohre des stromaufwärtigen Wärmeaustauschabschnitts (71) sowohl aus den ersten Rohren (16a) als auch den zweiten Rohren (43a) bestehen und
die Rohre des stromabwärtigen Wärmeaustauschabschnitts (72) aus den ersten Rohren (16a) bestehen, und wobei
der Wärmetauscher (70) ferner umfasst:
einen stromaufwärtigen Tankabschnitt (73), der sich in einer Stapelrichtung der ersten Rohre (16a) und der zweiten Rohre (43a) des stromaufwärtigen Wärmeaustauschabschnitts (71) erstreckt, wobei der stromaufwärtige Tankabschnitt (73) einen stromaufwärtigen ersten Fluidraum (733) aufweist, der das erste Fluid sammelt oder verteilt, das durch die ersten Rohre (16a) strömt, und einen stromabwärtigen zweiten Fluidraum (731), der das zweite Fluid sammelt oder verteilt, das durch die zweiten Rohre (43a) strömt;
einen stromabwärtigen Tankabschnitt (74), der sich in einer Stapelrichtung der ersten Rohre (16a) des stromabwärtigen Wärmeaustauschabschnitts (72) erstreckt, wobei der stromabwärtige Tankabschnitt (74) einen stromabwärtigen ersten Fluidraum (741) aufweist, der das erste Fluid sammelt oder verteilt, das durch die ersten Rohre (16a) strömt; und
einen Kommunikationsdurchgang (76), durch den der stromaufwärtige erste Fluidraum (733) mit dem stromabwärtigen ersten Fluidraum (741) kommuniziert.

8. Fahrzeugklimaanlage nach einem der Ansprüche 5 bis 7, wobei der Kommunikationsdurchgang (76, 761, 762) mit dem stromaufwärtigen Tankabschnitt (73) und den stromabwärtigen Tankabschnitt (74) integriert ist.

9. Fahrzeugklimaanlage nach einem der Ansprüche 5 bis 7, wobei der Kommunikationsdurchgang (76, 761, 762, 823, 824, 845) von dem stromaufwärtigen Tankabschnitt (73) und dem stromabwärtigen Tankabschnitt (74) getrennt ist.

10. Fahrzeugklimaanlage nach einem der Ansprüche 5 bis 7, wobei
der Kommunikationsdurchgang (76, 761, 762, 823, 824, 845) vom stromaufwärtigen Tankabschnitt (73) und vom stromabwärtigen Tankabschnitt (74) getrennt ist, und
der Kommunikationsdurchgang (76, 761, 762, 823, 824, 845) sich an einer Position befindet, die näher am Wärmeaustauschabschnitt liegt als die Positionen des stromaufwärtigen Tankabschnitts (73) und des stromabwärtigen Tankabschnitts (74).

11. Fahrzeugklimaanlage nach einem der Ansprüche 5 bis 10, wobei sich der Kommunikationsdurchgang (76, 761) in einer Richtung erstreckt, um einen Endabschnitt eines ersten Rohrs (16a) des stromaufwärtigen Wärmeaustauschabschnitts (71) und ein Endabschnitt eines ersten Rohrs (16a) des stromabwärtigen Wärmeaustauschabschnitts (72) zu verbinden, die in der Strömungsrichtung des dritten Fluids miteinander überlappt sind.

12. Fahrzeugklimaanlage nach Anspruch 11, wobei der Kommunikationsdurchgang (76, 761) mit einem anderen ersten Rohr (16a) kommuniziert, das in Stapelrichtung der ersten Rohre (16a) neben den beiden ersten Rohren (16a) liegt, die sich in Strömungsrichtung des dritten Fluids miteinander überlappen.

13. Fahrzeugklimaanlage nach einem der Ansprüche 5 bis 12, wobei
eine Strömungsrichtung des ersten Fluids dieselbe wie eine Strömungsrichtung des zweiten Fluids in einem Paar des ersten Rohrs (16a) und des zweiten Rohrs (43a) ist, die sich in der Strömungsrichtung des dritten Fluids miteinander überlappen,
eine Strömungsrichtung des ersten Fluids entgegengesetzt zu einer Strömungsrichtung des zweiten Fluids in einem anderen Paar des ersten Rohrs (16a) und des zweiten Rohrs (43a) ist, die sich in der Strömungsrichtung des dritten Fluids miteinander überlappen.

14. Fahrzeugklimaanlage nach einem der Ansprüche 1 bis 13, wobei
die Rohre des stromaufwärtigen Wärmeaustauschabschnitts (71) sowohl aus den ersten Rohren (16a) als auch aus den zweiten Rohren (43a) bestehen,
die Rohre des stromabwärtigen Wärmeaustauschabschnitts (72) aus den ersten Rohren (16a) bestehen und
das gesamte erste Fluid, das von einer Außenseite des Wärmetauschers einströmt, den stromaufwärtigen Wärmeaustauschabschnitt (71) passiert, ohne sich zum stromabwärtigen Wärmeaustauschabschnitt (72) zu verzweigen.

15. Fahrzeugklimaanlage nach einem der Ansprüche 1 bis 14, wobei
die Rohre des stromaufwärtigen Wärmeaustauschabschnitts (71) sowohl aus den ersten Rohren (16a) als auch aus den zweiten Rohren (43a) bestehen,
die Rohre des stromabwärtigen Wärmeaustauschabschnitts (72) aus den ersten Rohren (16a) bestehen,
das erste Fluid, das von einer Außenseite des Wärmetauschers einströmt, sich zum stromaufwärtigen Wärmeaustauschabschnitt (71) und zum stromabwärtigen Wärmeaustauschabschnitt (72) verzweigt, bevor es in die ersten Rohre (16a) strömt,
das gesamte erste Fluid, das zum stromaufwärtigen Wärmeaustauschabschnitt (71) verzweigt wird, bevor es in die ersten Rohre (16a) strömt, den stromaufwärtigen Wärmeaustauschabschnitt (71) passiert, ohne sich weiter zum stromabwärtigen Wärmeaustauschabschnitt (72) zu verzweigen, und
das gesamte erste Fluid, das zum stromabwärtigen Wärmeaustauschabschnitt (72) verzweigt wird, bevor es in die ersten Rohre (16a) strömt, den stromabwärtigen Wärmeaustauschabschnitt (72) passiert, ohne sich weiter zum stromaufwärtigen Wärmeaustauschabschnitt (71) zu verzweigen.

16. Fahrzeugklimaanlage nach Anspruch 14 oder 15, wobei eine Strömungsrichtung des ersten Fluids, das unmittelbar nach dem Einströmen des ersten Fluids von außen durch die ersten Rohre (16a) strömt, dieselbe ist wie eine Strömungsrichtung des zweiten Fluids, das unmittelbar nach dem Einströmen des zweiten Fluids von außen durch die zweiten Rohre (43a) strömt.

17. Fahrzeugklimaanlage nach einem der Ansprüche 14 bis 16, wobei eine Strömungsrichtung des ersten Fluids, das unmittelbar vor dem Ausströmen des ersten Fluids nach außen durch die ersten Rohre (16a) strömt, dieselbe ist wie eine Strömungsrichtung des zweiten Fluids, das unmittelbar vor dem Ausströmen des zweiten Fluids nach außen durch die zweiten Rohre (43a) strömt.

18. Fahrzeugklimaanlage nach einem der Ansprüche 1 bis 17, ferner umfassend äußere Rippen (50), die in den dritten Fluiddurchgängen (70a) angeordnet sind, wobei
die äußeren Rippen (50) den Wärmeaustausch zwischen dem ersten Fluid und dem dritten Fluid und den Wärmeaustausch zwischen dem zweiten Fluid und dem dritten Fluid fördern,
die äußeren Rippen (50) Wärme zwischen dem ersten Fluid, das durch die ersten Rohre (16a) strömt, und dem zweiten Fluid, das durch die zweiten Rohre (43a) strömt, übertragen können,
jede der äußeren Rippen (50) Luftschlitze (500) aufweist, die durch Schneiden und Anheben von Teilen der Oberfläche der äußeren Rippe (50) gebildet werden, und
die Luftschlitze (500) der äußeren Rippe (50), die sich zwischen zwei benachbarten Rohren des stromaufwärtigen Wärmeaustauschabschnitts (71) befinden, sich in ihrer Form von den Luftschlitzen (500) der äußeren Rippe (50) unterscheiden, die sich zwischen zwei benachbarten Rohren des stromabwärtigen Wärmeaustauschabschnitts (72) befinden.

19. Fahrzeugklimaanlage nach einem der Ansprüche 1 bis 13 und 15 bis 18, wobei
die Rohre des stromaufwärtigen Wärmeaustauschabschnitts (71) sowohl aus den ersten Rohren (16a) als auch den zweiten Rohren (43a) bestehen und
die Rohre des stromabwärtigen Wärmeaustauschabschnitts (72) aus den ersten Rohren (16a) bestehen, und wobei
der Wärmetauscher (70) ferner umfasst:
einen stromaufwärtigen Tankabschnitt (73), der sich in einer Stapelrichtung der ersten Rohre (16a) und der zweiten Rohre (43a) des stromaufwärtigen Wärmeaustauschabschnitts (71) erstreckt, wobei der stromaufwärtige Tankabschnitt (73) einen stromaufwärtigen ersten Fluidraum (733) aufweist, der das erste Fluid sammelt oder verteilt, das durch die ersten Rohre (16a) strömt, und einen stromaufwärtigen zweiten Fluidraum (731), der das zweite Fluid sammelt oder verteilt, das durch die zweiten Rohre (43a) strömt;
einen stromabwärtigen Tankabschnitt (74), der sich in einer Stapelrichtung der ersten Rohre (16a) des stromaufwärtigen Wärmeaustauschabschnitts (71) erstreckt, wobei der stromabwärtige Tankabschnitt (74) einen stromabwärtigen ersten Fluidraum (741) aufweist, der das erste Fluid sammelt oder verteilt, das durch die ersten Rohre (16a) strömt; und
einen Verbindungsabschnitt (80), der einen einzelnen Rohrverbindungsanschluss (81) enthält, der mit einem ersten Fluidrohr verbunden ist, durch das das erste Fluid strömt, einen stromaufwärtigen Wärmeaustauschabschnitt-Verbindungsanschluss (82), der mit dem stromaufwärtigen Tankabschnitt (73) verbunden ist, und mit dem stromaufwärtigen ersten Fluidraum (733) kommuniziert und einen stromabwärtigen Wärmeaustauschabschnitt-Verbindungsanschluss (83), der mit dem stromabwärtigen Tankabschnitt (74) verbunden ist, und mit dem stromabwärtigen ersten Fluidraum (741) kommuniziert.

20. Fahrzeugklimaanlage nach Anspruch 19, wobei sich ein Abstand (L1) von dem Rohrverbindungsanschluss (81) zum stromaufwärtigen Wärmeaustauschabschnitt-Verbindungsanschluss (82) von einem Abstand (L2) von dem Rohrverbindungsanschluss (81) zum stromabwärtigen Wärmeaustauschabschnitt-Verbindungsanschluss (83) im Verbindungsabschnitt (80) unterscheidet.

21. Fahrzeugklimaanlage nach Anspruch 19 oder 20, wobei sich ein Öffnungsbereich (S1) des stromaufwärtigen Wärmeaustauschabschnitt-Verbindungsanschlusses (82) von einem Öffnungsbereich (S2) des stromabwärtigen Wärmeaustauschabschnitt- Verbindungsanschlusses (83) im Steckerteil (80) unterscheidet.

## Revendications

1. Climatiseur de véhicule comprenant :
un circuit de pompe à chaleur (10) à travers lequel un réfrigérant circule en tant que premier fluide ; un circuit de circulation de réfrigérant (40) à travers lequel un réfrigérant circule en tant que second fluide, et le circuit de circulation de réfrigérant comprenant un dispositif embarqué (MG, EG) qui génère de la chaleur pendant le fonctionnement ; et un échangeur thermique (70) comprenant des premiers tubes (16a) reliés au circuit de la pompe à chaleur (10) ; des seconds tubes (43a) reliés au circuit de circulation de réfrigérant (40) ; et une partie d'échange thermique dans laquelle des tubes comprenant les premiers tubes (16a) et les seconds tubes (43a) sont empilés, dans laquelle au moins l'un du premier fluide et du deuxième fluide échange de la chaleur avec de l'air en tant que troisième fluide dans la partie d'échange thermique, les espaces entre les tubes, qui sont sélectionnés parmi les premiers tubes (16a) et les seconds tubes (43a) et sont adjacents les uns aux autres, forment des passages de troisième fluide (70a) à travers lesquels le troisième fluide s'écoule, la partie d'échange thermique comprend une partie d'échange thermique amont (71) positionnée sur un côté amont selon une direction d'écoulement du troisième fluide, et une partie d'échange thermique aval (72) positionnée en aval de la partie d'échange thermique amont (71) selon la direction d'écoulement du troisième fluide, les tubes de la partie d'échange thermique amont (71) sont constitués à la fois des premiers tubes (16a) et des seconds tubes (43a), et les tubes de la partie d'échange thermique aval (72) sont constitués uniquement des premiers tubes (16a).

2. Climatiseur de véhicule selon la revendication 1, dans lequel les premiers tubes (16a) et les seconds tubes (43a) de la partie d'échange thermique amont (71) et les premiers tubes (16a) et les seconds tubes (43a) de la partie d'échange thermique aval (72) comprennent une première partie dans laquelle le même type de deux tubes se chevauchent l'un l'autre selon la direction d'écoulement du troisième fluide, et une seconde partie dans laquelle des types différents de deux tubes se chevauchent l'un l'autre selon une direction d'écoulement du troisième fluide.

3. Climatiseur de véhicule selon la revendication 1 ou 2, dans lequel un rapport du nombre des premiers tubes (16a) de la partie d'échange thermique amont (71) sur le nombre total des premiers tubes (16a) et des seconds tubes (43a) de la partie d'échange thermique amont (71) est différent d'un rapport du nombre des premiers tubes (16a) de la partie d'échange thermique aval (72) sur le nombre total des premiers tubes (16a) et des seconds tubes (43a) de la partie d'échange thermique aval (72).

4. Climatiseur de véhicule selon l'une quelconque des revendications 1 à 3, comprenant en outre une ailette extérieure (50) située dans le troisième passage de fluide (70a), dans lequel l'ailette extérieure (50) favorise l'échange de chaleur entre le premier fluide et le troisième fluide et l'échange de chaleur entre le deuxième fluide et le troisième fluide, et l'ailette extérieure (50) est capable de transporter la chaleur entre le premier fluide s'écoulant à travers le premier tube (16a) et le deuxième fluide s'écoulant à travers le deuxième tube (43a).

5. Climatiseur de véhicule selon l'une quelconque des revendications 1 à 4, dans lequel les tubes de la partie d'échange thermique amont (71) sont constitués par les premiers tubes (16a) et les seconds tubes (43a), et les seconds tubes (43a), et les tubes de la partie d'échange thermique aval (72) sont constitués des premiers tubes (16a), l'échangeur thermique (70) comprenant en outre : une partie de réservoir amont (73) s'étendant selon une direction d'empilement des premiers tubes (16a) et des seconds tubes (43a) de la partie d'échange thermique amont (71), la partie de réservoir amont (73) ayant un second espace de fluide amont (731) qui recueille ou distribue le second fluide qui s'écoule à travers les seconds tubes (43a) ;
une partie de réservoir aval (74) s'étendant selon une direction d'empilement des premiers tubes (16a) de la partie d'échange thermique aval (72), la partie de réservoir aval (74) ayant un premier espace de fluide aval (741) qui collecte ou distribue le premier fluide qui s'écoule à travers les premiers tubes (16a) ; et un passage de communication (76, 823, 824, 845) à travers lequel les premiers tubes (16a) de la partie d'échange thermique amont (71) communiquent avec le premier espace de fluide aval (741).

6. Climatiseur de véhicule selon l'une quelconque des revendications 1 à 4, dans lequel les tubes de la partie d'échange thermique amont (71) sont constitués à la fois des premiers tubes (16a) et des seconds tubes (43a), et les tubes de la partie d'échange thermique aval (72) sont constitués des premiers tubes (16a), l'échangeur thermique (70) comprenant en outre une partie de réservoir amont (73) s'étendant selon une direction d'empilement des premiers tubes (16a) et des seconds tubes (43a) de la partie d'échange thermique amont (71), la partie de réservoir amont (73) ayant un premier espace de fluide amont (738) qui recueille ou distribue le premier fluide qui s'écoule à travers les premiers tubes (16a) ; une partie de réservoir aval (74) s'étendant selon une direction d'empilement des premiers tubes (16a) de la partie d'échange thermique aval (72), la partie de réservoir aval (74) ayant un second espace de fluide aval (748) qui collecte ou distribue le second fluide qui s'écoule à travers les seconds tubes (43a) de la partie d'échange thermique amont (71) ; un premier passage de communication (761) à travers lequel les premiers tubes (16a) de la partie d'échange thermique amont (71) communiquent avec le premier espace de fluide amont (738) ; et un second passage de communication (762) à travers lequel les seconds tubes (43a) de la partie d'échange thermique aval (72) communiquent avec le second espace de fluide aval (748).

7. Le climatiseur de véhicule selon l'une quelconque des revendications 1 à 4, dans lequel les tubes de la partie d'échange thermique amont (71) sont constitués par les premiers tubes (16a) et les seconds tubes (43a), et les tubes de la partie d'échange thermique aval (72) sont constitués des premiers tubes (16a), l'échangeur thermique (70) comprenant en outre :
une partie de réservoir amont (73) s'étendant selon une direction d'empilement des premiers tubes (16a) et des seconds tubes (43a) de la partie d'échange thermique amont (71), la partie de réservoir amont (73) ayant un premier espace de fluide amont (733) qui collecte ou distribue le premier fluide qui s'écoule à travers les premiers tubes (16a), et un second espace de fluide aval (731) qui collecte ou distribue le second fluide qui s'écoule à travers les seconds tubes (43a) ; une partie de réservoir aval (74) s'étendant selon une direction d'empilement des premiers tubes (16a) de la partie d'échange thermique aval (72), la partie de réservoir aval (74) ayant un premier espace de fluide aval (741) qui collecte ou distribue le premier fluide qui s'écoule à travers les premiers tubes (16a) ; et un passage de communication (76) à travers lequel le premier espace de fluide amont (733) communique avec le premier espace de fluide aval (741).

8. Climatiseur de véhicule selon l'une quelconque des revendications 5 à 7, dans lequel le passage de communication (76, 761, 762) est intégré à la partie de réservoir amont (73) et à la partie de réservoir aval (74).

9. Climatiseur de véhicule selon l'une quelconque des revendications 5 à 7, dans lequel le passage de communication (76, 761, 762, 823, 824, 845) est séparé de la partie de réservoir amont (73) et de la partie de réservoir aval (74).

10. Le climatiseur de véhicule selon l'une quelconque des revendications 5 à 7, dans lequel le passage de communication (76, 761, 762, 823, 824, 845) est séparé de la partie amont du réservoir (73) et de la partie aval du réservoir (74), et le passage de communication (76, 761, 762, 823, 824, 845) est situé à une position plus proche de la partie d'échange thermique que les positions de la partie de réservoir amont (73) et de la partie de réservoir aval (74).

11. Climatiseur de véhicule selon l'une quelconque des revendications 5 à 10, dans lequel le passage de communication (76, 761) s'étend selon une direction permettant de connecter une partie d'extrémité d'un premier tube (16a) de la partie d'échange thermique amont (71) et une partie d'extrémité d'un premier tube (16a) de la partie d'échange thermique aval (72) qui se chevauchent l'une l'autre selon une direction d'écoulement du troisième fluide.

12. Climatiseur de véhicule selon la revendication 11, dans lequel le passage de communication (76, 761) communique avec un autre premier tube (16a) qui est adjacent selon une direction d'empilement des premiers tubes (16a) aux deux premiers tubes (16a) qui sont superposés l'un à l'autre selon une direction d'écoulement du troisième fluide.

13. Climatiseur de véhicule selon l'une quelconque des revendications 5 à 12, dans lequel une direction d'écoulement du premier fluide est la même qu'une direction d'écoulement du deuxième fluide dans une paire du premier tube (16a) et du deuxième tube (43a) qui se chevauchent l'un l'autre selon une direction d'écoulement du troisième fluide, et une direction d'écoulement du premier fluide est opposée à une direction d'écoulement du deuxième fluide dans une autre paire du premier tube (16a) et du deuxième tube (43a) se chevauchant l'un l'autre selon une direction d'écoulement du troisième fluide.

14. Climatiseur selon l'une quelconque des revendications 1 à 13, dans lequel les tubes de la partie d'échange thermique amont (71) sont constitués à la fois des premiers tubes (16a) et des seconds tubes (43a), les tubes de la partie d'échange thermique aval (72) sont constitués des premiers tubes (16a), et la totalité du premier fluide entrant depuis l'extérieur de l'échangeur thermique passe par la partie d'échange thermique amont (71) sans bifurquer vers la partie d'échange thermique aval (72).

15. Climatiseur de véhicule selon l'une quelconque des revendications 1 à 14, dans lequel les tubes de la partie d'échange thermique (71) amont sont constitués à la fois des premiers tubes (16a) et des seconds tubes (43a),
les tubes de la partie aval d'échange thermique (72) sont constitués des premiers tubes (16a), le premier fluide entrant depuis l'extérieur de l'échangeur thermique se ramifie vers la partie d'échange thermique amont (71) et vers la partie d'échange thermique aval (72) avant de s'écouler dans les premiers tubes (16a), la totalité du premier fluide dérivé vers la partie d'échange thermique amont (71), avant de s'écouler dans les premiers tubes (16a), passe à travers la partie d'échange thermique amont (71) sans autre dérivation vers la partie d'échange thermique aval (72), et la totalité du premier fluide dérivé vers la partie d'échange thermique aval (72), avant de s'écouler dans les premiers tubes (16a), passe à travers la partie d'échange thermique aval (72) sans autre dérivation vers la partie d'échange thermique amont (71).

16. Climatiseur de véhicule selon la revendication 14 ou 15, dans lequel une direction d'écoulement du premier fluide s'écoulant à travers les premiers tubes (16a) immédiatement après l'entrée du premier fluide depuis l'extérieur est la même qu'une direction d'écoulement du second fluide s'écoulant à travers les seconds tubes (43a) immédiatement après l'entrée du second fluide depuis l'extérieur.

17. Climatiseur de véhicule selon l'une quelconque des revendications 14 à 16, dans lequel une direction d'écoulement du premier fluide s'écoulant à travers les premiers tubes (16a) immédiatement avant la sortie du premier fluide vers l'extérieur est la même qu'une direction d'écoulement du second fluide s'écoulant à travers les seconds tubes (43a) immédiatement avant la sortie du second fluide vers l'extérieur.

18. Climatiseur de véhicule selon l'une quelconque des revendications 1 à 17, comprenant en outre des ailettes extérieures (50) situées dans les troisièmes passages de fluide (70a), dans lequel les ailettes extérieures (50) favorisent l'échange de chaleur entre le premier fluide et le troisième fluide et l'échange de chaleur entre le deuxième fluide et le troisième fluide, les ailettes extérieures (50) sont capables de transporter la chaleur entre le premier fluide s'écoulant à travers les premiers tubes (16a) et le second fluide s'écoulant à travers les seconds tubes (43a), chacune des ailettes extérieures (50) comporte des persiennes (500) formées en coupant et en soulevant des parties de la surface de l'ailette extérieure (50), et les persiennes (500) de l'ailette extérieure (50) situées entre deux tubes adjacents de la partie d'échange thermique amont (71) sont de forme différente des persiennes (500) de l'ailette extérieure (50) situées entre deux tubes adjacents de la partie d'échange thermique aval (72).

19. Climatiseur de véhicule selon l'une quelconque des revendications 1 à 13 et 15 à 18, dans lequel les tubes de la partie d'échange thermique amont (71) sont constitués par les premiers tubes (16a) et les seconds tubes (43a), et les tubes de la partie d'échange thermique aval (72) sont constitués des premiers tubes (16a), l'échangeur thermique (70) comprenant en outre : une partie de réservoir amont (73) s'étendant selon une direction d'empilement des premiers tubes (16a) et des seconds tubes (43a) de la partie d'échange thermique amont (71), la partie de réservoir amont (73) ayant un premier espace de fluide amont (733) qui collecte ou distribue le premier fluide qui s'écoule à travers les premiers tubes (16a) et un second espace de fluide amont (731) qui collecte ou distribue le second fluide qui s'écoule à travers les seconds tubes (43a) ; une partie de réservoir aval (74) s'étendant selon une direction d'empilement des premiers tubes (16a) de la partie d'échange thermique amont (71), la partie de réservoir aval (74) ayant un premier espace de fluide aval (741) qui collecte ou distribue le premier fluide qui s'écoule à travers les premiers tubes (16a) ; et une partie de connecteur (80) comprenant un orifice de connexion de tuyauterie unique (81) connecté à un premier tuyau de fluide à travers lequel le premier fluide s'écoule, un orifice (82) de connexion de partie d'échange thermique amont qui est connecté à la partie de réservoir amont (73) et communique avec le premier espace de fluide amont (733), et un orifice (83) de connexion de partie d'échange thermique aval qui est connecté à la partie de réservoir aval (74) et communique avec le premier espace de fluide aval (741).

20. Climatiseur de véhicule selon la revendication 19, dans lequel une distance (L1) entre l'orifice de connexion de la tuyauterie (81) et l'orifice (82) de connexion de la partie d'échange thermique amont est différente d'une distance (L2) entre l'orifice de connexion de la tuyauterie (81) et l'orifice (83) de connexion de la partie d'échange thermique aval dans la connexion.

21. Climatiseur de véhicule selon la revendication 19 ou 20, dans lequel une zone d'ouverture (S1) de l'orifice (82) de connexion de partie d'échange thermique amont est différente d'une zone d'ouverture (S2) de l'orifice (83) de connexion de partie d'échange thermique aval dans la partie de connexion (80).
